(19) Europäisches Patentamt
European Patent Office
Office européen des brevets

(11) **EP 4 601 289 A1**

(12) **EUROPEAN PATENT APPLICATION**
published in accordance with Art. 153(4) EPC

(43) Date of publication:
**13.08.2025 Bulletin 2025/33**

(21) Application number: **23875140.8**

(22) Date of filing: **25.09.2023**

(51) International Patent Classification (IPC):
***H04N 19/527*** (2014.01) ***H04N 19/513*** (2014.01)
***H04N 19/109*** (2014.01) ***H04N 19/105*** (2014.01)
***H04N 19/176*** (2014.01) ***H04N 19/85*** (2014.01)
***H04N 19/70*** (2014.01)

(52) Cooperative Patent Classification (CPC):
**H04N 19/105; H04N 19/109; H04N 19/176; H04N 19/513; H04N 19/527; H04N 19/70; H04N 19/85**

(86) International application number:
**PCT/KR2023/014642**

(87) International publication number:
**WO 2024/076074 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.10.2022 KR 20220128550**
**13.10.2022 KR 20220131729**

(71) Applicant: **LG Electronics Inc.**
**Yeongdeungpo-gu**
**Seoul 07336 (KR)**

(72) Inventor: **JANG, Hyeong Moon**
**Seoul 06772 (KR)**

(74) Representative: **Plasseraud IP**
**104 Rue de Richelieu**
**CS92104**
**75080 Paris Cedex 02 (FR)**

(54) **IMAGE ENCODING/DECODING METHOD, METHOD FOR TRANSMITTING BITSTREAM, AND RECORDING MEDIUM IN WHICH BITSTREAM IS STORED**

(57) An image encoding/decoding method, a bitstream transmission method, and a computer-readable recording medium for storing a bitstream are provided. The image decoding method according to the present disclosure is an image decoding method performed by an image decoding apparatus, and may comprise the steps of: constructing a merge candidate list on the basis that a prediction mode of a current block is a merge mode; constructing a merge mode with motion vector difference (MMVD) candidate list on the basis of a motion vector difference (MVD) available in an MMVD mode and a first merge candidate included in the merge candidate list; reordering the MMVD candidate list; and deriving motion information of the current block on the basis of the reordered MMVD candidate list.

FIG. 19

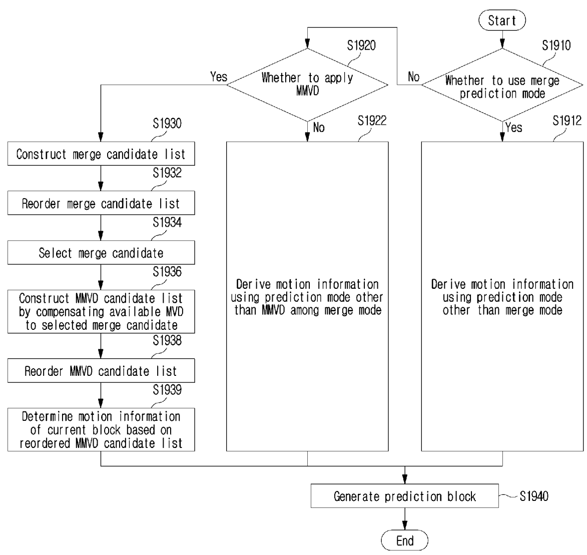


EP 4 601 289 A1

## Description

[Technical Field]

The present disclosure relates to a method for encoding/decoding an image, a method for transmitting a bitstream and a recording medium for storing a bitstream, and relates to a method for adaptively performing reordering of prediction candidates..

[Background Art]

Recently, the demand for high-resolution and high-quality images, such as High Definition (HD) images and Ultra High Definition (UHD) images, has been increasing in various fields. As image data becomes high-resolution and high-quality, the amount of transmitted information or bit rate increases relative to conventional image data. The increase in transmitted information or bit rate amount leads to an increase in transmission costs and storage costs.

Accordingly, a high-efficiency image compression technology is required to effectively transmit, store, and reproduce the information of high-resolution and high-quality images.

[Disclosure]

[Technical Problem]

The present disclosure is to provide an image encoding/decoding method and apparatus with improved encoding/decoding efficiency.

In addition, the present disclosure is to provide a method for constructing a prediction candidate by using a merge mode with MVD (MMVD).

In addition, the present disclosure is to provide a method for constructing a prediction candidate list by using a MMVD and ordering the order of prediction candidates in a corresponding list.

In addition, the present disclosure is to provide a method for deriving motion information of a current block by using a MMVD.

In addition, the present disclosure is to provide a non-transitory computer-readable recording medium for storing a bitstream generated by the image encoding method according to the present disclosure.

In addition, the present disclosure is to provide a non-transitory computer-readable recording medium for storing a bitstream which is received and decoded by the image decoding apparatus according to the present disclosure and used for image reconstruction.

In addition, the present disclosure is to provide a method for transmitting a bitstream which is generated by the image encoding method according to the present disclosure.

The technical problems to be achieved in the present disclosure are not limited to the technical problems described above, and other technical problems not described may be clearly understood by those of ordinary skill in the art from the following descriptions.

[Technical Solution]

An image decoding method according to an aspect of the present disclosure is an image decoding method performed by an image decoding apparatus, and may be an image decoding method including constructing a merge candidate list based on a prediction mode of a current block being a merge mode; constructing a merge mode with motion vector difference (MMVD) candidate list based on a motion vector difference (MVD) available in a MMVD mode and a first merge candidate included in the merge candidate list; reordering the MMVD candidate list; and deriving motion information of the current block based on the reordered MMVD candidate list.

An image encoding method according to another aspect of the present disclosure is an image encoding method performed by an image encoding apparatus, and may be an image encoding method including constructing a merge candidate list based on a prediction mode of a current block being a merge mode; constructing a merge mode with motion vector difference (MMVD) candidate list based on a motion vector difference (MVD) available in a MMVD mode and a first merge candidate included in the merge candidate list; reordering the MMVD candidate list; and deriving motion information of the current block based on the reordered MMVD candidate list.

A computer-readable recording medium according to another aspect of the present disclosure may store a bitstream generated by the image encoding method or device of the present disclosure.

A transmission method according to another aspect of the present disclosure may transmit a bitstream generated by the image encoding method or device of the present disclosure.

The features briefly summarized above for the present disclosure are merely an exemplary aspect of a detailed description of the present disclosure described below, and do not limit the scope of the present disclosure.

[Advantageous Effects]

According to the present disclosure, an image encoding/decoding method and apparatus with improved encoding/decoding efficiency may be provided.

In addition, according to the present disclosure, the accuracy of a MMVD may be improved by increasing candidates available as a prediction candidate.

In addition, according to the present disclosure, the bit efficiency may be improved by reducing the amount of bits required to represent the motion information of a current block.

In addition, according to the present disclosure, a non-transitory computer-readable recording medium for storing a bitstream generated by the image encoding method according to the present disclosure may be provided.

According to the present disclosure, a non-transitory computer-readable recording medium for storing a bitstream which is received and decoded by the image decoding apparatus according to the present disclosure and used for image reconstruction may be provided.

According to the present disclosure, a method of transmitting a bitstream generated by the image encoding method according to the present disclosure may be provided.

The effects obtainable from the present disclosure are not limited to the effects described above, and other effects not described may be clearly understood by those of ordinary skill in the art from the following descriptions.

[Description of Drawings]

FIG. 1 shows a schematic diagram of a video coding system to which an embodiment according to the present disclosure may be applied.
FIG. 2 shows a schematic diagram of an image encoding apparatus to which an embodiment according to the present disclosure may be applied.
FIG. 3 shows a schematic diagram of an image decoding apparatus to which an embodiment according to the present disclosure may be applied.
FIG. 4 is a diagram schematically representing an inter predictor of an image encoding apparatus.
FIG. 5 is a flowchart representing a method for encoding an image based on inter prediction.
FIG. 6 is a diagram schematically representing an inter predictor of an image decoding apparatus.
FIG. 7 is a flowchart representing a method for decoding an image based on inter prediction.
FIG. 8 is a flowchart representing an inter prediction method.
FIG. 9 is a diagram for describing a MMVD mode.
FIGS. 10 to 12 are a diagram for describing an affine mode.
FIG. 13 is a diagram for describing template matching.
FIG. 14 is a diagram for describing template matching-based reordering for an extended MMVD mode.
FIG. 15 is a flowchart representing an image encoding/decoding method according to an embodiment of the present disclosure.
FIG. 16 is a flowchart representing an image encoding/decoding method according to another embodiment of the present disclosure.
FIG. 17 and FIG. 18 are a diagram for specifically describing each process in FIG. 15 and FIG. 16.
FIG. 19 is a flowchart representing an image encoding/decoding method according to an embodiment of the present disclosure.
FIG. 20 is a flowchart representing an image encoding/decoding method according to another embodiment of the present disclosure.
FIG. 21 is a flowchart representing an image encoding/decoding method according to an embodiment of the present disclosure.
FIG. 22 is a flowchart representing an image encoding/decoding method according to another embodiment of the present disclosure.
FIG. 23 and FIG. 24 are a diagram for describing various examples of grouping prediction candidates.
FIG. 25 shows an exemplary diagram of a content streaming system to which an embodiment of the present disclosure may be applied.

[Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

In the present disclosure, "picture" generally refers to a unit representing a single image at a specific point in time. A slice/tile is an encoding unit that constitutes a part of a picture, and a picture may be composed of one or more slices/tiles. Additionally, a slice/tile may include one or more coding tree units (CTUs).

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In the present disclosure, "unit" may refer to a basic unit of image processing. A unit may include at least one of a specific area of a picture or information related to the area. Depending on the context, the term "unit" may be used interchangeably with "sample array," "block," "area," etc. In general, an M×N block may include a set (or array) of samples (or a sample array) or a set (or array) of transform coefficients, consisting of M columns and N rows.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In the present disclosure, unless explicitly stated as a chroma block, the term "current block" may refer to a block that includes both a luma component block and a chroma component block or may refer to "the luma block of the current block". The luma component block of the current block may be explicitly expressed with terms such as "luma block" or "current luma block", clearly indicating it as a luma component block. Additionally, the chroma component block of the current block may be explicitly expressed with terms such as "chroma block" or "current chroma block", clearly indicating it as a chroma component block.

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

## Overview of the video coding system

FIG. 1 shows a schematic diagram of a video coding system to which an embodiment according to the present disclosure may be applied.

A video coding system according to an embodiment may include an encoder apparatus 10 and a decoder apparatus 20. The encoder apparatus 10 may transmit encoded video and/or image information or data to the decoder apparatus 20 through a digital storage medium or network in the form of a file or streaming.

An encoder apparatus 10 according to an embodiment may include a video source generator 11, an encoder 12, and a transmitter 13. A decoder apparatus 20 according to an embodiment may include a receiver 21, a decoder 22, and a renderer 23. The encoder 12 may be referred to as a video/image encoder, and the decoder 22 may be referred to as a video/image decoder. The transmitter 13 may be included in the encoder 12. The receiver 21 may be included in the decoder 22. The renderer 23 may include a display, and the display may be configured as a separate device or external component.

The video source generator 11 may obtain a video/an image through a process of capturing, synthesizing, or generating a video/an image. The video source generator 11 may include a video/an image capture device and/or a video/an image generation device. The video/image capture device may include, for example, one or more cameras, a video/an image archive containing previously captured video/image, etc. The video/image generation device includes, for example, a computer, tablet, or smartphone, and may (electronically) generate a video/an image. For example, virtual video/image may be generated through a computer, etc., and in this case, the video/image capturing process may be replaced by the process of generating related data.

The encoder 12 may encode the input video/image. The encoder 12 may perform a series of procedures such as prediction, transform, quantization, etc. for compression and encoding efficiency. The encoder 12 may output the encoded data (encoded video/image information) in the form of a bitstream.

The transmitter 13 may obtain the encoded video/image information or data output in the form of a bitstream and transmit it to the receiver 21 of the decoder apparatus 20 or another external object through a digital storage medium or network, in the form of a file or streaming. The digital storage medium may include various storage media such as USB, SD, CD, DVD, Blu-ray, HDD, SSD, etc. The transmitter 13 may include an element for generating media files through a predetermined file format and element for transmission over broadcast/communication networks. The transmitter 13 may be provided as a separate transmission apparatus from the encoding apparatus 12, in which case the transmission apparatus may include at least one processor for obtaining the encoded video/image information or data in bitstream form and a transmitter for delivering it in the form of file or streaming. The receiver 21 may extract/receive the bitstream from the storage medium or network and transmit it to decoder 22.

The decoder 22 may decode the video/image by performing a series of procedures such as dequantization, inverse transform, prediction, etc. corresponding to the operations of the encoder 12.

The renderer 23 may render the decoded video/image. The rendered video/image may be displayed through the display unit.

## Overview of the image encoding apparatus

FIG. 2 shows a schematic diagram of an image encoding apparatus to which an embodiment according to the present disclosure may be applied.

As described in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185, and an entropy encoder 190. The inter predictor 180 and the intra predictor 185 may collectively be referred to as a "predictor." The transformer 120, the quantizer 130, the dequantizer 140, and the inverse transformer 150 may be included in a residual processor. The residual processor may further include the subtractor 115.

All or at least some of the multiple components constituting the image encoding apparatus 100 may be implemented as a single hardware component (i.e., an encoder or a processor), depending on the embodiment. Additionally, the memory 170 may include a decoded picture buffer (DPB) and may be implemented by a digital storage medium.

The image partitioner 110 may partition the input image (or picture, frame) input to the image encoding apparatus 100 into at least one processing unit. As an example, the processing unit may be referred to as a coding unit (CU). A coding unit may be obtained by recursively partitioning a coding tree unit (CTU) or a largest coding unit (LCU) according to a quad-tree, binary-tree, or ternary-tree (QT/BT/TT) structure. For example, a coding unit may be divided into a deeper-depth coding unit based on a quad-tree structure, a binary-tree structure, and/or a ternary-tree structure. For partitioning a coding unit, the quad-tree structure may be applied first, followed by the binary-tree structure and/or the ternary-tree structure. The coding procedure according to the present disclosure may be performed based on the final coding unit, which is not further partitioned. The largest coding unit may be used directly as the final coding unit, or a deeper-depth coding unit obtained by partitioning the largest coding unit may be used as the final coding unit. Here, the coding procedure may include a procedure such as prediction, transform, and/or reconstruction, which will be described later. As another example, the processing unit for the coding procedure may be a prediction unit (PU) or a transform unit (TU). The prediction unit and the transform unit may each be divided or partitioned from the final coding unit. The prediction unit may be a unit for sample prediction, and the transform unit may be a unit for deriving a transform coefficient and/or deriving a residual signal from a transform coefficient.

The predictor (inter predictor 180 or intra predictor 185) may perform prediction for a target block (current block) and generate a predicted block that includes prediction samples for the current block. The predictor may determine whether intra prediction or inter prediction is applied to the current block or coding unit (CU). The predictor may generate various information related to the prediction of the current block and transmit it to the entropy encoder 190. The prediction-related information may be encoded by the entropy encoder 190 and may be output in the form of a bitstream.

The intra predictor 185 may predict the current block by referring to samples within the current picture. The referenced samples may be located in the neighboring area of the current block or may be located farther away, depending on the intra prediction mode and/or intra prediction method. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes, depending on the granularity of the prediction direction. However, this is an example, and a greater or fewer number of directional prediction modes may be used depending on the configuration. The intra predictor 185 may also determine the prediction mode applied to the current block by using the prediction mode applied to neighboring block.

The inter predictor 180 may derive a predicted block for the current block based on a reference block (reference sample array) specified by a motion vector on a reference picture. To reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e. L0 prediction, L1 prediction, Bi prediction, etc.). In inter prediction, neighboring block may include spatial neighboring block present within the current picture and temporal neighboring block present in the reference picture. The reference picture containing the reference block and the reference picture containing the temporal neighboring block may be the same or different. The temporal neighboring block may be referred to as a collocated reference block or a collocated coding unit (colCU). The reference picture containing the temporal neighboring block may be referred to as a collocated picture (colPic). For example, the inter predictor 180 may construct a motion information candidate list based on neighboring blocks and generate information indicating which candidate is used to derive the motion vector and/or reference picture index of the current block. Inter prediction may be performed based on various prediction modes, and for example, in the skip mode and merge mode, the inter predictor 180 may use the motion information of neighboring block as the motion information of the current block. In skip mode, unlike merge mode, residual signal may not be transmitted. In the motion vector prediction (MVP) mode, the motion vector of a neighboring block may be used as a motion vector predictor, and the motion vector of the current block may be signaled by encoding the motion vector difference and an indicator for the motion vector predictor. The motion vector difference may refer to the difference between the motion vector of the current block and the motion vector predictor.

The predictor may generate a prediction signal based on various prediction methods and/or prediction techniques described later. For example, the predictor may apply intra prediction or inter prediction for the prediction of the current block, and it may also apply both intra prediction and inter prediction simultaneously. The prediction method that applies intra prediction and inter prediction simultaneously for the prediction of the current block may be referred to as combined inter and intra prediction (CIIP). Additionally, the predictor may perform intra block copy (IBC) for the prediction of the current block. Intra block copy may be used, for example, for screen content coding (SCC), etc. in applications such as game content image/video coding. IBC is a method of predicting the current block by using a pre-reconstructed reference block within the current picture, located at a predetermined distance from the current block. When IBC is applied, the position of the reference block within the current picture may be encoded as a vector (block vector) corresponding to the predetermined distance. IBC basically performs prediction within the current picture, but since it derives a reference block within the current picture, it may operate similarly to inter prediction. In other words, IBC may use at least one of the inter prediction methods described in the present disclosure.

The prediction signal generated by the predictor may be used to generate a reconstructed signal or to generate a residual signal. The subtractor 115 may generate a residual signal (residual block, residual sample array) by subtracting the prediction signal (predicted block, predicted sample array) output from the predictor from the input image signal (original block, original sample array). The generated residual signal may be transmitted to the transformer 120.

The transformer 120 may generate transform coefficients by applying a transform method to the residual signal. For example, the transform method may include at least one of Discrete Cosine Transform (DCT), Discrete Sine Transform (DST), Karhunen-Loeve Transform (KLT), Graph-Based Transform (GBT), or Conditionally Non-linear Transform (CNT).

Here, GBT refers to a transform obtained from a graph when the relationship information between pixels is represented as a graph. CNT refers to a transform obtained based on a prediction signal generated by using all previously reconstructed pixels. The transform process may be applied to a pixel block of the same square size or to a non-square variable-sized block.

The quantizer 130 may quantize the transform coefficients and transmit them to the entropy encoder 190. The entropy encoder 190 may encode the quantized signal (information on the quantized transform coefficients) and output it as a bitstream. The information on the quantized transform coefficients may be referred to as residual information. The quantizer 130 may rearrange the block-shaped quantized transform coefficients into a one-dimensional vector based on a coefficient scan order and may generate the information on the quantized transform coefficients based on the one-dimensional vector of quantized transform coefficients.

The entropy encoder 190 may perform various encoding methods, such as exponential Golomb, context-adaptive variable length coding (CAVLC), or context-adaptive binary arithmetic coding (CABAC). The entropy encoder 190 may encode not only the quantized transform coefficients but also information necessary for video/image reconstruction (i.e., values of syntax elements) either together or separately with the quantized transform coefficients. The encoded information (i.e., encoded video/image information) may be transmitted or stored in the form of a bitstream in network abstraction layer (NAL) unit. The video/image information may further include information on various parameter sets, such as an adaptation parameter set (APS), a picture parameter set (PPS), a sequence parameter set (SPS), or a video parameter set (VPS). Additionally, the video/image information may further include general constraint information. The signaling information, transmitted information, and/or syntax elements described in the present disclosure may be included in the bitstream by being encoded through the above-described encoding process.

The bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting the signal output from the entropy encoder 190 and/or a storage unit (not shown) for storing the signal may be provided as an internal/external element of the image encoding apparatus 100, or the transmitter may be configured as a component of the entropy encoder 190.

The quantized transform coefficients output from the quantizer 130 may be used to generate a residual signal. For example, a residual signal (residual block or residual samples) may be reconstructed by applying dequantization and inverse transform to the quantized transform coefficients through the dequantizer 140 and the inverse transformer 150.

The adder 155 may generate a reconstructed signal (reconstructed picture, reconstructed block, or reconstructed sample array) by adding the reconstructed residual signal to the prediction signal output from the inter predictor 180 or the intra predictor 185. When there is no residual for the target block, such as when the skip mode is applied, the predicted block may be used as the reconstructed block. The adder 155 may be referred to as a reconstructor or a reconstructed block generator. The generated reconstructed signal may be used for intra prediction of the next target block within the current picture and, as described later, may also be used for inter prediction of the next picture after undergoing filtering.

The filter 160 may apply filtering to the reconstructed signal to enhance subjective/objective quality. For example, the filter 160 may apply various filtering methods to the reconstructed picture to generate a modified reconstructed picture, and the modified reconstructed picture may be stored in the memory 170, specifically in the DPB of the memory 170. The various filtering methods may include, for example, deblocking filtering, sample adaptive offset, adaptive loop filter, bilateral filter, etc. The filter 160 may generate various filtering-related information, as described later in the explanations of each filtering method, and may transmit it to the entropy encoder 190. The filtering-related information may be encoded by the entropy encoder 190 and output in the form of a bitstream.

The modified reconstructed picture transmitted to the memory 170 may be used as a reference picture in the inter predictor 180. When inter prediction is applied in this case, the image encoding apparatus 100 may avoid prediction mismatches between the image encoding apparatus 100 and the image decoding apparatus, and may improve encoding efficiency.

The DPB in the memory 170 may store the modified reconstructed picture for use as a reference picture in the inter predictor 180. The memory 170 may store the motion information of a block in the current picture where motion information has been derived (or encoded) and/or the motion information of blocks in already reconstructed pictures. The stored motion information may be transmitted to the inter predictor 180 for use as motion information of spatial neighboring block or temporal neighboring block. The memory 170 may store the reconstructed samples of reconstructed blocks in the current picture and transmit them to the intra predictor 185.

## Overview of the image decoding apparatus

FIG. 3 shows a schematic diagram of an image decoding apparatus to which an embodiment according to the present disclosure may be applied.

As shown in FIG. 3, the image decoding apparatus 200 may include an entropy decoder 210, a dequantizer 220, an inverse transformer 230, an adder 235, a filter 240, a memory 250, an inter predictor 260, and an intra predictor 265. The inter predictor 260 and the intra predictor 265 may collectively be referred to as a "predictor". The dequantizer 220 and the inverse transformer 230 may be included in a residual processor.

All or at least some of the multiple components constituting the image decoding apparatus 200 may be implemented as a single hardware component (i.e., a decoder or a processor), depending on the embodiment. Additionally, the memory 170 may include a DPB and may be implemented by a digital storage medium.

The image decoding apparatus 200, which receives a bitstream containing video/image information, may perform a process corresponding to the process performed by the image encoding apparatus 100 in FIG. 2 to reconstruct the image. For example, the image decoding apparatus 200 may perform decoding using the processing unit applied in the image encoding apparatus. Therefore, the processing unit for decoding may be, for example, a coding unit. The coding unit may be a coding tree unit or may be obtained by splitting a largest coding unit. Additionally, the reconstructed image signal decoded and output through the image decoding apparatus 200 may be played back through a playback device (not shown).

The image decoding apparatus 200 may receive a signal output from the image encoding apparatus in FIG. 2 in the form of a bitstream. The received signal may be decoded through the entropy decoder 210. For example, the entropy decoder 210 may parse the bitstream to extract the information necessary for image reconstruction (or picture reconstruction) (i.e., video/image information). The video/image information may further include information on various parameter sets, such as an adaptation parameter set (APS), a picture parameter set (PPS), a sequence parameter set (SPS), or a video parameter set (VPS). Additionally, the video/image information may further include general constraint information. The image decoding apparatus may additionally use information on the parameter set and/or the general constraint information to decode the image. The signaling information, received information, and/or syntax elements described in the present disclosure may be obtained from the bitstream by being decoded through the decoding process. For example, the entropy decoder 210 may decode the information in the bitstream based on coding methods such as exponential Golomb encoding, CAVLC, or CABAC, and may output a syntax element value necessary for image reconstruction and quantized values of a transform coefficient related to a residual. More specifically, the CABAC entropy decoding method may receive a bin corresponding to a syntax element in the bitstream, may determine a context model using the information of the decoding target syntax element, the decoding information of neighboring block and the decoding target block, or information of previously decoded symbol/bin, may predict the probability of bin occurrence according to the determined context model, and may perform arithmetic decoding of the bin to generate a symbol corresponding to each syntax element. In this case, the CABAC entropy decoding method may update the context model for the next symbol/bin context model using the decoded symbol/bin information after determining the context model. Among the decoded information from the entropy decoder 210, the prediction-related information may be provided to the predictor (inter predictor 260 and intra predictor 265), and the residual value which is entropy decoded by the entropy decoder 210, in other words, the quantized transform coefficients and related parameter information, may be input to the dequantizer 220. Additionally, among the decoded information from the entropy decoder 210, filtering-related information may be provided to the filter 240. Meanwhile, a receiver (not shown) that receives the signal output from the image encoding apparatus may be additionally configured as an internal/external element of the image decoding apparatus 200, or the receiver may be configured as a component of the entropy decoder 210.

Meanwhile, the image decoding apparatus according to the present disclosure may also be referred to as a video/image/picture decoding apparatus. The image decoding apparatus may include an information decoder (video/image/picture information decoder) and/or a sample decoder (video/image/picture sample decoder). The information decoder may include the entropy decoder 210, and the sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients into a two-dimensional block. In this case, the rearrangement may be performed based on the coefficient scan order applied in the image encoding apparatus. The dequantizer 220 may perform dequantization on the quantized transform coefficients using quantization parameter (i.e., quantization step size information) and may obtain transform coefficients.

The inverse transformer 230 may perform an inverse transform on the transform coefficients to obtain a residual signal (residual block, or residual sample array).

The predictor may perform prediction for the current block and generate a predicted block that includes prediction samples for the current block. The predictor may determine whether intra prediction or inter prediction is applied to the current block based on the prediction-related information output from the entropy decoder 210 and may determine a specific intra/inter prediction mode (prediction method).

That the predictor may generate a prediction signal based on various prediction methods (techniques) which will be described later is the same as described in the explanation of the predictor in the image encoding apparatus 100.

The intra predictor 265 may predict the current block by referring to samples within the current picture. The explanation of the intra predictor 185 may also be applied in the same way to the intra predictor 265.

The inter predictor 260 may derive a predicted block for the current block based on a reference block (reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, the inter predictor 260 may construct a motion information candidate list based on neighboring blocks and derive the motion vector and/or reference picture index of the current block based on the received candidate selection information. Inter prediction may be performed based on various prediction modes (methods), and the prediction-related information may include information indicating the inter prediction mode (method) applied to the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). When there is no residual for the target block, such as when the skip mode is applied, the predicted block may be used as the reconstructed block. The explanation of the adder 155 may also be applied in the same way to the adder 235. The adder 235 may be referred to as a reconstructor or a reconstructed block generator. The generated reconstructed signal may be used for intra prediction of the next target block within the current picture and as described later, may also be used for inter prediction of the next picture after undergoing filtering.

The filter 240 may apply filtering to the reconstructed signal to enhance subjective/objective quality. For example, the filter 240 may apply various filtering methods to the reconstructed picture to generate a modified reconstructed picture, and the modified reconstructed picture may be stored in the memory 250, specifically in the DPB of the memory 250. The various filtering methods may include, for example, deblocking filtering, sample adaptive offset, adaptive loop filter, bilateral filter, etc.

The (modified) reconstructed picture stored in the DPB of the memory 250 may be used as a reference picture in the inter predictor 260. The memory 250 may store the motion information of a block in the current picture where motion information has been derived (or decoded) and/or the motion information of blocks in already reconstructed picture. The stored motion information may be transmitted to the inter predictor 260 to be used as motion information of a spatial neighboring block or a temporal neighboring block. The memory 250 may store the reconstructed samples of reconstructed blocks in the current picture and transmit them to the intra predictor 265.

In this specification, the embodiments described for the filter 160, the inter predictor 180, and the intra predictor 185 of the image encoding apparatus 100 may be applied in the same or corresponding manner to the filter 240, the inter predictor 260, and the intra predictor 265 of the image decoding apparatus 200.

## Inter Prediction

The predictor of an image encoding apparatus 100 and an image decoding apparatus 200 may perform inter prediction in a block unit to derive a prediction sample. Inter prediction may be prediction derived in a manner dependent on data elements (e.g., sample values, or motion information, etc.) of picture(s) other than a current picture. When inter prediction is applied to a current block, a predicted block (a prediction sample array) for a current block may be derived based on a reference block (a reference sample array) specified by a motion vector on a reference picture indicated by a reference picture index. In this case, in order to reduce the amount of motion information transmitted in an inter prediction mode, the motion information of a current block may be predicted in a block, sub-block or sample unit based on the correlation of motion information between a neighboring block and a current block. The motion information may include a motion vector and a reference picture index. The motion information may further include information on an inter prediction type (L0 prediction, L1 prediction, Bi prediction, etc.). When inter prediction is applied, a neighboring block may include a spatial neighboring block existing in a current picture and a temporal neighboring block existing in a reference picture. A reference picture including the reference block and a reference picture including the temporal neighboring block may be the same or different. The temporal neighboring block may be called a collocated reference block, a collocated CU (colCU), etc., and a reference picture including the temporal neighboring block may be called a collocated picture (colPic). For example, a motion information candidate list may be constructed based on neighboring blocks of a current block, and flag or index information indicating which candidate is selected (used) to derive the motion vector and/or reference picture index of the current block may be signaled. Inter prediction may be performed based on various prediction modes, and for example, in case of a skip mode and a merge mode, the motion information of a current block may be the same as the motion information of a selected neighboring block. For a skip mode, unlike a merge mode, a residual signal may not be transmitted. For a motion vector prediction (MVP) mode, the motion vector of a selected neighboring block may be used as a motion vector predictor, and a motion vector difference may be signaled. In this case, the motion vector of the current block may be derived by using the sum of the motion vector predictor and the motion vector difference.

The motion information may include L0 motion information and/or L1 motion information according to an inter prediction type (L0 prediction, L1 prediction, Bi prediction, etc.). A motion vector in a L0 direction may be called a L0 motion vector or MVL0, and a motion vector in a L1 direction may be called a L1 motion vector or MVL1. Prediction based on a L0 motion vector may be called L0 prediction, prediction based on a L1 motion vector may be called L1 prediction and prediction based on both the L0 motion vector and the L1 motion vector may be called bi-prediction. Here, a L0 motion vector may represent a motion vector associated with reference picture list L0 (L0), and a L1 motion vector may represent a motion vector associated with reference picture list L1 (L1). Reference picture list L0 may include pictures before the current picture in output order as reference pictures, and reference picture list L1 may include pictures after the current picture in output order. The previous pictures may be called a forward (reference) picture, and the subsequent pictures may be called a backward (reference) picture. The reference picture list L0 may further include pictures after the current picture in output order as reference pictures. In this case, the previous pictures may be indexed first and the subsequent pictures may be indexed next within the reference picture list L0. The reference picture list L1 may further include pictures before the current picture in output order as reference pictures. In this case, the subsequent pictures may be indexed first and the previous pictures may be indexed next within the reference picture list 1. Here, output order may correspond to picture order count (POC) order.

FIG. 4 is a diagram schematically representing an inter predictor 180 of an image encoding apparatus 100, and FIG. 5 is a flowchart representing a method for encoding an image based on inter prediction.

An image encoding apparatus 100 may perform inter prediction on a current block S510. An image encoding apparatus 100 may derive the inter prediction mode and motion information of a current block and generate prediction samples of the current block. Here, procedures of determining an inter prediction mode, deriving motion information and generating prediction samples may be performed simultaneously or any one procedure may be performed before other procedures. For example, the inter predictor 180 of an image encoding apparatus 100 may include a prediction mode determiner 181, a motion information deriver 182 and a prediction sample deriver 183, and may determine a prediction mode for the current block in a prediction mode determiner 181, derive motion information of the current block in a motion information deriver 182 and derive prediction samples of the current block in a prediction sample deriver 183. For example, the inter predictor 180 of an image encoding apparatus 100 may search for a block similar to the current block within a certain region (a search range) of reference pictures through motion estimation and derive a reference block whose difference from the current block is minimal or less than or equal to a certain standard. Based thereon, a reference picture index indicating a reference picture where the reference block is positioned may be derived, and a motion vector may be derived based on a positional difference between the reference block and the current block. An image encoding apparatus 100 may determine a mode applied to the current block among various prediction modes. An image encoding apparatus 100 may compare a RD cost for the various prediction modes and determine an optimal prediction mode for the current block.

For example, when a skip mode or a merge mode is applied to the current block, an image encoding apparatus 100 may construct a merge candidate list described below and derive a reference block whose difference from the current block is minimal or less than or equal to a certain standard among the reference blocks indicated by merge candidates included in the merge candidate list. In this case, a merge candidate associated with the derived reference block may be selected, and merge index information indicating the selected merge candidate may be generated and signaled to a decoding device. The motion information of the current block may be derived by using the motion information of the selected merge candidate.

As another example, when an (A)MVP mode is applied to the current block, an image encoding apparatus 100 may construct an (A)MVP candidate list described below and use the motion vector of a motion vector predictor (mvp) candidate selected among the mvp candidates included in the (A)MVP candidate list as the mvp of the current block. In this case, for example, a motion vector indicating a reference block derived by motion estimation described above may be used as the motion vector of the current block, and a mvp candidate having a motion vector with the smallest difference from the motion vector of the current block among the mvp candidates may become the selected mvp candidate. A motion vector difference (MVD) which is a difference obtained by subtracting the mvp from the motion vector of the current block may be derived. In this case, information about the MVD may be signaled to an image decoding apparatus 200. In addition, when an (A)MVP mode is applied, the value of the reference picture index may be constructed as reference picture index information and signaled separately to the image decoding apparatus 200.

An image encoding apparatus 100 may derive residual samples based on the prediction samples S520. An image encoding apparatus 100 may derive the residual samples by comparing the original samples of the current block with the prediction samples.

An image encoding apparatus 100 may encode image information including prediction information and residual information S530. An image encoding apparatus 100 may output encoded image information in the form of a bitstream. The prediction information is information related to the prediction procedure, and may include information about prediction mode information (e.g., a skip flag, a merge flag or a mode index, etc.) and motion information. The information about motion information may include candidate selection information (e.g., a merge index, a mvp flag or a mvp index) which is information for deriving a motion vector. In addition, the information about motion information may include information about the above-described MVD and/or reference picture index information. In addition, the information about motion information may include information representing whether L0 prediction, L1 prediction or bi-prediction is applied. The residual information is information about the residual samples. The residual information may include information about quantized transform coefficients for the residual samples.

An output bitstream may be stored in a (digital) storage medium and transmitted to a decoding device or may be transmitted to an image decoding apparatus 200 through a network.

Meanwhile, as described above, an image encoding apparatus 100 may generate a reconstructed picture (including reconstructed samples and reconstructed blocks) based on the reference samples and the residual samples. This is to derive the same prediction result as that performed by an image decoding apparatus 200 from an image encoding apparatus 100, which may improve coding efficiency. Accordingly, an image encoding apparatus 100 may store a reconstructed picture (or reconstructed samples, reconstructed blocks) in a memory and utilize it as a reference picture for inter prediction. As described above, an in-loop filtering procedure, etc. may be further applied to the reconstructed picture.

FIG. 6 is diagram schematically representing an inter predictor 260 of an image decoding apparatus 200, and FIG. 7 is a flowchart representing a method for decoding an image based on inter prediction.

An image decoding apparatus 200 may perform an operation corresponding to an operation performed in the image encoding apparatus 100. An image decoding apparatus 200 may perform prediction on a current block based on received prediction information and derive prediction samples.

Specifically, an image decoding apparatus 200 may determine a prediction mode for the current block based on received prediction information S710. An image decoding apparatus 200 may determine which inter prediction mode is applied to the current block based on prediction mode information within the prediction information.

For example, whether the merge mode or the (A)MVP mode is applied to the current block may be determined based on the merge flag. Alternatively, one of various inter prediction mode candidates may be selected based on the mode index. The inter prediction mode candidates may include a skip mode, a merge mode and/or an (A)MVP mode or may include various inter prediction modes described below.

An image decoding apparatus 200 may derive motion information of the current block based on the determined inter prediction mode S720. For example, when a skip mode or a merge mode is applied to the current block, an image decoding apparatus 200 may construct a merge candidate list described below and select one of the merge candidates included in the merge candidate list. The selection may be performed based on the above-described selection information (merge index). The motion information of the current block may be derived by using the motion information of the selected merge candidate. The motion information of the selected merge candidate may be used as the motion information of the current block.

As another example, when an (A)MVP mode is applied to the current block, an image decoding apparatus 200 may construct an (A)MVP candidate list described below and use the motion vector of a mvp candidate selected among the motion vector predictor (mvp) candidates included in the (A)MVP candidate list as the mvp of the current block. The selection may be performed based on the above-described selection information (a mvp flag or a mvp index). In this case, the MVD of the current block may be derived based on information about the MVD, and the motion vector of the current block may be derived based on the mvp of the current block and the MVD. In addition, the reference picture index of the current block may be derived based on the reference picture index information. A picture indicated by the reference picture index in a reference picture list for the current block may be derived as a reference picture referred to for inter prediction of the current block.

Meanwhile, as described below, motion information of the current block may be derived without constructing a candidate list, and in this case, motion information of the current block may be derived according to a procedure initiated in a prediction mode described below. In this case, candidate list construction as described above may be omitted.

An image decoding apparatus 200 may generate prediction samples for the current block based on the motion information of the current block S730. In this case, the reference picture may be derived based on the reference picture index of the current block, and prediction samples of the current block may be derived by using samples of a reference block indicated by the motion vector of the current block on the reference picture. In this case, as described below, a prediction sample filtering procedure for all or part of prediction samples of the current block may be further performed in some cases.

For example, the inter predictor 260 of an image decoding apparatus 200 may include a prediction mode determiner 261, a motion information deriver 262 and a prediction sample deriver 263, and may determine a prediction mode for the current block based on prediction mode information received in a prediction mode determiner 181, derive motion information (a motion vector and/or a reference picture index, etc.) of the current block based on information about motion information received in a motion information deriver 182 and derive prediction samples of the current block in a prediction sample deriver 183.

An image decoding apparatus 200 may generate residual samples for the current block based on received residual information S740. An image decoding apparatus 200 may generate reconstructed samples for the current block based on the prediction samples and the residual samples and generate a reconstructed picture based on this S750. Hereinafter, as described above, an in-loop filtering procedure, etc. may be further applied to the reconstructed picture.

Referring to FIG. 8, as described above, an inter prediction procedure may include an inter prediction mode determination step S810, a motion information derivation step S820 according to a determined prediction mode and a prediction performance (prediction sample generation) step S830 based on derived motion information. The inter prediction procedure may be performed in an image encoding apparatus 100 and an image decoding apparatus 200 as described above.

## Determine an inter prediction mode

A variety of inter prediction modes may be used for prediction of a current block in a picture. For example, various modes such as a merge mode, a skip mode, a motion vector prediction (MVP) mode, an affine mode, a sub-block merge mode, a merge with MVD (MMVD) mode, etc. may be used. A decoder side motion vector refinement (DMVR) mode, an adaptive motion vector resolution (AMVR) mode, a bi-prediction with CU-level weight (BCW), a bi-directional optical flow (BDOF), etc. may be used as an additional or alternative mode. An affine mode may also be called an affine motion prediction mode. A MVP mode may also be called an advanced motion vector prediction (AMVP) mode. In this document, some modes and/or a motion information candidate derived by some modes may be included as one of the motion information-related candidates of other modes. For example, a HMVP candidate may be added as the merge candidate of the merge/skip mode or may be added as the mvp candidate of the MVP mode.

Prediction mode information indicating the inter prediction mode of a current block may be signaled from an image encoding apparatus 100 to an image decoding apparatus 200. The prediction mode information may be included in a bitstream and received by an image decoding apparatus 200. The prediction mode information may include index information indicating one of multiple candidate modes. Alternatively, an inter prediction mode may be indicated through hierarchical signaling of flag information. In this case, the prediction mode information may include at least one flag. For example, whether to apply a skip mode may be indicated by signaling a skip flag, and when a skip mode is not applied, whether to apply a merge mode may be indicated by signaling a merge flag, and when a merge mode is not applied, a MVP mode may be indicated to be applied or a flag for additional distinction may be further signaled. An affine mode may be signaled as an independent mode or may be signaled as a dependent mode such as a merge mode or a MVP mode, etc. For example, an affine mode may include an affine merge mode and an affine MVP mode.

## Derive motion information

Inter prediction may be performed by using motion information of a current block. An image encoding apparatus 100 may derive optimal motion information for a current block through a motion estimation procedure. For example, an image encoding apparatus 100 may search for a similar reference block with high correlation in a fractional pixel unit within a determined search range within a reference picture by using an original block within an original picture for a current block and derive motion information through this. The similarity of blocks may be derived based on a difference in phase-based sample values. For example, the similarity of blocks may be calculated based on a SAD between a current block (or the template of a current block) and a reference block (or the template of a reference block). In this case, motion information may be derived based on a reference block with the smallest SAD within a search range. Derived motion information may be signaled to an image decoding apparatus 200 according to various methods based on an inter prediction mode.

## Generate a prediction sample

Based on motion information derived according to a prediction mode, a predicted block for a current block may be derived. The predicted block may include prediction samples (prediction sample array) of the current block. When the motion vector of a current block indicates a fractional sample unit, an interpolation procedure may be performed, through which prediction samples of the current block may be derived based on reference samples of a fractional sample unit within a reference picture. When affine inter prediction is applied to a current block, prediction samples may be generated based on a MV in a sample/sub-block unit. When bi-prediction is applied, prediction samples derived through the weighted sum or weighted average (according to a phase) of prediction samples derived based on L0 prediction (i.e., prediction using a reference picture in reference picture list L0 and MVL0) and prediction samples derived based on L1 prediction (i.e., prediction using a reference picture in reference picture list L1 and MVL1) may be used as prediction samples of a current block. When bi-prediction is applied, if a reference picture used for L0 prediction and a reference picture used for L1 prediction are located in a different temporal direction based on a current picture (i.e., if it corresponds to bi-prediction and bidirectional prediction), it may be called true bi-prediction.

As described above, reconstructed samples and reconstructed pictures may be generated based on derived prediction samples, and then a procedure such as in-loop filtering, etc. may be performed.

**MMVD (merge mode with motion vector difference)**

In addition to a merge mode where implicitly derived motion information is directly used to generate the prediction sample of a current block, a MMVD mode was proposed. Since a similar motion information derivation method is used in a skip mode and a merge mode, a MMVD mode may also be applied to a skip mode. A mmvd flag (e.g., mmvd_flag) representing whether a MMVD mode is applied to a current block may be signaled immediately after a skip flag and a merge flag are transmitted.

In a MMVD mode, after a merge candidate is selected, this selected merge candidate may be refined by signaled MVDs information. When a MMVD mode is applied to a current block (i.e., when the value of mmvd_flag is equal to 1), additional information for a MMVD mode may be signaled. Additional information may include a merge candidate flag (e.g., mmvd_merge_flag) representing whether a first (0) or second (1) merge candidate in a merge candidate list is used with MVD, an index representing a motion magnitude (e.g., mmvd_distance_idx) and an index representing a motion direction (e.g., mmvd_direction_idx). In a MMVD mode, any one of the first two candidates in a merge candidate list may be selected and used as a base MV (MV basis). A merge candidate flag may be signaled to represent which of the first two candidates will be used.

A distance index (e.g., mmvd_distance_idx) represents motion magnitude information, and may represent a predetermined offset from a starting point. As shown in FIG. 9, an offset may be added to the horizontal component or vertical component of a starting MV (a starting point). A relationship between a distance index and a predetermined offset may be shown as in Table 1.

[Table 1]

| mmvd_distance_idx[x0][y0] | MmvdDistance[x0][y0] | |
|---|---|---|
| | slice_fpel_nmwd_enabled_flag == 0 | slice_fpel_mmvd_enabled_flag == 1 |
| 0 | 1 | 4 |
| 1 | 2 | 8 |
| 2 | 4 | 16 |
| 3 | 8 | 32 |
| 4 | 16 | 64 |
| 5 | 32 | 128 |
| 6 | 64 | 256 |
| 7 | 128 | 512 |

In Table 1, 1, the value of slice_fpel_mmvd_enabled_flag, may represent that a MMVD mode uses integer sample accuracy in a current slice. 0, the value of slice_fpel_mmvd_enabled_flag, may represent that a MMVD mode uses fractional sample accuracy in a current slice. When slice_fpel_mmvd_enabled_flag does not exist, the value of slice_fpel_mmvd_enabled_flag may be inferred as 0. A slice_fpel_mmvd_enabled_flag syntax element may be signaled through a slice header (or by being included in a slice header).

A direction index (e.g., mmvd_direction_idx) may represent a MVD direction based on a starting point. A direction index may represent four directions as expressed in Table 2.

[Table 2]

| mmvd_direction_idx[x0][y0] | MmvdSign[x0][y0][0] | MmvdSign[x0][y0][1] |
|---|---|---|
| 0 | +1 | 0 |
| 1 | -1 | 0 |
| 2 | 0 | +1 |
| 3 | 0 | -1 |

In Table 2, the meaning of a MVD sign (MmvdSign) may vary depending on the information of starting MVs. When starting MVs are a uni-prediction MV or a bi-prediction MV where two prediction lists indicate the same direction of a current picture (i.e., when the POC of reference pictures is larger than the POC of a current picture or the POC of reference pictures is smaller than the POC of a current picture), a MVD sign in Table 2 may represent the sign of a MV offset added to a starting MV. When starting MVs are a bi-prediction MV where two prediction lists indicate the different direction of a current picture (i.e., when the POC of any reference picture is larger than the POC of a current picture and the POC of another reference picture is smaller than the POC of a current picture), a MVD sign in Table 2 may represent the sign of a MV offset added to the list 0 MV component of a starting MV and a MVD sign for a list 1 MV may have an opposite sign.

Two components of MmvdOffset[x0] [y0] may be derived as in Equation 1.

【Equation 1】

$$MmvdOffset[x0][y0][0] = (MmvdDistance[x0][y0] \ll 2) * MmvdSign[x0][y0][0]$$

$$MmvdOffset[x0][y0][1] = (MmvdDistance[x0][y0] \ll 2) * MmvdSign[x0][y0][1]$$

**Affine Prediction**

The existing video coding system uses only one MV to express the motion of an encoding block (using a translation MV). However, although the method could express an optimal motion in a block unit, this is actually not the optimal motion of each pixel, so when an optimal MV may be determined in a pixel unit, encoding efficiency may be increased. To this end, this embodiment describes an affine motion prediction method that performs encoding by using an affine motion model. An affine motion prediction method may express a MV in each pixel unit of a block by using two, three or four MVs.

An affine motion model may express four motions as in FIG. 10. Among the motions that may be expressed by an affine motion model, an affine motion model that expresses three motions (translation, scale, rotate) is called a similarity (or simplified) affine motion model, and herein, proposed methods are described based on a similarity (or simplified) affine motion model. However, proposed methods are not limited to a corresponding affine motion model.

As in FIG. 11, an affine motion model may determine a MV at a pixel position included by a block by using at least two control point MVs (CPMVs). In this case, the set of MVs is called an affine motion vector field (MVF), and a MVF may be determined by Equations 2 and 3 below.

For a 4-parameter affine motion model, a MV at a sample position (x, y) within a block may be derived by Equation 2.

【Equation 2】

$$\begin{cases} mv_x = \dfrac{mv_{1x} - mv_{0x}}{W}x + \dfrac{mv_{1y} - mv_{0y}}{W}y + mv_{0x} \\ mv_y = \dfrac{mv_{1y} - mv_{0y}}{W}x + \dfrac{mv_{1x} - mv_{0x}}{W}y + mv_{0y} \end{cases}$$

For a 6-parameter affine motion model, a MV at a sample position (x, y) within a block may be derived by Equation 3.

【Equation 3】

$$\begin{cases} mv_x = \dfrac{mv_{1x} - mv_{0x}}{W}x + \dfrac{mv_{2x} - mv_{0x}}{H}y + mv_{0x} \\ mv_y = \dfrac{mv_{1y} - mv_{0y}}{W}x + \dfrac{mv_{2y} - mv_{0y}}{H}y + mv_{0y} \end{cases}$$

In FIG. 11 and Equations 2 and 3, $\vec{v_0} = \{v_{0x}, v_{0y}\}$ may be the CPMV of a CP at the top-left corner position of an encoding block, $\vec{v_1} = \{v_{1x}, v_{1y}\}$ may be the CPMV of a CP at the top-right corner position and $\vec{v_2} = \{v_{2x}, v_{2y}\}$ may be the CPMV of a CP at the bottom-left corner position. And, W may correspond to the width of a current block, H may correspond to the height of a current block, and $\vec{v} = \{v_x, v_y\}$ may correspond to a MV at a {x, y} position.

In an encoding/decoding process, an affine MVF may be determined in a pixel unit or in a pre-defined sub-block unit. When it is determined in a pixel unit, a MV may be obtained based on each pixel value, and for a sub-block unit, the MV of a corresponding block may be obtained based on a pixel value at the center (the bottom-right of the center, i.e., a bottom-right sample among the center four samples) of a sub-block. In this application, as expressed in FIG. 12, it is described by assuming that an affine MVF is determined in a 4x4 sub-block unit. However, this is only for the convenience of a description, so the size of a sub-block where an affine MVF is determined may be modified in various ways.

When affine prediction is available, a motion model that may be applied to a current block may include the following three. A translational motion model, a 4-parameter affine motion model and a 6-parameter affine motion model. Here, a translational motion model may represent a model where an existing block unit motion vector is used, a 4-parameter affine motion model may represent a model where two CPMVs are used and a 6-parameter affine motion model may represent a model where three CPMVs are used.

Affine motion prediction may include an affine MVP (or affine inter) mode and an affine merge mode. In affine motion prediction, MVs of a current block may be derived in a sub-block unit or a sample unit.

## Template matching (TM)

Template Matching (TM) is a method for deriving a motion vector performed on a decoder side, which is a method in which the motion information of a current block may be refined by finding a template (hereinafter referred to as a "reference template") in a reference picture that is most similar to a template (hereinafter referred to as a "current template") adjacent to a current block (e.g., a current coding unit, a current CU). A current template may be the top neighbor block and/or left neighbor block of a current block or a part of these neighbor blocks. In addition, a reference template may be determined to have the same size as a current template.

As shown in FIG. 13, when the initial motion vector of a current block is derived, a search for a better motion vector may be performed in the neighboring region of an initial motion vector. For example, the range of a neighboring region where the search is performed may be within a [-8, +8]-pel search range based on an initial motion vector. In addition, the size of a search step for performing a search may be determined based on the AMVR mode of a current block. In addition, template matching may also be performed continuously with a bilateral matching process in a merge mode.

In an AMVP mode, a MVP candidate is determined based on a template matching error to select a candidate that reaches the minimum difference between a current block template and a reference block template, and template matching is performed for MV refinement only for this specific MVP candidate. Template matching uses an iterative diamond search to refine this MVP candidate starting from full-pel MVD precision (or, 4-pel for a 4-pel AMVR mode) within a [-8, +8]-pel search range. An AMVP candidate may be additionally refined by using a cross search with full-pel MVD precision (or, 4-pel for a 4-pel AMVR mode) and sequentially using half-pel and quarter-pel according to an AMVR mode as shown in Table 3. This search process ensures that a MVP candidate maintains the same MV precision as indicated in an AMVR mode even after a template matching process. In a search process, a search process is terminated when a difference between a previous minimum cost and a current minimum cost is less than the same threshold value as the area of a block.

[Table 3]

| Search pattern | AMVR mode | | | | Merge mode | |
|---|---|---|---|---|---|---|
| | 4-pel | Full-pel | Half-pel | Quarter-pel | AltIF=0 | AltIF=1 |
| 4-pel diamond | v | | | | | |
| 4-pel cross | v | | | | | |
| Full-pel diamond | | v | v | v | v | v |
| Full-pel cross | | v | v | v | v | v |
| Half-pel cross | | | v | v | v | v |
| Quarter-pel cross | | | | v | v | |
| 1/8-pel cross | | | | | v | |

In a merge mode, a similar search method is also applied to a merge candidate shown by a merge index. As shown in Table 3, template matching may perform up to 1/8-pel MVD precision or skip precision exceeding half-pel MVD precision according to whether an alternative interpolation filter according to merged motion information (used when AMVR is in a half-pel mode) is used. In addition, when a template matching mode is enabled, template matching may operate as an independent process or an additional MV refinement process between block-based and sub-block-based bilateral matching (BM) methods, depending on whether it is enabled by checking a condition for enabling bilateral matching (BM).

## Template matching-based Reordering for Extended MMVD

As expressed in FIG. 14, the number of MMVD directions is increased from 4 to 16 by adding an additional refinement position according to a kXð/8 diagonal angle to the position of the existing MMVD. Based on a SAD cost between a reference template and a template (one on the top of a current block and the other on the left of a current block) for each refinement position, all 64 (16*4) MMVD refinement positions (i.e., MMVD prediction candidates) may be reordered for each base candidate. The top 1/8 MMVD prediction candidates with the smallest template SAD cost may be maintained as an available candidate for MMVD index coding. A MMVD index may be binarized with a rice code whose parameter is 2. Extended affine MMVD reordering is added in which an additional refinement position is added according to a kXð/4 diagonal angle. After affine MMVD prediction candidates are reordered, the top 1/2 affine MMVD prediction candidates with the smallest template SAD cost may be maintained.

## Embodiment

Hereinafter, specific examples of the present invention will be described through various embodiments. The present invention relates to a method for deriving motion information of a current block and generating a prediction block in an inter prediction process. In addition, the present invention relates to a method for constructing a prediction candidate list when constructing a prediction candidate and generating a prediction block by using a MMVD or an affine MMVD and a method for arranging the order (reordering) of prediction candidates in a prediction candidate list. Through these methods, the present invention may provide an effect such as improving bit efficiency, improving prediction performance, improving compression efficiency, etc.

In the present disclosure, template matching may be a process of searching for a reference template with the highest similarity to a current template. According to the present disclosure, a template matching cost (TM cost) may be calculated to measure the similarity, and a cost function such as SAD may be used for this. A high template matching cost may refer to a big template matching error and thus a low similarity between templates. Conversely, when a low template matching cost may refer to a small template matching error and thus a high similarity between templates.

In the present disclosure, a cost function for calculating a template matching cost may be a function that uses a difference between a sample value in a current template and a corresponding sample value in a reference template. Accordingly, the cost function may be referred to as "difference(error)-based function" or "difference(error)-based equation" between corresponding samples in two templates. In addition, a template matching cost calculated by the cost function may be referred to as "difference(error)-based function value" or "difference(error)-based value" between corresponding samples in two templates.

In the present disclosure, "cost" may be referred to as "error", "error", etc. Accordingly, "cost function" may also be referred to as "error function", "error function", etc. Since a cost may be derived based on a difference between a current template and a reference template, it may correspond to an error value for a current block.

In the present disclosure, "merge candidate" may refer to a merge candidate that may be used in a general merge mode or an affine merge candidate that may be used in an affine merge mode. "merge candidate" may be referred to as "prediction candidate." "merge candidate list" may refer to a merge candidate list that may be used in a general merge mode or an affine merge candidate list that may be used in an affine merge mode. "MMVD" or "MMVD mode" may refer to "affine MMVD" or "affine MMVD mode." "MMVD candidate" may refer to "affine MMVD candidate", and "MMVD candidate list" may refer to "affine MMVD candidate list".

## Embodiment 1

Embodiment 1 relates to a method for deriving motion information and generating a prediction block by utilizing a MMVD or an affine MMVD.

FIG. 15 is a flowchart representing an image encoding/decoding method using a MMVD, and FIG. 16 is a flowchart representing an image encoding/decoding method using an affine MMVD. Processes in FIG. 15 and FIG. 16 may be performed by an image encoding apparatus 100 and/or an image decoding apparatus 200.

Referring to FIG. 15, in a process of generating a prediction block by using inter prediction, whether the prediction mode of a current block is a merge (prediction) mode may be determined S1510. When the prediction mode of a current block is not a merge mode, motion information may be derived by using a prediction mode other than a merge mode S1512, and when the prediction mode of a current block is a merge mode, whether the prediction mode of a current block is a sub-block-based (merge) prediction mode may be determined S1520. When the prediction mode of a current block is a sub-block-based prediction mode, motion information may be derived in a sub-block-based prediction mode S1522, and when the prediction mode of a current block is not a sub-block-based prediction mode, whether a MMVD mode is applied may be determined S1530. When a MMVD mode is not applied, motion information may be derived by using a prediction mode other than a MMVD mode among the merge modes S1532, and when a MMVD mode is applied, motion information may be derived in a MMVD mode S1540 to S1548. When motion information is derived through each process, the prediction block of a current block may be generated by using derived motion information S1550.

The process of deriving motion information in a MMVD mode may be largely composed of five processes. For example, the process of deriving motion information in a MMVD mode may include the process of constructing a merge candidate list S1540, the process of selecting a merge candidate from a merge candidate list S1542, the process of constructing a MMVD candidate list by compensating the available MVD of a MMVD to a selected merge candidate S1544, the process of reordering a MMVD candidate list S1546 and the process of determining motion information of a current block based on a reordered MMVD candidate list S1548.

Meanwhile, referring to FIG. 16, in the process of generating a prediction block by using inter prediction, whether the prediction mode of a current block is a merge (prediction) mode may be determined S1610. When the prediction mode of a current block is not a merge mode, motion information may be derived by using a prediction mode other than a merge mode S1612, and when the prediction mode of a current block is a merge mode, whether the prediction mode of a current block is a sub-block-based (merge) prediction mode may be determined S1620. When the prediction mode of a current block is not a sub-block-based prediction mode, motion information may be derived in a general merge mode other than a sub-block-based prediction mode S1622, and when the prediction mode of a current block is a sub-block-based prediction mode, whether an affine MMVD mode is applied may be determined S1630. When an affine MMVD mode is not applied, motion information may be derived by using a prediction mode other than an affine MMVD mode among the sub-block-based prediction modes S1632, and when an affine MMVD mode is applied, motion information may be derived in an affine MMVD mode S1640 to S1648. When motion information is derived through each process, the prediction block of a current block may be generated by using derived motion information S1650.

The process of deriving motion information in an affine MMVD mode may be largely composed of five processes. For example, the process of deriving motion information in an affine MMVD mode may include the process of constructing an affine merge candidate list S1640, the process of selecting an affine merge candidate from an affine merge candidate list S1642, the process of constructing an affine MMVD candidate list by compensating the available MVD of an affine MMVD to a CPMV for a selected affine merge candidate S1644, the process of reordering an affine MMVD candidate list S1646 and the process of determining motion information of a current block based on a reordered affine MMVD candidate list S1648.

A specific description for the processes of deriving motion information in a MMVD mode is shown in FIGS. 17 and 18.

Referring to FIG. 17(a), in the process of constructing a merge candidate list, motion information at positions that have already been reconstructed may be circulated in predetermined order, and motion information satisfying a specific condition may be added to a merge candidate list. Here, a circulating process may be the same as a circulating process in the merge mode and skip mode of affine prediction or a merge mode and a skip mode described above. A merge candidate list may be composed of up to three prediction candidates (merge candidates). When a merge candidate list is composed of three prediction candidates, circulation may be stopped and the process of constructing a merge candidate list may be terminated.

Referring to FIG. 17(b), in the process of selecting a merge candidate from a merge candidate list, an index representing any one of the prediction candidates in a merge candidate list may be input, and a prediction candidate selected by a corresponding index may be output. The index may be signaled through a bitstream.

Referring to FIG. 17(c), in the process of constructing a MMVD candidate list, a selected prediction candidate may be input, and a MMVD candidate list that compensates the available MVD of a MMVD (to a CPMV) may be output.

The available MVD of a MMVD may be derived by using Tables 4 to 6.

【Table 4】

| merge_data( x0, y0, cbWidth, cbHeight, chType ) { | **Descriptor** |
|---|---|
| if( CuPredMode[ chType ][ x0 ][ y0 ] == MODE_IBC ) { | |
| if( MaxNumIbcMergeCand > 1 ) | |
| **merge_idx**[ x0 ][ y0 ] | ae(v) |
| } else { | |
| if( MaxNumSubblockMergeCand > 0 && cbWidth >= 8 && cbHeight >= 8 ) | |
| **merge_subblock_flag**[ x0 ][ y0 ] | ae(v) |
| if( merge_subblock_flag[ x0 ][ y0 ] == 1 ) { | |
| if( MaxNumSubblockMergeCand > 1 ) | |
| **merge_subblock_idx**[ x0 ][ y0 ] | ae(v) |
| } else { | |
| if( cbWidth < 128 && cbHeight < 128 && ( ( sps_ciip_enabled_flag && cu_skip_flag[ x0 ][ y0 ] == 0 && ( cbWidth * cbHeight ) >= 64 ) \|\| ( sps_gpm_enabled_flag && sh_slice_type == B && cbWidth >= 8 && cbHeight >= 8 && cbWidth < ( 8 * cbHeight ) && cbHeight < ( 8 * cbWidth ) ) ) ) | |
| **regular_merge_flag**[ x0 ][ y0 ] | ae(v) |
| if( regular_merge_flag[ x0 ][ y0 ] == 1 ) { | |
| if( sps_mmvd_enabled_flag ) | |
| **mmvd_merge_flag**[ x0 ][ y0 ] | ae(v) |
| if( mmvd_merge_flag[ x0 ][ y0 ] == 1 ) { | |
| if( MaxNumMergeCand > 1 ) | |
| **mmvd_cand_flag**[ x0 ][ y0 ] | ae(v) |
| **mmvd_distance_idx**[ x0 ][ y0 ] | ae(v) |
| **mmvd_direction_idx**[ x0 ][ y0 ] | |
| } else if( MaxNumMergeCand > 1 ) | |
| **merge_idx**[ x0 ][ y0 ] | ae(v) |
| } else { | |
| if( sps_ciip_enabled_flag && sps_gpm_enabled_flag && sh_slice_type == B && cu_skip_flag[ x0 ][ y0 ] == 0 && cbWidth >= 8 && cbHeight >= 8 && cbWidth < ( 8 * cbHeight ) && cbHeight < ( 8 * cbWidth ) && cbWidth < 128 && cbHeight < 128 ) | |
| **ciip_flag**[ x0 ][ y0 ] | ae(v) |
| if( ciip_flag[ x0 ][ y0 ] && MaxNumMergeCand > 1 ) | |
| **merge_idx**[ x0 ][ y0 ] | ae(v) |
| if( !ciip_flag[ x0 ][ y0 ] ) { | |
| **merge_gpm_partition_idx**[ x0 ][ y0 ] | ae(v) |
| **merge_gpm_idx0**[ x0 ][ y0 ] | ae(v) |
| if( MaxNumGpmMergeCand > 2 ) | |
| **merge_gpm_idx1**[ x0 ][ y0 ] | ae(v) |
| } | |
| } | |
| } | |
| } | |
| } | |

[Table 5]

| mmvd_direction_idx[ x0 ][ y0 ] | MmvdSign[ x0 ][ y0 ][ 0 ] | MmvdSign[ x0 ][ y0 ][ 1 ] |
|---|---|---|
| 0 | +1 | 0 |
| 1 | -1 | 0 |

(continued)

| mmvd_direction_idx[ x0 ][ y0 ] | MmvdSign[ x0 ][ y0 ][ 0 ] | MmvdSign[ x0 ][ y0 ][ 1 ] |
|---|---|---|
| 2 | 0 | +1 |
| 3 | 0 | -1 |
| 4 | +1 | +1 |
| 5 | -1 | -1 |
| 6 | 0 | -1 |
| 7 | -1 | +1 |
| 8 | +2 | +1 |
| 9 | -2 | -1 |
| 10 | -2 | +1 |
| 11 | +2 | -1 |
| 12 | +1 | +2 |
| 13 | -1 | -2 |
| 14 | -1 | +2 |
| 15 | 1 | -2 |

[Table 6]

| mmvd_distance_idx[ x0 ][ y0 ] | MmvdDistance[ x0 ][ y0 ] | |
|---|---|---|
| | ph_mmvd_fullpel_only_flag ==0 | ph_mmvd_fullpel_only_flag ==1 |
| 0 | 1 | 4 |
| 1 | 2 | 8 |
| 2 | 4 | 16 |
| 3 | 8 | 32 |
| 4 | 16 | 64 |
| 5 | 32 | 128 |

In Tables 4 to 6, 1, the value of mmvd_merge_flag[ x0 ][ y0 ], may represent that a MMVD is used to generate inter prediction parameters of a current coding unit, and 0, the value of mmvd_merge_flag[ x0 ][ y0 ], may represent that a MMVD is not used to generate inter prediction parameters of a current coding unit. x0, y0 may represent (x0, y0), the position of a top-left luma sample of a coding block corresponding to the top-left luma sample of a picture. When mmvd_merge_flag[ x0 ] [ y0 ] does not exist, the value of mmvd_merge_flag[ x0 ][ y0 ] may be inferred as 0.

mmvd_cand _flag[ x0 ][ y0 ] may represent whether a first (0) or second (1) candidate in a merge candidate list is used with a MVD derived from mmvd_distance_idx[ x0 ][ y0 ] and mmvd_direction_idx[ x0 ][ y0 ]. x0, y0 may represent (x0, y0), the position of a top-left luma sample of a coding block corresponding to the top-left luma sample of a picture. When mmvd_cand_flag[ x0 ][ y0 ] does not exist, the value of mmvd_cand_flag[ x0 ][ y0 ] may be inferred as 0.

mmvd_distance_idx[ x0 ][ y0 ] may represent an index used to derive MmvdDistance[x0][y0]. x0, y0 may represent (x0, y0), the position of a top-left luma sample of a coding block corresponding to the top-left luma sample of a picture.

mmvd_direction_idx[ x0 ][ y0 ] may represent an index used to derive MmvdSign[ x0 ][ y0 ]. x0, y0 may represent (x0, y0), the position of a top-left luma sample of a coding block corresponding to the top-left luma sample of a picture.

When the directionality of a MVD and the size of a MVD specified in Table 5 and Table 6 are combined, a total of 96 combinations (a total of 96 MVDs) may be constructed. When all values of MmvdDistance and MmvdSign are combined and substituted into Equation 4, 6 combinations may be generated.

【Equation 4】

$$MmvdOffset[\ x0\ ][\ y0\ ][\ 0\ ] = (\ MmvdDistance[\ x0\ ][\ y0\ ] \ll 2\ ) * MmvdSign[\ x0\ ][\ y0\ ][\ 0\ ]$$

$$MmvdOffset[\ x0\ ][\ y0\ ][\ 1\ ] = (\ MmvdDistance[\ x0\ ][\ y0\ ] \ll 2\ ) * MmvdSign[\ x0\ ][\ y0\ ][\ 1\ ]$$

In addition, a maximum of 288 combinations may be constructed by expanding 96 prediction candidate combinations that compensate for the available MVD of a MMVD according to the prediction direction information of a selected prediction candidate. For example, when the prediction direction information of a selected prediction candidate is uni-prediction, motion information that may be derived by compensating for the available MVD of a MMVD may support only 96 combinations. As another example, when the prediction direction information of a selected prediction candidate is bi-prediction, 288 combinations may be constructed. 288 combinations may be derived by applying 96 MmvdOffset information which is a combination supported by 16 MVD directions supported by a MMVD and 6 MVD sizes (distances) supported for each prediction direction in a direction unit. In other words, 288 combinations is a combination that considers all three combinations: a case where only motion information of reference picture list 0 (L0) of a prediction candidate is compensated, a case where only motion information of reference picture list 1 (L1) is compensated and a case where both motion information of L0 and L1 are compensated. Indexes 0 to 95 are a case where combined 96 MmvdOffsets are applied only to L0 motion information, indexes 96 to 191 are a case where combined 96 MmvdOffsets are applied only to L1 motion information and indexes 192 to 287 are a case where combined 96 MmvdOffsets are applied to both L0 and L1 motion information.

Meanwhile, the MVD compensation of an affine MMVD is a combination of eight MVD directions and four MVD size values (distances) supported for each prediction direction, and eight MVD directions and four MVD size values (distances) mayu be derived as in Tables 7 to 9.

【Table 7】

| merge_data( x0, y0, cbWidth, cbHeight, chType ) { | **Descriptor** |
|---|---|
| if( CuPredMode[ chType ][ x0 ][ y0 ] == MODE_IBC ) { | |
| if( MaxNumIbcMergeCand > 1 ) | |
| **merge_idx**[ x0 ][ y0 ] | ae(v) |
| } else { | |
| if( MaxNumSubblockMergeCand > 0 && cbWidth >= 8 && cbHeight >= 8 ) | |
| **merge_subblock_flag**[ x0 ][ y0 ] | ae(v) |
| if( merge_subblock_flag[ x0 ][ y0 ] == 1 ) { | |
| **affine_mmvd_merge_flag**[ x0 ][ y0 ] | ae(v) |
| if(affine_mmvd_merge_flag[ x0 ][ y0 ] == 1) { | |
| if( MaxNumSubblockMergeCand > 1 ) | |
| **affine_merge_cand_flag**[ x0 ][ y0 ] | ae(v) |
| **affine_mmvd_distance_idx**[ x0 ][ y0 ] | ae(v) |
| **affine_mmvd_direction_idx**[ x0 ][ y0 ] | ae(v) |
| } | |
| else{ | |
| if( MaxNumSubblockMergeCand > 1 ) | |
| **merge_subblock_idx**[ x0 ][ y0 ] | ae(v) |
| } | |
| } else { | |
| if( cbWidth < 128 && cbHeight < 128 && ( ( sps_ciip_enabled_flag && cu_skip_flag[ x0 ][ y0 ] == 0 && ( cbWidth * cbHeight ) >= 64 ) \|\| ( sps_gpm_enabled_flag && sh_slice_type == B && cbWidth >= 8 && cbHeight >= 8 && cbWidth < ( 8 * cbHeight ) && cbHeight < ( 8 * cbWidth ) ) ) ) | |
| **regular_merge_flag**[ x0 ][ y0 ] | ae(v) |
| if( regular_merge_flag[ x0 ][ y0 ] == 1 ) { | |
| if( sps_mmvd_enabled_flag ) | |
| **mmvd_merge_flag**[ x0 ][ y0 ] | ae(v) |
| if( mmvd_merge_flag[ x0 ][ y0 ] == 1 ) { | |
| if( MaxNumMergeCand > 1 ) | |
| **mmvd_cand_flag**[ x0 ][ y0 ] | ae(v) |
| **mmvd_distance_idx**[ x0 ][ y0 ] | ae(v) |
| **mmvd_direction_idx**[ x0 ][ y0 ] | |
| } else if( MaxNumMergeCand > 1 ) | |
| **merge_idx**[ x0 ][ y0 ] | ae(v) |
| } else { | |
| if( sps_ciip_enabled_flag && sps_gpm_enabled_flag && sh_slice_type == B && cu_skip_flag[ x0 ][ y0 ] == 0 && cbWidth >= 8 && cbHeight >= 8 && cbWidth < ( 8 * cbHeight ) && cbHeight < ( 8 * cbWidth ) && cbWidth < 128 && cbHeight < 128 ) | |
| **ciip_flag**[ x0 ][ y0 ] | ae(v) |
| if( ciip_flag[ x0 ][ y0 ] && MaxNumMergeCand > 1 ) | |
| **merge_idx**[ x0 ][ y0 ] | ae(v) |
| if( !ciip_flag[ x0 ][ y0 ] ) { | |
| **merge_gpm_partition_idx**[ x0 ][ y0 ] | ae(v) |
| **merge_gpm_idx0**[ x0 ][ y0 ] | ae(v) |
| if( MaxNumGpmMergeCand > 2 ) | |
| **merge_gpm_idx1**[ x0 ][ y0 ] | ae(v) |
| } | |
| } | |
| } | |
| } | |
| } | |

【Table 8】

| affine_mmvd_direction_idx[ x0 ][ y0 ] | affineMmvdSign[ x0 ][ y0 ][ 0 ] | affineMmvdSign[ x0 ][ y0 ][ 1 ] |
|---|---|---|
| 0 | +1 | 0 |
| 1 | −1 | 0 |
| 2 | 0 | +1 |
| 3 | 0 | −1 |
| 4 | +1 | +1 |
| 5 | -1 | -1 |
| 6 | 0 | -1 |
| 7 | -1 | +1 |

【Table 9】

| affine_mmvd_distance_idx[ x0 ][ y0 ] | affineMmvdDistance[ x0 ][ y0 ] |
|---|---|
| 0 | 1 |
| 1 | 2 |
| 2 | 4 |
| 3 | 8 |

In Tables 7 to 9, 1, the value of affine_mmvd_merge_flag[ x0 ][ y0 ], may represent that an affine MMVD is used to generate inter prediction parameters of a current coding unit, and 0, the value of affine_mmvd_merge_flag[ x0 ][ y0 ], may represent that an affine MMVD is not used to generate inter prediction parameters of a current coding unit. x0, y0 may represent (x0, y0), the position of a top-left luma sample of a coding block corresponding to the top-left luma sample of a picture. When affine_mmvd_merge_flag[ x0 ][ y0 ] does not exist, the value of affine_mmvd_merge_flag[ x0 ][ y0 ] may be inferred as 0.

affine_mmvd_cand_flag[ x0 ][ y0 ] may represent whether a first (0) or second (1) candidate in an affine merge candidate list is used with a MVD derived from affine_mmvd_distance_idx[ x0 ][ y0 ] and affine_mmvd_direction_idx[ x0 ][ y0 ]. x0, y0 may represent (x0, y0), the position of a top-left luma sample of a coding block corresponding to the top-left luma sample of a picture. When affine_mmvd_cand_flag[ x0 ][ y0 ] does not exist, the value of affine_mmvd_cand_flag[ x0 ][ y0 ] may be inferred as 0.

affine_mmvd_distance_idx[ x0 ][ y0 ] may represent an index used to derive affineMmvdDistance[x0] [y0]. x0, y0 may represent (x0, y0), the position of a top-left luma sample of a coding block corresponding to the top-left luma sample of a picture.

affine_mmvd_direction_idx[ x0 ][ y0 ] may represent an index used to derive affineMmvdSign[ x0 ][ y0 ]. x0, y0 may represent (x0, y0), the position of a top-left luma sample of a coding block corresponding to the top-left luma sample of a picture.

When the directionality of a MVD and the size of a MVD specified in Table 8 and Table 9 are combined, a total of 32 combinations (a total of 32 MVDs) may be constructed. When all values of affineMmvdDistance and affineMmvdSign are combined and substituted into Equation 5, 32 combinations may be generated.

【Equation 5】

$$\text{affineMmvdOffset}[\ x0\ ][\ y0\ ][\ 0\ ] = (\ \text{affineMmvdDistance}[\ x0\ ][\ y0\ ] \ll 2\ ) * \text{affineMmvdSign}[\ x0\ ][\ y0\ ][\ 0\ ]$$

$$\text{affineMmvdOffset}[\ x0\ ][\ y0\ ][\ 1\ ] = (\ \text{affineMmvdDistance}[\ x0\ ][\ y0\ ] \ll 2\ ) * \text{affineMmvdSign}[\ x0\ ][\ y0\ ][\ 1\ ]$$

In addition, a maximum of 96 combinations may be constructed by expanding 32 prediction candidate combinations that compensate for the available MVD of an affine MMVD according to the prediction direction information of a selected prediction candidate. For example, when the prediction direction information of a selected prediction candidate is uni-prediction, motion information that may be derived by compensating for the available MVD of an affine MMVD may support only 32 combinations. As another example, when the prediction direction information of a selected prediction candidate is bi-prediction, 96 combinations may be constructed. 96 combinations may be derived by applying 32 affineMmvdOffset information which is a combination supported by 8 MVD directions supported by an affine MMVD and 4 MVD sizes (distances) supported for each prediction direction in a direction unit. In other words, 96 combinations is a combination that considers all three combinations: a case where only motion information of reference picture list 0 (L0) of a prediction candidate is compensated, a case where only motion information of reference picture list 1 (L1) is compensated and a case where both motion information of L0 and L1 are compensated. Indexes 0 to 31 are a case where combined 32 affineMmvdOffsets are applied only to L0 motion information, indexes 32 to 63 are a case where combined 32 affineMmvdOffsets are applied only to L1 motion information and indexes 64 to 95 are a case where combined 32 affineMmvdOffsets are applied to both L0 and L1 motion information.

Referring to FIG. 18(a), in the process of reordering a MMVD candidate list, a MMVD candidate list that compensates for a MVD may be input, and a reordered MMVD candidate list may be output.

A reordering process may calculate the template matching error (cost) of at least 96 and at most 288 (at least 32 and at most 96) MMVD candidates, and MMVD candidates may be reordered in ascending order according to a calculated template matching error. A template matching error is a sample value difference between the value of samples in a reconstructed region around a block to be currently encoded and a reconstructed region shown by motion information (a neighboring region corresponding to a current block in a reference picture), and when its value is smaller, it may refer to higher similarity. In other words, ordering MMVD candidates in ascending order according to a template matching error may refer to positioning a prediction candidate with high similarity in preceding order.

Referring to FIG. 18(b), in the process of determining motion information of a current block based on a reordered MMVD candidate list, a reordered MMVD candidate list and a MMVD prediction candidate index may be input, and a selected MMVD prediction candidate may be output. While inputting the process, a MMVD prediction candidate index may be signaled through a bitstream. A selected MMVD prediction candidate which is the output information of the process may be used as motion information for generating the prediction block of a current block.

According to an embodiment described above, up to 288 (up to 96) prediction candidates may be used for MMVD prediction. In contrast, according to the conventional MMVD, a total of 20 (a total of 12) indexes may be derived, and motion information matching one of the top 20 (12) indexes in a MMVD candidate list may be selected for MMVD prediction. In other words, according to the conventional MMVD, only 20 (12) prediction candidates with a small error (cost) among the prediction candidates in a MMVD candidate list were available and at least 76 and at most 268 (at least 24 and at most 84) prediction candidates with a relatively large error were unavailable. Accordingly, according to the present invention, since the number of prediction candidates available for MMVD prediction increases, prediction performance may be refined.

## Embodiment 2

Embodiment 2 relates to a method for deriving motion information by utilizing a MMVD or an affine MMVD. Embodiment 2 proposes a method for constructing a merge candidate list by combining a relatively large number of cases compared to the conventional technology, a method for reordering a MMVD candidate list by making various prediction candidates compete compared to the conventional technology and others. According to Embodiment 2, compression efficiency may be refined.

Embodiments proposed through Embodiment 2 may be performed by an image encoding apparatus 100 and/or an image decoding apparatus 200.

FIG. 19 is a flowchart representing an image encoding/decoding method using a MMVD, and FIG. 20 is a flowchart representing an image encoding/decoding method using an affine MMVD.

Referring to FIG. 19, in a process of generating a prediction block by using inter prediction, whether the prediction mode of a current block is a merge (prediction) mode may be determined S1910. When the prediction mode of a current block is not a merge mode, motion information may be derived by using a prediction mode other than a merge mode S1912, and when the prediction mode of a current block is a merge mode, whether a MMVD mode is applied may be determined S1920. When a MMVD mode is not applied, motion information may be derived by using a prediction mode other than a MMVD mode among the merge modes S1922, and when a MMVD mode is applied, motion information may be derived in a MMVD mode S1930 to S1939. When motion information is derived through each process, the prediction block of a current block may be generated by using derived motion information S1940.

The process of deriving motion information in a MMVD mode may be largely composed of six processes. For example, the process of deriving motion information in a MMVD mode may include the process of constructing a merge candidate list S1930, the process of reordering a merge candidate list S1932, the process of selecting a merge candidate from a merge candidate list S1934, the process of constructing a MMVD candidate list by compensating the available MVD of a MMVD for a selected merge candidate S1936, the process of reordering a MMVD candidate list S1938 and the process of determining motion information of a current block based on a reordered MMVD candidate list S 1939.

A syntax for performing processes S1930 to S1939 and semantics of a corresponding syntax are shown in Tables 10 to 17.

【Table 10】

| seq_parameter_set_rbsp( ) { | **Descriptor** |
|---|---|
| ... | |
| **sps_mmvd_enabled_flag** | u(1) |
| if( sps_mmvd_enabled_flag ) | |
| **sps_mmvd_fullpel_only_enabled_flag** | u(1) |
| ... | |

In Table 10, 1, the value of sps_mmvd_enabled_flag, may represent that a MMVD is enabled for CLVS, and 0, the value of sps_mmvd_enabled_flag, may represent that a MMVD is not enabled for CLVS. 1, the value of sps_mmvd_fullpel_only_enabled_flag, may represent that a MMVD using only integer sample precision is enabled for CLVS, and 0, the value of sps_mmvd_fullpel_only_enabled_flag, may represent that a MMVD using only integer sample precision is not enabled for CLVS. When sps_mmvd_fullpel_only_enabled_flag does not exist, the value of sps_mmvd_fullpel_only_enabled_flag may be inferred as 0.

【Table 11】

| picture_header_structure( ) { | |
|---|---|
| ... | |
| if( sps_mmvd_fullpel_only_enabled_flag ) | |
| **ph_mmvd_fullpel_only_flag** | u(1) |
| ... | |

In Table 11, 1, the value of ph_mmvd_fullpel_only_flag, may represent that a MMVD using only integer sample precision is used for a current picture, and 0, the value of ph_mmvd_fullpel_only_flag, may represent that a MMVD using only fractional or integer sample precision may be used for a current picture. When ph_mmvd_fullpel_only_flag does not exist, the value of ph_mmvd_fullpel_only_flag may be inferred as 0.

【Table 12】

| merge data( x0, y0, cbWidth, cbHeight, chType ) { | **Descriptor** |
|---|---|
| if( CuPredMode[ chType ][ x0 ][ y0 ] == MODE IBC ) { | |
| if( MaxNumIbcMergeCand > 1 ) | |
| **merge idx**[ x0 ][ y0 ] | ae(v) |
| } else { | |
| if( MaxNumSubblockMergeCand > 0 && cbWidth >= 8 && cbHeight >= 8 ) | |
| **merge subblock flag**[ x0 ][ y0 ] | ae(v) |
| if( merge subblock flag[ x0 ][ y0 ] == 1 ) { | |
| if( MaxNumSubblockMergeCand > 1 ) | |
| **merge subblock idx**[ x0 ][ y0 ] | ae(v) |
| } else { | |
| if( cbWidth < 128 && cbHeight < 128 && ( ( sps ciip enabled flag && cu skip flag[ x0 ][ y0 ] == 0 && ( cbWidth * cbHeight ) >= 64 ) \|\| ( sps gpm enabled flag && sh slice type == B && cbWidth >= 8 && cbHeight >= 8 && cbWidth < ( 8 * cbHeight ) && cbHeight < ( 8 * cbWidth ) ) ) ) | |
| **regular merge flag**[ x0 ][ y0 ] | ae(v) |
| if( regular merge flag[ x0 ][ y0 ] == 1 ) { | |
| if( sps mmvd enabled flag ) | |
| **mmvd merge flag**[ x0 ][ y0 ] | ae(v) |
| if( mmvd merge flag[ x0 ][ y0 ] == 1 ) { | |
| if( MaxNumMergeCand > 1 ) | |
| **mmvd base merge cand idx**[ x0 ][ y0 ] | ae(v) |
| **mmvd cand idx**[ x0 ][ y0 ] | ae(v) |
| } else if( MaxNumMergeCand > 1 ) | |
| **merge idx**[ x0 ][ y0 ] | ae(v) |
| } else { | |
| if( sps ciip enabled flag && sps gpm enabled flag && sh slice type == B && cu skip flag[ x0 ][ y0 ] == 0 && cbWidth >= 8 && cbHeight >= 8 && cbWidth < ( 8 * cbHeight ) && cbHeight < ( 8 * cbWidth ) && cbWidth < 128 && cbHeight < 128 ) | |
| **ciip flag**[ x0 ][ y0 ] | ae(v) |
| if( ciip flag[ x0 ][ y0 ] && MaxNumMergeCand > 1 ) | |
| **merge idx**[ x0 ][ y0 ] | ae(v) |
| if( !ciip flag[ x0 ][ y0 ] ) { | |
| **merge gpm partition idx**[ x0 ][ y0 ] | ae(v) |
| **merge gpm idx0**[ x0 ][ y0 ] | ae(v) |
| if( MaxNumGpmMergeCand > 2 ) | |
| **merge gpm idx1**[ x0 ][ y0 ] | ae(v) |
| } | |
| } | |
| } | |
| } | |
| } | |

In Table 12, 1, the value of mmvd_merge_flag[ x0 ][ y0 ], may represent that a MMVD is used to generate inter prediction parameters of a current coding unit, and 0, the value of mmvd_merge_flag[ x0 ][ y0 ], may represent that a MMVD is not used to generate inter prediction parameters of a current coding unit. x0, y0 may represent (x0, y0), the position of a top-left luma sample of a coding block corresponding to the top-left luma sample of a picture. When mmvd_merge_flag[ x0 ][ y0 ] does not exist, the value of mmvd_merge_flag[ x0 ][ y0 ] may be inferred as 0.

mmvd_base_merge_cand_idx[ x0 ][ y0 ] may represent a base MMVD candidate index in a MMVD candidate list used with a MVD derived from mmvd_cand_idx[ ][ ]. x0, y0 may represent (x0, y0), the position of a top-left luma sample of a coding block corresponding to the top-left luma sample of a picture. When mmvd_base_merge_cand_idx[ x0 ][ y0 ] does not exist, the value of mmvd_base_merge_cand_idx[ x0 ][ y0 ] may be inferred as 0.

mmvd_cand_idx[ x0 ][ y0 ] may represent an index used to derive MmvdDistance[x0][y0] and MmvdSign[ x0 ][ y0 ]. x0, y0 may represent (x0, y0), the position of a top-left luma sample of a coding block corresponding to the top-left luma sample of a picture.

Syntaxes above may be encoded and decoded through a binarization process in Table 13.

【Table 13】

| | | | |
|---|---|---|---|
| merge_data( ) | regular_merge_flag[ ][ ] | FL | cMax = 1 |
| | mmvd_merge_flag[ ][ ] | FL | cMax = 1 |
| | mmvd_base_merge_cand_idx[ ][ ] | TR | cMax = N, cRiceParam = n |
| | mmvd_cand_idx[ ][ ] | TR | cMax = M, cRiceParam = m |
| | ciip_flag[ ][ ] | FL | cMax = 1 |
| | merge_subblock_flag[ ][ ] | FL | cMax = 1 |
| | merge_subblock_idx[ ][ ] | TR | cMax = MaxNumSubblockMergeCand − 1, cRiceParam = 0 |
| | merge_gpm_partition_idx[ ][ ] | FL | cMax = 63 |
| | merge_gpm_idx0[ ][ ] | TR | cMax = MaxNumGpmMergeCand − 1, cRiceParam = 0 |
| | merge_gpm_idx1[ ][ ] | TR | cMax = MaxNumGpmMergeCand − 2, cRiceParam = 0 |
| | merge_idx[ ][ ] | TR | cMax = ( CuPredMode[ 0 ][ x0 ][ y0 ] != MODE_IBC ? MaxNumMergeCand : MaxNumIbcMergeCand ) − 1, cRiceParam = 0 |

In Table 13, N, the cMax value of mmvd_base_merge_cand_idx[] [], and n, the cRiceParam value, are an integer, which may be a value predefined in an image decoding apparatus 200 or may be signaled through HLS such as SPS, PPS, PH, SH, etc. M, the cMax value of mmvd_cand_idx[][], and m, the cRiceParam value, are an integer, which may be a value predefined in an image decoding apparatus 200 or may be signaled through HLS such as SPS, PPS, PH, SH, etc.

A syntax indicated as FL may be encoded and decoded through a fixed-length binarization process, and a syntax indicated as TR may be encoded and decoded through a truncated rice binarization process.

A specific description for a truncated rice binarization process and a fixed-length binarization process is shown in Table 14.

【Table 14】

**Truncated Rice binarization process**

Input to this process is a request for a truncated Rice (TR) binarization, cMax and cRiceParam.

Output of this process is the TR binarization associating each value symbolVal with a corresponding bin string.

A TR bin string is a concatenation of a prefix bin string and, when present, a suffix bin string.

For the derivation of the prefix bin string, the following applies:

- The prefix value of symbolVal, prefixVal, is derived as follows:

  prefixVal = symbolVal >> cRiceParam

- The prefix of the TR bin string is specified as follows:
  - If prefixVal is less than cMax >> cRiceParam, the prefix bin string is a bit string of length prefixVal + 1 indexed by binIdx. The bins for binIdx less than prefixVal are equal to 1. The bin with binIdx equal to prefixVal is equal to 0. Table illustrates the bin strings of this unary binarization for prefixVal.
  - Otherwise, the bin string is a bit string of length cMax >> cRiceParam with all bins being equal to 1.

**Bin string of the unary binarization (informative)**

| prefixVal | Bin string | | | | | |
|---|---|---|---|---|---|---|
| 0 | 0 | | | | | |
| 1 | 1 | 0 | | | | |
| 2 | 1 | 1 | 0 | | | |
| 3 | 1 | 1 | 1 | 0 | | |
| 4 | 1 | 1 | 1 | 1 | 0 | |
| 5 | 1 | 1 | 1 | 1 | 1 | 0 |
| ... | | | | | | |
| binIdx | 0 | 1 | 2 | 3 | 4 | 5 |

When cMax is greater than symbolVal and cRiceParam is greater than 0, the suffix of the TR bin string is present and it is derived as follows:

- The suffix value suffixVal is derived as follows:

  suffixVal = symbolVal − ( prefixVal << cRiceParam )

- The suffix of the TR bin string is specified by invoking the fixed-length (FL) binarization process for suffixVal with a cMax value equal to ( 1 << cRiceParam ) − 1.

NOTE – For the input parameter cRiceParam = 0, the TR binarization is exactly a truncated unary binarization and it is always invoked with a cMax value equal to the largest possible value of the syntax element being decoded.

**Fixed-length binarization process**

Inputs to this process are a request for a fixed-length (FL) binarization and cMax.

Output of this process is the FL binarization associating each value symbolVal with a corresponding bin string.

FL binarization is constructed by using the fixedLength-bit unsigned integer bin string of the symbol value symbolVal, where fixedLength = Ceil( Log2( cMax + 1 ) ). The indexing of bins for the FL binarization is such that the binIdx = 0 relates to the most significant bit with increasing values of binIdx towards the least significant bit.

According to embodiments, the present invention may use a syntax table in Table 15 instead of a syntax table in Table 12.

【Table 15】

| merge_data( x0, y0, cbWidth, cbHeight, chType ) { | Descriptor |
|---|---|
| if( CuPredMode[ chType ][ x0 ][ y0 ] == MODE_IBC ) { | |
| if( MaxNumIbcMergeCand > 1 ) | |
| **merge_idx**[ x0 ][ y0 ] | ae(v) |
| } else { | |
| if( MaxNumSubblockMergeCand > 0 && cbWidth >= 8 && cbHeight >= 8 ) | |
| **merge_subblock_flag**[ x0 ][ y0 ] | ae(v) |
| if( merge_subblock_flag[ x0 ][ y0 ] == 1 ) { | |
| if( MaxNumSubblockMergeCand > 1 ) | |
| **merge_subblock_idx**[ x0 ][ y0 ] | ae(v) |
| } else { | |
| if( cbWidth < 128 && cbHeight < 128 && ( ( sps_ciip_enabled_flag && cu_skip_flag[ x0 ][ y0 ] == 0 && ( cbWidth * cbHeight ) >= 64 ) \|\| ( sps_gpm_enabled_flag && sh_slice_type == B && cbWidth >= 8 && cbHeight >= 8 && cbWidth < ( 8 * cbHeight ) && cbHeight < ( 8 * cbWidth ) ) ) ) | |
| **regular_merge_flag**[ x0 ][ y0 ] | ae(v) |
| if( regular_merge_flag[ x0 ][ y0 ] == 1 ) { | |
| if( sps_mmvd_enabled_flag ) | |
| **mmvd_merge_flag**[ x0 ][ y0 ] | ae(v) |
| if( mmvd_merge_flag[ x0 ][ y0 ] == 1 ) { | |
| if( MaxNumMergeCand > 1 ) | |
| **mmvd_base_cand_idx**[ x0 ][ y0 ] | ae(v) |
| **mmvd_cand_group_idx**[ x0 ][ y0 ] | ae(v) |
| **mmvd_cand_idx**[ x0 ][ y0 ] | ae(v) |
| } else if( MaxNumMergeCand > 1 ) | |
| **merge_idx**[ x0 ][ y0 ] | ae(v) |
| } else { | |
| if( sps_ciip_enabled_flag && sps_gpm_enabled_flag && sh_slice_type == B && cu_skip_flag[ x0 ][ y0 ] == 0 && cbWidth >= 8 && cbHeight >= 8 && cbWidth < ( 8 * cbHeight ) && cbHeight < ( 8 * cbWidth ) && cbWidth < 128 && cbHeight < 128 ) | |
| **ciip_flag**[ x0 ][ y0 ] | ae(v) |
| if( ciip_flag[ x0 ][ y0 ] && MaxNumMergeCand > 1 ) | |
| **merge_idx**[ x0 ][ y0 ] | ae(v) |
| if( !ciip_flag[ x0 ][ y0 ] ) { | |
| **merge_gpm_partition_idx**[ x0 ][ y0 ] | ae(v) |
| **merge_gpm_idx0**[ x0 ][ y0 ] | ae(v) |
| if( MaxNumGpmMergeCand > 2 ) | |
| **merge_gpm_idx1**[ x0 ][ y0 ] | ae(v) |
| } | |
| } | |
| } | |
| } | |
| } | |

In Table 15, the semantics of mmvd_merge_flag[ x0 ][ y0 ] and mmvd_base_merge_cand_idx[ x0 ][ y0 ] may be the same as the semantics described through Table 12. mmvd_cand_group_idx[ x0 ][ y0 ] may represent an index used to derive MmvdDistance[x0][y0] and MmvdSign[ x0 ][ y0 ]. x0, y0 may represent (x0, y0), the position of a top-left luma sample of a coding block corresponding to the top-left luma sample of a picture.

mmvd_cand_idx[ x0 ][ y0 ] may represent the index of a candidate used to derive MmvdDistance[x0][y0] and MmvdSign[ x0 ][ y0 ] by using mmvd_cand_group_idx[ x0 ][ y0 ]. x0, y0 may represent (x0, y0), the position of a top-left luma sample of a coding block corresponding to the top-left luma sample of a picture.

Syntaxes above may be encoded and decoded through a binarization process in Table 16.

【Table 16】

| | | | |
|---|---|---|---|
| merge_data( ) | regular_merge_flag[ ][ ] | FL | cMax = 1 |
| | mmvd_merge_flag[ ][ ] | FL | cMax = 1 |
| | mmvd_base_merge_cand_idx[ ][ ] | TR | cMax = N, cRiceParam = n |
| | mmvd_cand_group_idx[ ][ ] | FL | cMax = M |
| | mmvd_cand_idx[ ][ ] | TR | cMax = K, cRiceParam = k |
| | ciip_flag[ ][ ] | FL | cMax = 1 |
| | merge_subblock_flag[ ][ ] | FL | cMax = 1 |
| | merge_subblock_idx[ ][ ] | TR | cMax = MaxNumSubblockMergeCand − 1, cRiceParam = 0 |
| | merge_gpm_partition_idx[ ][ ] | FL | cMax = 63 |
| | merge_gpm_idx0[ ][ ] | TR | cMax = MaxNumGpmMergeCand − 1, cRiceParam = 0 |
| | merge_gpm_idx1[ ][ ] | TR | cMax = MaxNumGpmMergeCand − 2, cRiceParam = 0 |
| | merge_idx[ ][ ] | TR | cMax = ( CuPredMode[ 0 ][ x0 ][ y0 ] != MODE_IBC ? MaxNumMergeCand : MaxNumIbcMergeCand ) − 1, cRiceParam = 0 |

In Table 16, N, the cMax value of mmvd_base_merge_cand_idx[] [], and n, the cRiceParam value, are an integer, which may be a value predefined in an image decoding apparatus 200 or may be signaled through HLS such as SPS, PPS, PH, SH, etc. Mdms 0, the cMax value of mmvd_cand_group_idx[][], is a non-zero integer, which may be a value predefined in an image decoding apparatus 200 or may be signaled through HLS such as SPS, PPS, PH, SH, etc. K, the cMax value of mmvd_cand_idx[][], and k, the cRiceParam value, are an integer, which may be a value predefined in an image decoding apparatus 200 or may be signaled through HLS such as SPS, PPS, PH, SH, etc.

A syntax indicated as FL may be encoded and decoded through a fixed-length binarization process in Table 14, and a syntax indicated as TR may be encoded and decoded through a truncated rice binarization process in Table 14.

Meanwhile, referring to FIG. 20, in the process of generating a prediction block by using inter prediction, whether the prediction mode of a current block is a merge (prediction) mode may be determined S2010. When the prediction mode of a current block is not a merge mode, motion information may be derived by using a prediction mode other than a merge mode S2012, and when the prediction mode of a current block is a merge mode, whether the prediction mode of a current block is a sub-block-based (merge) prediction mode may be determined S2020. When the prediction mode of a current block is not a sub-block-based prediction mode, motion information may be derived in a general merge mode other than a sub-block-based prediction mode S2022, and when the prediction mode of a current block is a sub-block-based prediction mode, whether an affine MMVD mode is applied may be determined S2030. When an affine MMVD mode is not applied, motion information may be derived by using a prediction mode other than an affine MMVD mode among the sub-block-based prediction modes S2032, and when an affine MMVD mode is applied, motion information may be derived in an affine MMVD mode S2040 to S2049. When motion information is derived through each process, the prediction block of a current block may be generated by using derived motion information S2050.

The process of deriving motion information in an affine MMVD mode may be largely composed of six processes. For example, the process of deriving motion information in an affine MMVD mode may include the process of constructing an affine merge candidate list S2040, the process of reordering an affine merge candidate list S2042, the process of selecting a merge candidate from an affine merge candidate list S2044, the process of constructing an affine MMVD candidate list by compensating the available MVD of an affine MMVD to CPMV for a selected affine merge candidate S2046, the process of reordering an affine MMVD candidate list S2048 and the process of determining motion information of a current block based on a reordered affine MMVD candidate list S2049.

A syntax for performing processes S2040 to S2049 and semantics of a corresponding syntax are shown in Tables

17 to 22.

【Table 17】

| seq_parameter_set_rbsp( ) { | **Descriptor** |
|---|---|
| ... | |
| **sps_affine_mmvd_enabled_flag** | u(1) |
| if( sps_affine_mmvd_enabled_flag ) | |
| **sps_affine_mmvd_fullpel_only_enabled_flag** | u(1) |
| ... | |

In Table 17, 1, the value of sps_affine_mmvd_enabled_flag, may represent that an affine MMVD is enabled for CLVS, and 0, the value of sps_affine_mmvd_enabled _flag, may represent that an affine MMVD is not enabled for CLVS. 1, the value of sps_affine_mmvd_fullpel_only_enabled_flag, may represent that an affine MMVD using only integer sample precision is enabled for CLVS, and 0, the value of sps_affine_mmvd_fullpel_only_enabled_flag, may represent that an affine MMVD using only integer sample precision is not enabled for CLVS. When sps_affine_mmvd_fullpel_only_enabled_flag does not exist, the value of sps_affine_mmvd_fullpel_only_enabled_flag may be inferred as 0.

【Table 18】

| picture_header_structure( ) { | |
|---|---|
| ... | |
| if( sps_affine_mmvd_fullpel_only_enabled_flag ) | |
| **ph_affine_mmvd_fullpel_only_flag** | u(1) |
| ... | |

In Table 18, 1, the value of ph_affine_mmvd_fullpel_only_flag, may represent that an affine MMVD using only integer sample precision is used for a current picture, and 0, the value of ph_affine_mmvd_fullpel_only_flag, may represent that an affine MMVD using only fractional or integer sample precision may be used for a current picture. When ph_affine_mmvd_fullpel_only_flag does not exist, the value of ph_affine_mmvd_fullpel_only_flag may be inferred as 0.

【Table 19】

| merge_data( x0, y0, cbWidth, cbHeight, chType ) { | **Descriptor** |
|---|---|
| if( CuPredMode[ chType ][ x0 ][ y0 ] == MODE_IBC ) { | |
| if( MaxNumIbcMergeCand > 1 ) | |
| **merge_idx**[ x0 ][ y0 ] | ae(v) |
| } else { | |
| if( MaxNumSubblockMergeCand > 0 && cbWidth >= 8 && cbHeight >= 8 ) | |
| **merge_subblock_flag**[ x0 ][ y0 ] | ae(v) |
| if( merge_subblock_flag[ x0 ][ y0 ] == 1 ) { | |
| **affine_mmvd_merge_flag**[ x0 ][ y0 ] | ae(v) |
| if(affine_mmvd_merge_flag[ x0 ][ y0 ] = = 1) { | |
| if( MaxNumSubblockMergeCand > 1 ) | |
| **affine_base_merge_cand_idx**[ x0 ][ y0 ] | ae(v) |
| **affine_mmvd_cand_idx**[ x0 ][ y0 ] | ae(v) |
| } | |
| else{ | |
| if( MaxNumSubblockMergeCand > 1 ) | |
| **merge_subblock_idx**[ x0 ][ y0 ] | ae(v) |
| } | |
| } else { | |
| if( cbWidth < 128 && cbHeight < 128 &&<br>( ( sps_ciip_enabled_flag && cu_skip_flag[ x0 ][ y0 ] == 0 &&<br>( cbWidth * cbHeight ) >= 64 ) \|\|<br>( sps_gpm_enabled_flag &&<br>sh_slice_type == B && cbWidth >= 8 && cbHeight >= 8 &&<br>cbWidth < ( 8 * cbHeight ) && cbHeight < ( 8 * cbWidth ) ) ) ) | |
| **regular_merge_flag**[ x0 ][ y0 ] | ae(v) |
| if( regular_merge_flag[ x0 ][ y0 ] == 1 ) { | |
| if( sps_mmvd_enabled_flag ) | |
| **mmvd_merge_flag**[ x0 ][ y0 ] | ae(v) |
| if( mmvd_merge_flag[ x0 ][ y0 ] == 1 ) { | |
| if( MaxNumMergeCand > 1 ) | |
| **mmvd_cand_flag**[ x0 ][ y0 ] | ae(v) |
| **mmvd_distance_idx**[ x0 ][ y0 ] | ae(v) |
| **mmvd_direction_idx**[ x0 ][ y0 ] | |
| } else if( MaxNumMergeCand > 1 ) | |
| **merge_idx**[ x0 ][ y0 ] | ae(v) |
| } else { | |
| if( sps_ciip_enabled_flag && sps_gpm_enabled_flag &&<br>sh_slice_type == B &&<br>cu_skip_flag[ x0 ][ y0 ] == 0 && cbWidth >= 8 && cbHeight >=<br>8 &&<br>cbWidth < ( 8 * cbHeight ) && cbHeight < ( 8 * cbWidth ) &&<br>cbWidth < 128 && cbHeight < 128 ) | |
| **ciip_flag**[ x0 ][ y0 ] | ae(v) |
| if( ciip_flag[ x0 ][ y0 ] && MaxNumMergeCand > 1 ) | |
| **merge_idx**[ x0 ][ y0 ] | ae(v) |
| if( !ciip_flag[ x0 ][ y0 ] ) { | |
| **merge_gpm_partition_idx**[ x0 ][ y0 ] | ae(v) |
| **merge_gpm_idx0**[ x0 ][ y0 ] | ae(v) |
| if( MaxNumGpmMergeCand > 2 ) | |
| **merge_gpm_idx1**[ x0 ][ y0 ] | ae(v) |
| } | |
| } | |
| } | |
| } | |
| } | |

In Table 19, 1, the value of affine_mmvd_merge_flag[ x0 ][ y0 ], may represent that an affine MMVD is used to generate inter prediction parameters of a current coding unit, and 0, the value of affine_mmvd_merge_flag[ x0 ][ y0 ], may represent that an affine MMVD is not used to generate inter prediction parameters of a current coding unit. x0, y0 may represent (x0, y0), the position of a top-left luma sample of a coding block corresponding to the top-left luma sample of a picture. When affine_mmvd_merge_flag[ x0 ][ y0 ] does not exist, the value of affine_mmvd_merge_flag[ x0 ][ y0 ] may be inferred as 0.

affine_mmvd_base_merge_cand_idx[ x0 ][ y0 ] may represent a base affine MMVD candidate index in an affine MMVD candidate list used with a MVD derived from affine_mmvd_cand_idx[ ][ ]. x0, y0 may represent (x0, y0), the position of a top-left luma sample of a coding block corresponding to the top-left luma sample of a picture. When affine_mmvd_base_merge_cand_idx[ x0 ][ y0 ] does not exist, the value of affine_mmvd_base _merge_cand_idx[ x0 ][ y0 ] may be inferred as 0.

affine_mmvd_cand_idx[ x0 ][ y0 ] may represent an index used to derive affineMmvdDistance[x0][y0] and affineMmvdSign[ x0 ][ y0 ]. x0, y0 may represent (x0, y0), the position of a top-left luma sample of a coding block corresponding to the top-left luma sample of a picture.

Syntaxes above may be encoded and decoded through a binarization process in Table 20.

【Table 20】

| | | | |
|---|---|---|---|
| merge_data( ) | regular_merge_flag[ ][ ] | FL | cMax = 1 |
| | mmvd_merge_flag[ ][ ] | FL | cMax = 1 |
| | mmvd_cand_flag[ ][ ] | FL | cMax = 1 |
| | mmvd_distance_idx[ ][ ] | TR | cMax = 7, cRiceParam = 0 |
| | mmvd_direction_idx[ ][ ] | FL | cMax = 3 |
| | ciip_flag[ ][ ] | FL | cMax = 1 |
| | merge_subblock_flag[ ][ ] | FL | cMax = 1 |
| | affine_mmvd_merge_flag[ ][ ] | FL | cMax = 1 |
| | affine_mmvd_base_merge_cand_idx[ ][ ] | TR | cMax = N, cRiceParam = n |
| | affine_mmvd_cand_idx[ ][ ] | TR | cMax = M, cRiceParam = m |
| | merge_subblock_idx[ ][ ] | TR | cMax = MaxNumSubblockMergeCand − 1, cRiceParam = 0 |
| | merge_gpm_partition_idx[ ][ ] | FL | cMax = 63 |
| | merge_gpm_idx0[ ][ ] | TR | cMax = MaxNumGpmMergeCand − 1, cRiceParam = 0 |
| | merge_gpm_idx1[ ][ ] | TR | cMax = MaxNumGpmMergeCand − 2, cRiceParam = 0 |
| | merge_idx[ ][ ] | TR | cMax = ( CuPredMode[ 0 ][ x0 ][ y0 ] != MODE_IBC ? MaxNumMergeCand : MaxNumIbcMergeCand ) − 1, cRiceParam = 0 |

In Table 20, affine_mmvd _merge_Flag[][] may be encoded and decoded through a fixed-length binarization process. N, the cMax value of affine_mmvd_base_merge_cand_idx[] [], and n, the cRiceParam value, are an integer, which may be a value predefined in an image decoding apparatus 200 or may be signaled through HLS such as SPS, PPS, PH, SH, etc. M, the cMax value of affine_mmvd_cand_idx[][], and m, the cRiceParam value, are an integer, which may be a value predefined in an image decoding apparatus 200 or may be signaled through HLS such as SPS, PPS, PH, SH, etc.

A syntax indicated as FL may be encoded and decoded through a fixed-length binarization process, and a syntax indicated as TR may be encoded and decoded through a truncated rice binarization process. A specific description for a truncated rice binarization process and a fixed-length binarization process is the same as in Table 14.

According to embodiments, the present invention may use a syntax table in Table 21 instead of a syntax table in Table 19.

【Table 21】

| merge_data( x0, y0, cbWidth, cbHeight, chType ) { | Descriptor |
|---|---|
| if( CuPredMode[ chType ][ x0 ][ y0 ] == MODE_IBC ) { | |
| if( MaxNumIbcMergeCand > 1 ) | |
| **merge_idx**[ x0 ][ y0 ] | ae(v) |
| } else { | |
| if( MaxNumSubblockMergeCand > 0 && cbWidth >= 8 && cbHeight >= 8 ) | |
| **merge_subblock_flag**[ x0 ][ y0 ] | ae(v) |
| if( merge_subblock_flag[ x0 ][ y0 ] == 1 ) { | |
| **affine_mmvd_merge_flag**[ x0 ][ y0 ] | ae(v) |
| if(affine_mmvd_merge_flag[ x0 ][ y0 ] = = 1) { | |
| if( MaxNumSubblockMergeCand > 1 ) | |
| **affine_base_merge_cand_idx**[ x0 ][ y0 ] | ae(v) |
| **affine_mmvd_cand_group_idx**[ x0 ][ y0 ] | ae(v) |
| **affine_mmvd_cand_idx**[ x0 ][ y0 ] | ae(v) |
| } | |
| else{ | |
| if( MaxNumSubblockMergeCand > 1 ) | |
| **merge_subblock_idx**[ x0 ][ y0 ] | ae(v) |
| } | |
| } else { | |
| if( cbWidth < 128 && cbHeight < 128 && ( ( sps_ciip_enabled_flag && cu_skip_flag[ x0 ][ y0 ] == 0 && ( cbWidth * cbHeight ) >= 64 ) \|\| ( sps_gpm_enabled_flag && sh_slice_type == B && cbWidth >= 8 && cbHeight >= 8 && cbWidth < ( 8 * cbHeight ) && cbHeight < ( 8 * cbWidth ) ) ) ) | |
| **regular_merge_flag**[ x0 ][ y0 ] | ae(v) |
| if( regular_merge_flag[ x0 ][ y0 ] == 1 ) { | |
| if( sps_mmvd_enabled_flag ) | |
| **mmvd_merge_flag**[ x0 ][ y0 ] | ae(v) |
| if( mmvd_merge_flag[ x0 ][ y0 ] == 1 ) { | |
| if( MaxNumMergeCand > 1 ) | |
| **mmvd_cand_flag**[ x0 ][ y0 ] | ae(v) |
| **mmvd_distance_idx**[ x0 ][ y0 ] | ae(v) |
| **mmvd_direction_idx**[ x0 ][ y0 ] | |
| } else if( MaxNumMergeCand > 1 ) | |
| **merge_idx**[ x0 ][ y0 ] | ae(v) |
| } else { | |
| if( sps_ciip_enabled_flag && sps_gpm_enabled_flag && sh_slice_type == B && cu_skip_flag[ x0 ][ y0 ] == 0 && cbWidth >= 8 && cbHeight >= 8 && cbWidth < ( 8 * cbHeight ) && cbHeight < ( 8 * cbWidth ) && cbWidth < 128 && cbHeight < 128 ) | |
| **ciip_flag**[ x0 ][ y0 ] | ae(v) |
| if( ciip_flag[ x0 ][ y0 ] && MaxNumMergeCand > 1 ) | |
| **merge_idx**[ x0 ][ y0 ] | ae(v) |
| if( !ciip_flag[ x0 ][ y0 ] ) { | |
| **merge_gpm_partition_idx**[ x0 ][ y0 ] | ae(v) |
| **merge_gpm_idx0**[ x0 ][ y0 ] | ae(v) |
| if( MaxNumGpmMergeCand > 2 ) | |
| **merge_gpm_idx1**[ x0 ][ y0 ] | ae(v) |
| } | |
| } | |
| } | |
| } | |
| } | |

In Table 21, the semantics of affine_mmvd_merge_flag[ x0 ][ y0 ] and affine_mmvd_base_merge_cand_idx[ x0 ] [ y0 ] may be the same as the semantics described through Table 19.

affine_mmvd_cand_group_idx[ x0 ][ y0 ] may represent an index used to derive affineMmvdDistance[x0][y0] and affineMmvdSign[ x0 ][ y0 ]. x0, y0 may represent (x0, y0), the position of a top-left luma sample of a coding block corresponding to the top-left luma sample of a picture.

affine_mmvd_cand_idx[ x0 ][ y0 ] may represent an index used to derive affineMmvdDistance[x0][y0] and affineMmvdSign[ x0 ][ y0 ]. x0, y0 may represent (x0, y0), the position of a top-left luma sample of a coding block corresponding to the top-left luma sample of a picture.

Syntaxes above may be encoded and decoded through a binarization process in Table 22.

【Table 22】

| | | | |
|---|---|---|---|
| merge_data( ) | regular_merge_flag[ ][ ] | FL | cMax = 1 |
| | mmvd_merge_flag[ ][ ] | FL | cMax = 1 |
| | mmvd_cand_flag[ ][ ] | FL | cMax = 1 |
| | mmvd_distance_idx[ ][ ] | TR | cMax = 7, cRiceParam = 0 |
| | mmvd_direction_idx[ ][ ] | FL | cMax = 3 |
| | ciip_flag[ ][ ] | FL | cMax = 1 |
| | merge_subblock_flag[ ][ ] | FL | cMax = 1 |
| | affine_mmvd_merge_flag[ ][ ] | FL | cMax = 1 |
| | affine_mmvd_base_merge_cand_idx[ ][ ] | TR | cMax = N, cRiceParam = n |
| | affine_mmvd_cand_group_idx[ ][ ] | FL | cMax = M |
| | affine_mmvd_cand_idx[ ][ ] | TR | cMax = K, cRiceParam = k |
| | merge_subblock_idx[ ][ ] | TR | cMax = MaxNumSubblockMergeCand − 1, cRiceParam = 0 |
| | merge_gpm_partition_idx[ ][ ] | FL | cMax = 63 |
| | merge_gpm_idx0[ ][ ] | TR | cMax = MaxNumGpmMergeCand − 1, cRiceParam = 0 |
| | merge_gpm_idx1[ ][ ] | TR | cMax = MaxNumGpmMergeCand − 2, cRiceParam = 0 |
| | merge_idx[ ][ ] | TR | cMax = ( CuPredMode[ 0 ][ x0 ][ y0 ] != MODE_IBC ? MaxNumMergeCand : MaxNumIbcMergeCand ) − 1, cRiceParam = 0 |

In Table 22, N, the cMax value of affine_mmvd_base_merge_cand_idx[][], and n, the cRiceParam value, are an integer, which may be a value predefined in an image decoding apparatus 200 or may be signaled through HLS such as SPS, PPS, PH, SH, etc. M, the cMax value of affine_mmvd_cand_group_idx[] [], is a non-zero integer, which may be a value predefined in an image decoding apparatus 200 or may be signaled through HLS such as SPS, PPS, PH, SH, etc. K, the cMax value of affine_mmvd_cand_idx[][], and k, the cRiceParam value, are an integer, which may be a value predefined in an image decoding apparatus 200 or may be signaled through HLS such as SPS, PPS, PH, SH, etc.

A syntax indicated as FL may be encoded and decoded through a fixed-length binarization process in Table 14, and a syntax indicated as TR may be encoded and decoded through a truncated rice binarization process in Table 14.

Embodiment 2-1

Embodiment 2-1 is an embodiment of a method for constructing a merge candidate list. Methods proposed through Embodiment 2-1 may be performed by an image encoding apparatus 100 and/or an image decoding apparatus 200. A merge candidate list may be referred to as a base merge candidate list.

The process of constructing a merge candidate list may perform the process of circulating motion information that has been decoded. FIG. 21 is a flowchart representing the circulation of motion information in an image encoding/decoding method utilizing a MMVD, and FIG. 22 is a flowchart representing the circulation of motion information in an image encoding/decoding method utilizing an affine MMVD.

Referring to FIG. 21, motion information may be circulated in the order of a spatial candidate S2110, a temporal candidate S2120, a non-adjacent spatial candidate S2130, a candidate in a historical buffer S2140, a pair-wise candidate S2150, a candidate in an affine historical buffer S2160 and a zero motion candidate S2170.

Referring to FIG. 22, motion information may be circulated in the order of a sub-block-based TMVP (SbTMVP) S2220, an inherited spatial affine candidate S2230, an inherited non-adjacent spatial affine candidate S2240, a constructed affine candidate S2250, an affine candidate in a historical affine buffer S2260, a constructed non-adjacent affine candidate S2270, a pair-wise affine candidate S2280 and a zero motion affine candidate S2290. However, when an affine MMVD mode is applied, circulation may start from an inherited spatial affine candidate S2230 without reviewing a sub-block-based TMVP (SbTMVP) S2220.

In the process of constructing a merge candidate list, only motion information decoded by bi-prediction may be added to a merge candidate list or motion information decoded by bi-prediction may be added to a merge candidate list with a higher priority than motion information decoded by uni-prediction.

When only motion information decoded by bi-prediction is added to a merge candidate list, 288 (96) combined MMVD candidates may be added to a MMVD candidate list without considering the prediction direction of a prediction candidate in the process of constructing a MMVD candidate list performed thereafter, thereby improving compression efficiency.

When motion information decoded by bi-prediction is added to a merge candidate list with a higher priority than motion information decoded by uni-prediction, 288 (96) combined MMVD candidates may be added to a MMVD candidate list with a high probability in the process of constructing a MMVD candidate list performed thereafter, thereby improving compression efficiency.

According to embodiments, motion information that may be expressed by a combination of a MVD and a merge candidate in a merge candidate list may not be added to a merge candidate list. Through this, redundancy of a MMVD candidate may be removed and compression efficiency may be improved.

As another example, motion information that may be expressed by a combination of a merge candidate and a MVD may be added to a merge candidate list when a predetermined condition is satisfied. A predetermined condition may be as follows.

Between a prediction candidate in a merge candidate list and a prediction candidate to be added,

1. When BCW indices (a bidirectional weight index) is different from each other
2. When reference picture indices is different from each other
3. When different interpolation filters are used
4. When a difference between the X-axis sizes of motion information is greater than a predefined threshold value N
5. When a difference between the Y-axis sizes of motion information is greater than a predefined threshold value N

According to embodiments, without considering a predefined size (the maximum number of merge candidates) for a merge candidate list, a merge candidate list may be constructed by including a larger number of merge candidates than a predefined size.

According to the conventional technology, the maximum number of merge candidates that may be included in a merge candidate list is determined as a smaller value of a predefined value 3 or an allowable number derived by a signaled syntax. In other words, when a predefined value is 3 and an allowable number derived is greater than 3, the conventional method terminates the process of constructing a merge candidate without additional circulation when three motion information (merge candidates) is derived.

However, the present invention may construct a merge candidate list with a number of merge candidates corresponding to a larger value of N and M when a predefined value is N and an allowable number derived is M. Here, N and M are an integer.

Embodiment 2-2

Embodiment 2-2 is an embodiment of a method for reordering a merge candidate list. When merge candidates in a merge candidate list are reordered, relatively fewer bits may be allocated to signaling of an index for selecting a merge candidate, so bit efficiency and compression efficiency may be improved.

According to embodiments, among the merge candidates in a merge candidate list, a bidirectionally predicted merge candidate may be reordered to have a higher priority than a unidirectionally predicted merge candidate. Examples of this method are shown in Tables 23 to 25.

In Tables 23 to 25, motion information in each motion prediction direction is expressed as (x-axis motion vector, y-axis motion vector, reference picture index), and when a reference picture index is -1, it represents that motion information is not available. For example, L1 motion information of index 0 in Table 23 is not available, which represents that the merge candidate of index 0 is a uni-prediction candidate consisting only of motion information in a L0 prediction direction.

[Table 23]

| Index | L0 Motion Information | L1 Motion Information |
|---|---|---|
| 0 | (20, -10, 2) | (0, 0, -1) |
| 1 | (0, 0, -1) | (10, 10, 0) |
| 2 | (0, -12, 2) | (2,10,1) |
| 3 | (10, -50, 1) | (0, 0, -1) |
| 4 | (7, 0, 0) | (20, -10, 2) |
| 5 | (1, -5, 0) | (0, 0, -1) |
| 6 | (0, 0, -1) | (20, -10, 2) |

When a merge candidate list is constructed as in Table 23, merge candidate 2 consisting of bi-prediction candidates may be reordered to be ranked before merge candidate 0 consisting only of uni-prediction information. In other words, a bidirectionally predicted merge candidate among the subsequent merge candidates may be searched while circulating merge candidates, and only when bi-prediction is available, a corresponding bi-prediction mode may be reordered to be in preceding order. For example, since motion information of index 0 is uni-prediction, motion information of index 2 in subsequent order is reordered to be candidate 0 and candidates of index 0 and index 1 are shifted in subsequent order.

[Table 24]

| Index | L0 Motion Information | L1 Motion Information |
|---|---|---|
| 0 | (0, -12, 2) | (2, 10, 1) |
| 1 | (20, -10, 2) | (0, 0, -1) |
| 2 | (0, 0, -1) | (10, 10, 0) |
| 3 | (10, -50, 1) | (0, 0, -1) |
| 4 | (7, 0, 0) | (20, -10, 2) |
| 5 | (1, -5, 0) | (0, 0, -1) |
| 6 | (0, 0, -1) | (20, -10, 2) |

In Table 24, since the merge candidate of index 1 is unidirectional motion information and motion information of index 4 among the subsequent merge candidates is bidirectional motion information, the merge candidate of index 4 may be reordered to precede index 1. In this case, merge candidates of the existing indexes 1, 2 and 3 may be shifted in subsequent order.

This reordering may be terminated when subsequent bidirectional motion information no longer exists. When a value predetermined for the number of merge candidates in a merge candidate list is N, a reordering process may be terminated when N bidirectional merge candidates precede. In addition, when the number of merge candidates in a merge candidate list is M, a reordering process may be terminated when all circulations for M merge candidates are completed.

The reordering result of a merge candidate list in Table 24 is shown in Table 25.

[Table 25]

| Index | L0 Motion Information | L1 Motion Information |
|---|---|---|
| 0 | (0, -12, 2) | (2, 10, 1) |
| 1 | (7, 0, 0) | (20, -10, 2) |
| 2 | (20, -10, 2) | (0, 0, -1) |
| 3 | (0, 0, -1) | (10, 10, 0) |
| 4 | (10, -50, 1) | (0, 0, -1) |
| 5 | (1, -5, 0) | (0, 0, -1) |

(continued)

| Index | L0 Motion Information | L1 Motion Information |
|---|---|---|
| 6 | (0, 0, -1) | (20, -10, 2) |

According to another embodiment, the error (cost) of merge candidates in a merge candidate list may be calculated by an image decoding apparatus 200, and merge candidates may be reordered based on an error. The error calculation of merge candidates may be performed based on a bi-lateral matching error or a template matching error. Examples of this method are shown in Table 26 and Table 27.

[Table 26]

| Index | L0 Motion Information | L1 Motion Information | cost |
|---|---|---|---|
| 0 | (20, -10, 2) | (0, 0, -1) | 1000 |
| 1 | (0, 0, -1) | (10, 10, 0) | 400 |
| 2 | (0, -12, 2) | (2, 10, 1) | 3000 |
| 3 | (10, -50, 1) | (0, 0, -1) | 200 |
| 4 | (7, 0, 0) | (20, -10, 2) | 100 |
| 5 | (1, -5, 0) | (0, 0, -1) | 2000 |
| 6 | (0, 0, -1) | (20, -10, 2) | 5000 |

[Table 27]

| Index | L0 Motion Information | L1 Motion Information | cost |
|---|---|---|---|
| 0 | (7, 0, 0) | (20, -10, 2) | 100 |
| 1 | (10, -50, 1) | (0, 0, -1) | 200 |
| 2 | (0, 0, -1) | (10, 10, 0) | 400 |
| 3 | (20, -10, 2) | (0, 0, -1) | 1000 |
| 4 | (1,-5,0) | (0, 0, -1) | 2000 |
| 5 | (0, -12, 2) | (2,10,1) | 3000 |
| 6 | (0, 0, -1) | (20, -10, 2) | 5000 |

Table 26 represents merge candidates in a merge candidate list before reordering, and values in the last column represent the bi-lateral matching error or template matching error of each merge candidate. When merge candidates are reordered in ascending order based on an error, a merge candidate with a small error may be reordered in preceding order, as in Table 27.

Embodiment 2-3

Embodiment 2-3 is an embodiment of a method for selecting any one of the merge candidates in a merge candidate list. A merge candidate may be selected by a syntax signaled through a bitstream, and a syntax may be mmvd_base_merge_cand_idx in Table 12 or affine_mmvd_base_merge_cand_idx in Table 19.

For example, when the allowable number of merge candidate lists (the maximum number of merge candidates) is 2, a bit for each index may be signaled as in Table 28 and Table 29, and a corresponding index represents the index value of a reordered merge candidate list.

[Table 28]

| Index | mmvd_base_merge_cand_idx[][] |
|---|---|
| 0 | 0 |
| 1 | 1 |

[Table 29]

| Index | affine_mmvd_base_merge_cand_idx[][] |
|---|---|
| 0 | 0 |
| 1 | 1 |

When the allowable number of merge candidate lists (the maximum number of merge candidates) is 1, no separate syntax is signaled, and the merge candidate of index 0 in a reordered merge candidate list may be selected.

As another example, when the allowable number of candidate lists (the maximum number of merge candidates) is 3, a bit for each index may be signaled as in Table 30 and Table 31, and a corresponding index represents the index value of a rearranged merge candidate list.

[Table 30]

| Index | mmvd_base_merge_cand_idx[][] |
|---|---|
| 0 | 0 |
| 1 | 10 |
| 2 | 11 |

[Table 31]

| Index | affine_mmvd_base_merge_cand_idx[][] |
|---|---|
| 0 | 0 |
| 1 | 10 |
| 2 | 11 |

In summary, when the allowable number of candidate lists (the maximum number of merge candidates) is N, at least 0 bit and at most N-1 bits may be signaled for each index. The value of N may be signaled through HLS such as SPS/PPS/PH/SH, etc. or may be predefined in an image encoding apparatus 100 and an image decoding apparatus 200.

Embodiment 2-4

Embodiment 2-4 is an embodiment of a method for constructing a MMVD candidate list.

For constructing a MMVD candidate list, N MVD direction information and M MVD size information may be supported. In other words, for a selected merge candidate, NxMx3 combinations may be supported as a MMVD candidate to construct a MMVD candidate list. In this process, NxMx3 MMVD candidates may be divided into Z groups, and one list may be constructed for each group. N, M and Z may be an integer greater than 0, and may be derived from a value predefined in an image decoding apparatus 200.

One group may be composed of (NxMx3)/Z MMVD candidates. The criterion for division into Z groups may be a MVD direction or a MVD size. The criterion for division into Z groups may be applied equally to each CPMV.

Various embodiments of how to group MMVD candidates according to a MVD direction are as follows.

An example of a case in which MMVD candidates are divided into two groups (group index 0 and group index 1) according to a MVD direction is shown in Table 32 and FIG. 23(a).

[Table 32]

| Index | X-axis Direction | Y-axis Direction | Group Index |
|---|---|---|---|
| 0 | +1 | 0 | 0 |
| 1 | -1 | 0 | 1 |
| 2 | 0 | +1 | 0 |
| 3 | 0 | -1 | 1 |
| 4 | +1 | +1 | 0 |
| 5 | -1 | -1 | 1 |

(continued)

| Index | X-axis Direction | Y-axis Direction | Group Index |
|---|---|---|---|
| 6 | 0 | -1 | 0 |
| 7 | -1 | +1 | 1 |
| 8 | +2 | +1 | 0 |
| 9 | -2 | -1 | 1 |
| 10 | -2 | +1 | 0 |
| 11 | +2 | -1 | 1 |
| 12 | +1 | +2 | 0 |
| 13 | -1 | -2 | 1 |
| 14 | -1 | +2 | 0 |
| 15 | 1 | -2 | 1 |

A motion direction (a X-axis direction and a Y-axis direction) in Table 32 means that MMVD candidates are grouped per motion direction as shown in FIG. 23(a).

An example of a case in which MMVD candidates are divided into four groups (group index 0 to group index 3) according to a MVD direction is shown in Table 33 and FIG. 23(b).

[Table 33]

| Index | X-axis Direction | Y-axis Direction | Group Index |
|---|---|---|---|
| 0 | +1 | 0 | 0 |
| 1 | -1 | 0 | 1 |
| 2 | 0 | +1 | 2 |
| 3 | 0 | -1 | 3 |
| 4 | +1 | +1 | 0 |
| 5 | -1 | -1 | 1 |
| 6 | 0 | -1 | 3 |
| 7 | -1 | +1 | 2 |
| 8 | +2 | +1 | 0 |
| 9 | -2 | -1 | 2 |
| 10 | -2 | +1 | 3 |
| 11 | +2 | -1 | 1 |
| 12 | +1 | +2 | 0 |
| 13 | -1 | -2 | 3 |
| 14 | -1 | +2 | 2 |
| 15 | 1 | -2 | 1 |

Another example of a case in which MMVD candidates are divided into four groups (group index 0 to group index 3) according to a MVD direction is shown in Table 34 and FIG. 23(c).

[Table 34]

| Index | X-axis Direction | Y-axis Direction | Group Index |
|---|---|---|---|
| 0 | +1 | 0 | 3 |
| 1 | -1 | 0 | 2 |

(continued)

| Index | X-axis Direction | Y-axis Direction | Group Index |
|---|---|---|---|
| 2 | 0 | +1 | 0 |
| 3 | 0 | -1 | 1 |
| 4 | +1 | +1 | 0 |
| 5 | -1 | -1 | 1 |
| 6 | 0 | -1 | 3 |
| 7 | -1 | +1 | 2 |
| 8 | +2 | +1 | 0 |
| 9 | -2 | -1 | 2 |
| 10 | -2 | +1 | 3 |
| 11 | +2 | -1 | 1 |
| 12 | +1 | +2 | 0 |
| 13 | -1 | -2 | 3 |
| 14 | -1 | +2 | 2 |
| 15 | 1 | -2 | 1 |

Another example of a case in which MMVD candidates are divided into two groups (group index 0 and group index 1) according to a MVD direction is shown in Table 35 and FIG. 24A(a).

[Table 35]

| Index | X-axis Direction | Y-axis Direction | Group Index |
|---|---|---|---|
| 0 | +1 | 0 | 0 |
| 1 | -1 | 0 | 1 |
| 2 | 0 | +1 | 0 |
| 3 | 0 | -1 | 1 |
| 4 | +1 | +1 | 0 |
| 5 | -1 | -1 | 1 |
| 6 | 0 | -1 | 0 |
| 7 | -1 | +1 | 1 |

A motion direction (a X-axis direction and a Y-axis direction) in Table 35 means that MMVD candidates are grouped per motion direction as shown in FIG. 24(a).

Another example of a case in which MMVD candidates are divided into two groups (group index 0 and group index 1) according to a MVD direction is shown in Table 36 and FIG. 24A(b).

[Table 36]

| Index | X-axis Direction | Y-axis Direction | Group Index |
|---|---|---|---|
| 0 | +1 | 0 | 0 |
| 1 | -1 | 0 | 1 |
| 2 | 0 | +1 | 0 |
| 3 | 0 | -1 | 1 |
| 4 | +1 | +1 | 0 |
| 5 | -1 | -1 | 1 |

(continued)

| Index | X-axis Direction | Y-axis Direction | Group Index |
|---|---|---|---|
| 6 | 0 | -1 | 1 |
| 7 | -1 | +1 | 0 |

A motion direction (a X-axis direction and a Y-axis direction) in Table 36 means that MMVD candidates are grouped per motion direction as shown in FIG. 24(b).

Another example of a case in which MMVD candidates are divided into two groups (group index 0 and group index 1) according to a MVD direction is shown in Table 37 and FIG. 24A(c).

[Table 37]

| Index | X-axis Direction | Y-axis Direction | Group Index |
|---|---|---|---|
| 0 | +1 | 0 | 0 |
| 1 | -1 | 0 | 0 |
| 2 | 0 | +1 | 0 |
| 3 | 0 | -1 | 0 |
| 4 | +1 | +1 | 1 |
| 5 | -1 | -1 | 1 |
| 6 | 0 | -1 | 1 |
| 7 | -1 | +1 | 1 |

A motion direction (a X-axis direction and a Y-axis direction) in Table 37 means that MMVD candidates are grouped per motion direction as shown in FIG. 24A(c).

Another example of a case in which MMVD candidates are divided into four groups (group index 0 to group index 3) according to a MVD direction is shown in Table 38 and FIG. 24A(d).

[Table 38]

| Index | X-axis Direction | Y-axis Direction | Group Index |
|---|---|---|---|
| 0 | +1 | 0 | 0 |
| 1 | -1 | 0 | 1 |
| 2 | 0 | +1 | 2 |
| 3 | 0 | -1 | 3 |
| 4 | +1 | +1 | 0 |
| 5 | -1 | -1 | 1 |
| 6 | 0 | -1 | 3 |
| 7 | -1 | +1 | 2 |

Another example of a case in which MMVD candidates are divided into four groups (group index 0 to group index 3) according to a MVD direction is shown in Table 39 and FIG. 24B(e).

[Table 39]

| Index | X-axis Direction | Y-axis Direction | Group Index |
|---|---|---|---|
| 0 | +1 | 0 | 3 |
| 1 | -1 | 0 | 2 |
| 2 | 0 | +1 | 0 |

(continued)

| Index | X-axis Direction | Y-axis Direction | Group Index |
|---|---|---|---|
| 3 | 0 | -1 | 1 |
| 4 | +1 | +1 | 0 |
| 5 | -1 | -1 | 1 |
| 6 | 0 | -1 | 3 |
| 7 | -1 | +1 | 2 |

Another example of a case in which a total of 16 (N=16) MMVD candidates are divided into two groups (group index 0 and group index 2) according to a MVD direction is shown in Table 40 and FIG. 24B(f).

[Table 40]

| Index | X-axis Direction | Y-axis Direction | Group Index |
|---|---|---|---|
| 0 | +1 | 0 | 0 |
| 1 | -1 | 0 | 1 |
| 2 | 0 | +1 | 0 |
| 3 | 0 | -1 | 1 |
| 4 | +1 | +1 | 0 |
| 5 | -1 | -1 | 1 |
| 6 | 0 | -1 | 0 |
| 7 | -1 | +1 | 1 |
| 8 | +2 | +1 | 0 |
| 9 | -2 | -1 | 1 |
| 10 | -2 | +1 | 0 |
| 11 | +2 | -1 | 1 |
| 12 | +1 | +2 | 0 |
| 13 | -1 | -2 | 1 |
| 14 | -1 | +2 | 0 |
| 15 | 1 | -2 | 1 |

Another example of a case in which a total of 16 (N=16) MMVD candidates are divided into four groups (group index 0 to group index 3) according to a MVD direction is shown in Table 41 and FIG. 24B(g).

[Table 41]

| Index | X-axis Direction | Y-axis Direction | Group Index |
|---|---|---|---|
| 0 | +1 | 0 | 0 |
| 1 | -1 | 0 | 1 |
| 2 | 0 | +1 | 2 |
| 3 | 0 | -1 | 3 |
| 4 | +1 | +1 | 0 |
| 5 | -1 | -1 | 1 |
| 6 | 0 | -1 | 3 |
| 7 | -1 | +1 | 2 |

(continued)

| Index | X-axis Direction | Y-axis Direction | Group Index |
|---|---|---|---|
| 8 | +2 | +1 | 0 |
| 9 | -2 | -1 | 2 |
| 10 | -2 | +1 | 3 |
| 11 | +2 | -1 | 1 |
| 12 | +1 | +2 | 0 |
| 13 | -1 | -2 | 3 |
| 14 | -1 | +2 | 2 |
| 15 | 1 | -2 | 1 |

Another example of a case in which a total of 16 (N=16) MMVD candidates are divided into four groups (group index 0 to group index 3) according to a MVD direction is shown in Table 42 and FIG. 24B(h).

[Table 42]

| Index | X-axis Direction | Y-axis Direction | Group Index |
|---|---|---|---|
| 0 | +1 | 0 | 3 |
| 1 | -1 | 0 | 2 |
| 2 | 0 | +1 | 0 |
| 3 | 0 | -1 | 1 |
| 4 | +1 | +1 | 0 |
| 5 | -1 | -1 | 1 |
| 6 | 0 | -1 | 3 |
| 7 | -1 | +1 | 2 |
| 8 | +2 | +1 | 0 |
| 9 | -2 | -1 | 2 |
| 10 | -2 | +1 | 3 |
| 11 | +2 | -1 | 1 |
| 12 | +1 | +2 | 0 |
| 13 | -1 | -2 | 3 |
| 14 | -1 | +2 | 2 |
| 15 | 1 | -2 | 1 |

In various grouping methods described above, a group index is divided from 0 to 1 or from 0 to 3 for convenience of a description, and a number showing a group index may be expressed as a different number.

Meanwhile, various embodiments of a method for grouping MMVD candidates according to the size of a MVD are as follows.

Examples of a case in which MMVD candidates are divided into two groups (group index 0 and group index 1) according to the size of six available MVDs are shown in Tables 43 and 44.

[Table 43]

| | Index | 0 | 1 | 2 | 3 | 4 | 5 |
|---|---|---|---|---|---|---|---|
| CASE 1 | MVD Size | 4/16 | 8/16 | 16/16 | 32/16 | 64/16 | 128/16 |
| CASE 2 | MVD Size | 16/16 | 32/16 | 64/16 | 128/16 | 256/16 | 512/16 |

(continued)

| | Index | 0 | 1 | 2 | 3 | 4 | 5 |
|---|---|---|---|---|---|---|---|
| | Group Index | 0 | 0 | 0 | 1 | 1 | 1 |

[Table 44]

| | Index | 0 | 1 | 2 | 3 | 4 | 5 |
|---|---|---|---|---|---|---|---|
| CASE 1 | MVD Size | 4/16 | 8/16 | 16/16 | 32/16 | 64/16 | 128/16 |
| CASE 2 | MVD Size | 16/16 | 32/16 | 64/16 | 128/16 | 256/16 | 512/16 |
| | Group Index | 0 | 1 | 0 | 1 | 0 | 1 |

Examples of a case in which MMVD candidates are divided into four groups (group index 0 to group index 3) according to the size of eight available MVDs are shown in Tables 45 and 46.

[Table 45]

| | Index | 0 | 1 | 2 | 3 | 4 | 5 | 6 | 7 |
|---|---|---|---|---|---|---|---|---|---|
| CASE 1 | MVD Size | 4/16 | 8/16 | 16/16 | 32/16 | 64/16 | 128/16 | 256/16 | 512/16 |
| CASE 2 | MVD Size | 16/16 | 32/16 | 64/16 | 128/16 | 256/16 | 512/16 | 1024/16 | 2048/16 |
| | Group Index | 0 | 0 | 1 | 1 | 2 | 2 | 3 | 3 |

[Table 46]

| | Index | 0 | 1 | 2 | 3 | 4 | 5 | 6 | 7 |
|---|---|---|---|---|---|---|---|---|---|
| CASE 1 | MVD Size | 4/16 | 8/16 | 16/16 | 32/16 | 64/16 | 128/16 | 256/16 | 512/16 |
| CASE 2 | MVD Size | 16/16 | 32/16 | 64/16 | 128/16 | 256/16 | 512/16 | 1024/16 | 2048/16 |
| | Group Index | 0 | 1 | 2 | 3 | 0 | 1 | 2 | 3 |

Embodiment 2-5

Embodiment 2-5 is an embodiment of a method for reordering a MMVD candidate list. When a MMVD candidate list is constructed by compensating a MVD for a selected merge candidate, MMVD candidates in a MMVD candidate list may be reordered. When MMVD candidates are reordered, the amount of bits of information signaled through a bitstream to derive a MMVD candidate index may be minimized, and compression efficiency may be refined.

As described in Embodiment 2-4, when MMVD candidates are grouped, the reordering of MMVD candidates may be performed in a group unit. For example, when two groups exist, the reordering of two groups may be performed, respectively. When it is assumed that the number of MMVD candidates is 288, a MMVD candidate list may be constructed as in Table 47.

[Table 47]

| Index | |
|---|---|
| 0 | Candidate0 |
| 1 | Candidate 1 |
| 2 | Candidate1 |
| 3 | Candidate 3 |
| 4 | Candidate 4 |
| 5 | Candidate 5 |
| 6 | Candidate 6 |
| 7 | Candidate 7 |

(continued)

| Index | |
|---|---|
| 8 | Candidate 8 |
| 9 | Candidate 9 |
| 10 | Candidate 10 |
| 11 | Candidate 11 |
| 12 | Candidate 12 |
| ... | |
| 284 | Candidate 284 |
| 285 | Candidate 285 |
| 286 | Candidate 286 |
| 287 | Candidate 287 |

In this case, when MMVD candidates are divided into two groups, a MMVD candidate list may be constructed by including 144 MMVD candidates for each group as in Table 48.

[Table 48]

| Index | Group 0 | Group 1 |
|---|---|---|
| 0 | Candidate0 | Candidate 144 |
| 1 | Candidate 1 | Candidate 145 |
| 2 | Candidate 2 | Candidate 146 |
| 3 | Candidate 3 | Candidate 147 |
| 4 | Candidate 4 | Candidate 148 |
| 5 | Candidate 5 | Candidate 149 |
| 6 | Candidate 6 | Candidate 150 |
| 7 | Candidate 7 | Candidate 151 |
| 8 | Candidate 8 | Candidate 152 |
| 9 | Candidate 9 | Candidate 153 |
| 10 | Candidate 10 | Candidate 154 |
| 11 | Candidate 11 | Candidate 155 |
| 12 | Candidate 12 | Candidate 156 |
| ... | | |
| 143 | Candidate 143 | Candidate 287 |

Group unit lists (grouped MMVD candidate lists) in Table 48 may be reordered as in Tables 49 and 50 based on reordering methods proposed in the present invention.

[Table 49]

| Index | Group 0 |
|---|---|
| 0 | Candidate2 |
| 1 | Candidate 1 |
| 2 | Candidate 0 |
| 3 | Candidate 3 |

(continued)

| Index | Group 0 |
|---|---|
| 4 | Candidate 5 |
| 5 | Candidate 43 |
| 6 | Candidate 6 |
| 7 | Candidate 7 |
| 8 | Candidate 134 |
| 9 | Candidate 9 |
| 10 | Candidate 10 |
| 11 | Candidate 11 |
| 12 | Candidate 12 |
| ... | |
| 143 | Candidate 143 |

[Table 50]

| Index | Group 1 |
|---|---|
| 144+0 | Candidate 228 |
| 144+1 | Candidate 145 |
| 144+2 | Candidate 144 |
| 144+3 | Candidate 200 |
| 144+4 | Candidate 148 |
| 144+5 | Candidate 231 |
| 144+6 | Candidate 180 |
| 144+7 | Candidate 191 |
| 144+8 | Candidate 252 |
| 144+9 | Candidate 173 |
| 144+10 | Candidate 214 |
| 144+11 | Candidate 155 |
| 144+12 | Candidate 156 |
| ... | |
| 144+143 | Candidate 287 |

he process of merging (combining) MMVD candidate lists reordered in a group unit into one list may be performed. For example, as shown in Table 51, one integrated MMVD candidate list may be constructed by arranging MMVD candidates in a MMVD candidate lists reordered in a group unit in grid order.

[Table 51]

| Index | Group 0 |
|---|---|
| 0 | Candidate2 |
| 1 | Candidate 228 |
| 2 | Candidate 1 |
| 3 | Candidate 145 |
| 4 | Candidate 0 |

(continued)

| Index | Group 0 |
|---|---|
| 5 | Candidate 144 |
| 6 | Candidate 3 |
| 7 | Candidate 200 |
| 8 | Candidate 5 |
| 9 | Candidate 148 |
| ... | |
| 286 | Candidate 143 |
| 287 | Candidate 287 |

Meanwhile, when it is assumed that the number of MMVD candidates is 96, a MMVD candidate list may be constructed as in Table 52.

[Table 52]

| Index | |
|---|---|
| 0 | Candidate0 |
| 1 | Candidate 1 |
| 2 | Candidate 2 |
| 3 | Candidate 3 |
| 4 | Candidate 4 |
| 5 | Candidate 5 |
| 6 | Candidate 6 |
| 7 | Candidate 7 |
| 8 | Candidate 8 |
| 9 | Candidate 9 |
| 10 | Candidate 10 |
| 11 | Candidate 11 |
| 12 | Candidate 12 |
| ... | |
| 92 | Candidate 92 |
| 93 | Candidate 93 |
| 94 | Candidate 94 |
| 95 | Candidate 95 |

In this case, when MMVD candidates are divided into two groups, a MMVD candidate list may be constructed by including 48 MMVD candidates for each group as in Table 53.

[Table 53]

| Index | Group 0 | Group 1 |
|---|---|---|
| 0 | Candidate 0 | Candidate 48 |
| 1 | Candidate 1 | Candidate 49 |
| 2 | Candidate 2 | Candidate 50 |

(continued)

| Index | Group 0 | Group 1 |
|---|---|---|
| 3 | Candidate 3 | Candidate 51 |
| 4 | Candidate 4 | Candidate 52 |
| 5 | Candidate 5 | Candidate 53 |
| 6 | Candidate 6 | Candidate 54 |
| 7 | Candidate 7 | Candidate 55 |
| 8 | Candidate 8 | Candidate 56 |
| 9 | Candidate 9 | Candidate 57 |
| 10 | Candidate 10 | Candidate 58 |
| 11 | Candidate 11 | Candidate 59 |
| 12 | Candidate 12 | Candidate 60 |
| ... | | |
| 47 | Candidate 47 | Candidate 95 |

Group unit lists (grouped MMVD candidate lists) in Table 53 may be reordered as in Tables 54 and 55 based on reordering methods proposed in the present invention.

[Table 54]

| Index | Group 0 |
|---|---|
| 0 | Candidate 2 |
| 1 | Candidate 1 |
| 2 | Candidate 0 |
| 3 | Candidate 3 |
| 4 | Candidate 5 |
| 5 | Candidate 42 |
| 6 | Candidate 6 |
| 7 | Candidate 7 |
| 8 | Candidate 25 |
| 9 | Candidate 9 |
| 10 | Candidate 10 |
| 11 | Candidate 11 |
| 12 | Candidate 12 |
| ... | |
| 47 | Candidate 43 |

[Table 55]

| Index | Group 1 |
|---|---|
| 48+0 | Candidate 48 |
| 48+1 | Candidate 51 |
| 48+2 | Candidate 54 |
| 48+3 | Candidate 60 |

(continued)

| Index | Group 1 |
|---|---|
| 48+4 | Candidate 73 |
| 48+5 | Candidate 81 |
| 48+6 | Candidate 47 |
| 48+7 | Candidate 85 |
| 48+8 | Candidate 67 |
| 48+9 | Candidate 93 |
| 48+10 | Candidate 94 |
| 48+11 | Candidate 95 |
| 48+12 | Candidate 66 |
| ... | |
| 48+47 | Candidate 87 |

The process of merging (combining) MMVD candidate lists reordered in a group unit into one list may be performed. For example, as shown in Table 56, one integrated MMVD candidate list may be constructed by arranging MMVD candidates in a MMVD candidate lists reordered in a group unit in grid order.

[Table 56]

| Index | Group 0 |
|---|---|
| 0 | Candidate 2 |
| 1 | Candidate 48 |
| 2 | Candidate 1 |
| 3 | Candidate 51 |
| 4 | Candidate 0 |
| 5 | Candidate 54 |
| 6 | Candidate 3 |
| 7 | Candidate 60 |
| 8 | Candidate 5 |
| 9 | Candidate 73 |
| ... | |
| 94 | Candidate 43 |
| 95 | Candidate 87 |

When an integrated MMVD candidate list is constructed through various examples described above, the process of selecting any one of the MMVD candidates in a corresponding list may be performed. As an example, the index of a MMVD candidate may be derived through mmvd_cand_group_idx and mmvd_cand_idx. In other words, the index value of a MMVD candidate to be selected may be derived as in Equation 6.

【Equation 6】

$$mmvdCandIdx = mmvd_cand_idx * Y + mmvd_cand_group_idx$$

In Equation 6, mmvdCandIdx refers to the index value of a MMVD candidate to be selected, and Y is an integer value and refers to the number of groups. For example, when there are two groups, the value of Y becomes 2.

As another example, the index of a MMVD candidate may be derived through affine_mmvd_cand_group_idx and affine_mmvd_cand_idx. In other words, the index value of a MMVD candidate to be selected may be derived as in Equation 7.

【Equation 7】

$$affinemmvdCandIdx = affine_mmvd_cand_idx * Y + affine_mmvd_cand_group_idx$$

In Equation 7, affinemmvdCandIdx refers to the index value of a MMVD candidate to be selected, and Y is an integer value and refers to the number of groups. For example, when there are two groups, the value of Y becomes 2.

Embodiment 2-6

Embodiment 2-6 is an embodiment of a method for determining motion information of a current block based on a reordered MMVD candidate list.

In order to determine motion information of a current block, indexes for representing any one of the MMVD candidates in a reordered MMVD candidate list may be signaled. Signaled indexes may be mmvd_cand_group_idx (a group index or group information) and mmvd_cand_idx (a candidate index or selection information), or may be affine_mmvd_cand_group_idx (a group index or group information) and affine_mmvd_cand_idx (a candidate index or selection information). Hereinafter, Embodiment 2-6 is described focusing on a case where mmvd_cand_group_idx and mmvd_cand_idx are signaled, but a description below may also be applied to a case where affine_mmvd_cand_group_idx and affine_mmvd_cand_idx are signaled.

A group index may be signaled when the number of groups is at least 2. For example, when the number of groups is 2 and a MMVD candidate to be selected is group 0, group index 0 may be signaled. As another example, when the number of groups is 2 and a MMVD candidate to be selected is group 1, group index 1 may be signaled. As another example, when the number of groups is 4 and a MMVD candidate to be selected is group 0, group index 00 may be signaled. As another example, when the number of groups is 4 and a MMVD candidate to be selected is group 1, group index 01 may be signaled. As another example, when the number of groups is 4 and a MMVD candidate to be selected is group 2, group index 10 may be signaled. As another example, when the number of groups is 4 and a MMVD candidate to be selected is group 3, group index 11 may be signaled. As another example, when the number of groups is 3 and a MMVD candidate to be selected is group 0, group index 0 or 1 may be signaled. As another example, when the number of groups is 3 and a MMVD candidate to be selected is group 1, group index 10, 00 or 01 may be signaled. As another example, when the number of groups is 3 and a MMVD candidate to be selected is group 2, group index 11, 01 or 00 may be signaled.

A candidate index may be encoded so that it may represent only a predefined specific integer number of reordered MMVD candidate lists of candidate X to minimize the number of bits. For example, when a candidate index is 0, 0 or 1 may be signaled. As another example, when a candidate index is 1, 10 or 01 may be signaled. As another example, when a candidate index is 2, 110 or 001 may be signaled. As another example, when a candidate index is 3, 1110 or 00001 may be signaled.

When a reordered MMVD candidate list is the same as in Table 57, the index of a MMVD candidate to be used as motion information of a current block may be derived as in Equation 8.

[Table 57]

| Index | Group Number | Candidate |
|---|---|---|
| 0 | Group 0 | Candidate 2 |
| 1 | Group 0 | Candidate 1 |
| 2 | Group 0 | Candidate 0 |
| 3 | Group 0 | Candidate 3 |
| 4 | Group 0 | Candidate 5 |
| 5 | Group 0 | Candidate 43 |
| 6 | Group 0 | Candidate 6 |
| 7 | Group 0 | Candidate 7 |
| 8 | Group 0 | Candidate 134 |
| 9 | Group 0 | Candidate 9 |
| 10 | Group 0 | Candidate 10 |

(continued)

| Index | Group Number | Candidate |
|---|---|---|
| 11 | Group 0 | Candidate 11 |
| 12 | Group 0 | Candidate 12 |
| ... | | |
| 143 | Group 0 | Candidate 143 |
| 144 | Group 1 | Candidate 228 |
| 145 | Group 1 | Candidate 145 |
| 146 | Group 1 | Candidate 144 |
| 147 | Group 1 | Candidate 200 |
| 148 | Group 1 | Candidate 148 |
| 149 | Group 1 | Candidate 231 |
| 150 | Group 1 | Candidate 180 |
| 151 | Group 1 | Candidate 191 |
| 152 | Group 1 | Candidate 252 |
| 153 | Group 1 | Candidate 173 |
| 154 | Group 1 | Candidate 214 |
| 155 | Group 1 | Candidate 155 |
| 156 | Group 1 | Candidate 156 |
| ... | | |
| 287 | Group 1 | Candidate 287 |

【Equation 8】

$$mmvdCandIdx = mmvd_cand_group_idx * (T) + mmvd_cand_idx$$

In Equation 8, mmvdCandIdx represents the index of a MMVD candidate to be selected, and T is an integer value and refers to the number of MMVD candidates constructing one group. For example, when 144 MMVD candidates construct one group, the value of T becomes 144.

As another example, when a reordered MMVD candidate list is the same as in Table 58, the index of a MMVD candidate to be used as motion information of a current block may be derived as in Equation 6.

[Table 58]

| Index | Group 0 |
|---|---|
| 0 | Candidate2 |
| 1 | Candidate 228 |
| 2 | Candidate 1 |
| 3 | Candidate 145 |
| 4 | Candidate 0 |
| 5 | Candidate 144 |
| 6 | Candidate 3 |
| 7 | Candidate 200 |
| 8 | Candidate 5 |
| 9 | Candidate 148 |

(continued)

| Index | Group 0 |
|---|---|
| ... | |
| 286 | Candidate 143 |
| 287 | Candidate 287 |

As another example, when a reordered MMVD candidate list is the same as in Table 59, the index of a MMVD candidate to be used as motion information of a current block may be derived as in Equation 9.

[Table 59]

| Index | Group Number | Candidate |
|---|---|---|
| 0 | Group 0 | Candidate 2 |
| 1 | Group 0 | Candidate 1 |
| 2 | Group 0 | Candidate 0 |
| 3 | Group 0 | Candidate 3 |
| 4 | Group 0 | Candidate 5 |
| 5 | Group 0 | Candidate 42 |
| 6 | Group 0 | Candidate 6 |
| 7 | Group 0 | Candidate 7 |
| 8 | Group 0 | Candidate 25 |
| 9 | Group 0 | Candidate 9 |
| 10 | Group 0 | Candidate 10 |
| 11 | Group 0 | Candidate 11 |
| 12 | Group 0 | Candidate 12 |
| ... | | |
| 48 | Group 0 | Candidate 43 |
| 49 | Group 1 | Candidate 48 |
| 50 | Group 1 | Candidate 51 |
| 51 | Group 1 | Candidate 54 |
| 52 | Group 1 | Candidate 60 |
| 53 | Group 1 | Candidate 73 |
| 54 | Group 1 | Candidate 81 |
| 55 | Group 1 | Candidate 47 |
| 56 | Group 1 | Candidate 85 |
| 57 | Group 1 | Candidate 67 |
| 58 | Group 1 | Candidate 93 |
| 59 | Group 1 | Candidate 94 |
| 60 | Group 1 | Candidate 95 |
| 61 | Group 1 | Candidate 66 |
| ... | | |
| 95 | Group 1 | Candidate 87 |

【Equation 9】

$$affineMmvdCandIdx = affine_mmvd_cand_group_idx * (T) + affine_mmvd_cand_idx$$

In Equation 9, affinemmvdCandIdx represents the index of a MMVD candidate to be selected, and T is an integer value and refers to the number of MMVD candidates constructing one group. For example, when 48 MMVD candidates construct one group, the value of T becomes 48.

As another example, when a reordered MMVD candidate list is the same as in Table 60, the index of a MMVD candidate to be used as motion information of a current block may be derived as in Equation 7.

[Table 60]

| Index | Group 0 |
|---|---|
| 0 | Candidate2 |
| 1 | Candidate 48 |
| 2 | Candidate 1 |
| 3 | Candidate 51 |
| 4 | Candidate 0 |
| 5 | Candidate 54 |
| 6 | Candidate 3 |
| 7 | Candidate 60 |
| 8 | Candidate 5 |
| 9 | Candidate 73 |
| ... | |
| 94 | Candidate 43 |
| 95 | Candidate 87 |

FIG. 25 shows an exemplary diagram of a content streaming system to which an embodiment of the present disclosure may be applied.

As shown in FIG. 25, the content streaming system to which an embodiment of the present disclosure is applied may broadly include an encoding server, a streaming server, a web server, a media storage, a user device, and a multimedia input device.

The encoding server compresses content input from multimedia input devices such as a smartphone, camera, or camcorder into digital data, generating a bitstream and transmitting it to the streaming server. As another example, when multimedia input devices such as a smartphone, camera, or camcorder directly generate a bitstream, the encoding server may be omitted.

The bitstream may be generated by the video encoding method and/or the image encoding apparatus to which an embodiment of the present disclosure is applied, and the streaming server may temporarily store the bitstream during the process of transmitting or receiving the bitstream.

The streaming server may transmit multimedia data to a user device based on a user request through the web server, and the web server may serve as an intermediary that informs user of available service. When a user requests a desired service from the web server, the web server may send the request to the streaming server, and the streaming server may transmit the multimedia data to the user. In this case, the content streaming system may include a separate control server, and in this case, a control server may function to control command/response exchanges between devices within the content streaming system.

The streaming server may receive content from a media storage and/or an encoding server. For example, when receiving content from the encoding server, the content may be received in real time. In this case, to provide a seamless streaming service, the streaming server may store the bitstream for a certain period of time.

Examples of the user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, and digital signage.

Each server within the content streaming system may be operated as a distributed server, in which case the data received by each server may be processed in a distributed manner.

The range of the present disclosure includes software or machine-executable instructions (i.e., an operating system, an application, firmware, a program, etc.) that enable operations according to the methods of various embodiments to be executed on a device or computer, and a non-transitory computer-readable medium in which such software or instructions are stored and executable on a device or computer.

[Industrial Applicability]

The embodiments of the present disclosure may be used for encoding/decoding an image.

## Claims

**1.** An image decoding method performed by an image decoding apparatus, comprising:

constructing a merge candidate list based on a prediction mode of a current block being a merge mode;
constructing a merge mode with motion vector difference (MMVD) candidate list based on a motion vector difference (MVD) available in a MMVD mode and a first merge candidate included in the merge candidate list;
reordering the MMVD candidate list; and
deriving motion information of the current block based on the reordered MMVD candidate list.

**2.** The method of Claim 1, wherein the merge candidate list is constructed by including only a bidirectionally predicted merge candidate.

**3.** The method of Claim 1, wherein the merge candidate list is constructed by including a bidirectionally predicted merge candidate at a higher rank than a unidirectionally predicted merge candidate.

**4.** The method of Claim 1, wherein based on a predetermined condition for a merge candidate included in the merge candidate list and a neighboring block being satisfied, the merge candidate list is constructed by including motion information of the neighboring block, and
wherein the predetermined condition includes at least one of bidirectional weight indices being different from each other, reference picture indices being different from each other, different interpolation filters being applied, or a difference between horizontal or vertical sizes of motion vectors exceeding a threshold value.

**5.** The method of Claim 1, wherein the first merge candidate is a merge candidate represented by selection information among at least one merge candidate included in the merge candidate list, and
wherein the selection information is obtained from a bitstream based on a number of merge candidates included in the merge candidate list being plural.

**6.** The method of Claim 5, wherein the merge candidate list is reordered, and
wherein the selection information represents the first merge candidate among at least one merge candidate included in the reordered merge candidate list.

**7.** The method of Claim 6, wherein the merge candidate list is reordered so that a bidirectionally predicted merge candidate has a higher rank than a unidirectionally predicted merge candidate.

**8.** The method of Claim 6, wherein the merge candidate list is reordered based on a template matching error of the at least one merge candidate included in the merge candidate list.

**9.** The method of Claim 1, wherein reordering the MMVD candidate list includes:

grouping MMVD candidates in the MMVD candidate list into a plurality of groups; and
reordering the grouped MMVD candidates.

**10.** The method of Claim 9, wherein the MMVD candidates in the MMVD candidate list are grouped based on at least one of a direction of the MVD and a size of the MVD.

**11.** The method of Claim 9, wherein the grouped MMVD candidates are reordered for each group.

**12.** The method of Claim 11, wherein the motion information of the current block is derived based on a MMVD candidate represented by selection information among MMVD candidates belonging to a group represented by group information.

**13.** An image encoding method performed by an image encoding apparatus, comprising:

constructing a merge candidate list based on a prediction mode of a current block being a merge mode;
constructing a merge mode with motion vector difference (MMVD) candidate list based on a motion vector difference (MVD) available in a MMVD mode and a first merge candidate included in the merge candidate list;
reordering the MMVD candidate list; and
deriving motion information of the current block based on the reordered MMVD candidate list.

**14.** A method for transmitting a bitstream generated by an image encoding method, the image encoding method comprising:

constructing a merge candidate list based on a prediction mode of a current block being a merge mode;
constructing a merge mode with motion vector difference (MMVD) candidate list based on a motion vector difference (MVD) available in a MMVD mode and a first merge candidate included in the merge candidate list;
reordering the MMVD candidate list; and
deriving motion information of the current block based on the reordered MMVD candidate list.

**15.** A computer-readable recording medium storing a bitstream generated by the image encoding method of Claim 13.

FIG.1

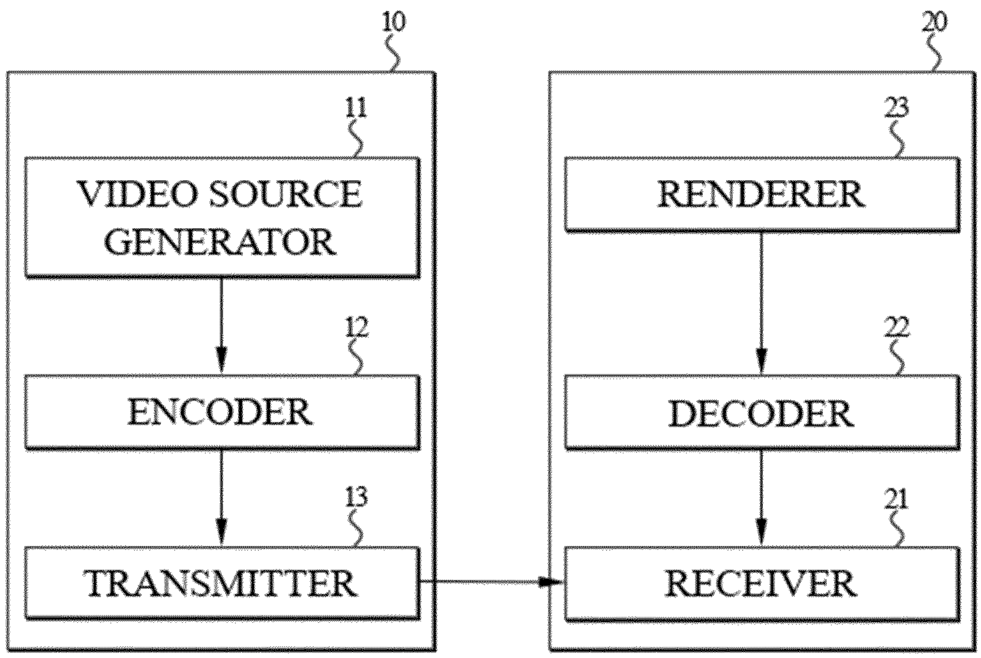
10
11
VIDEO SOURCE GENERATOR
12
ENCODER
13
TRANSMITTER
20
23
RENDERER
22
DECODER
21
RECEIVER

FIG.2

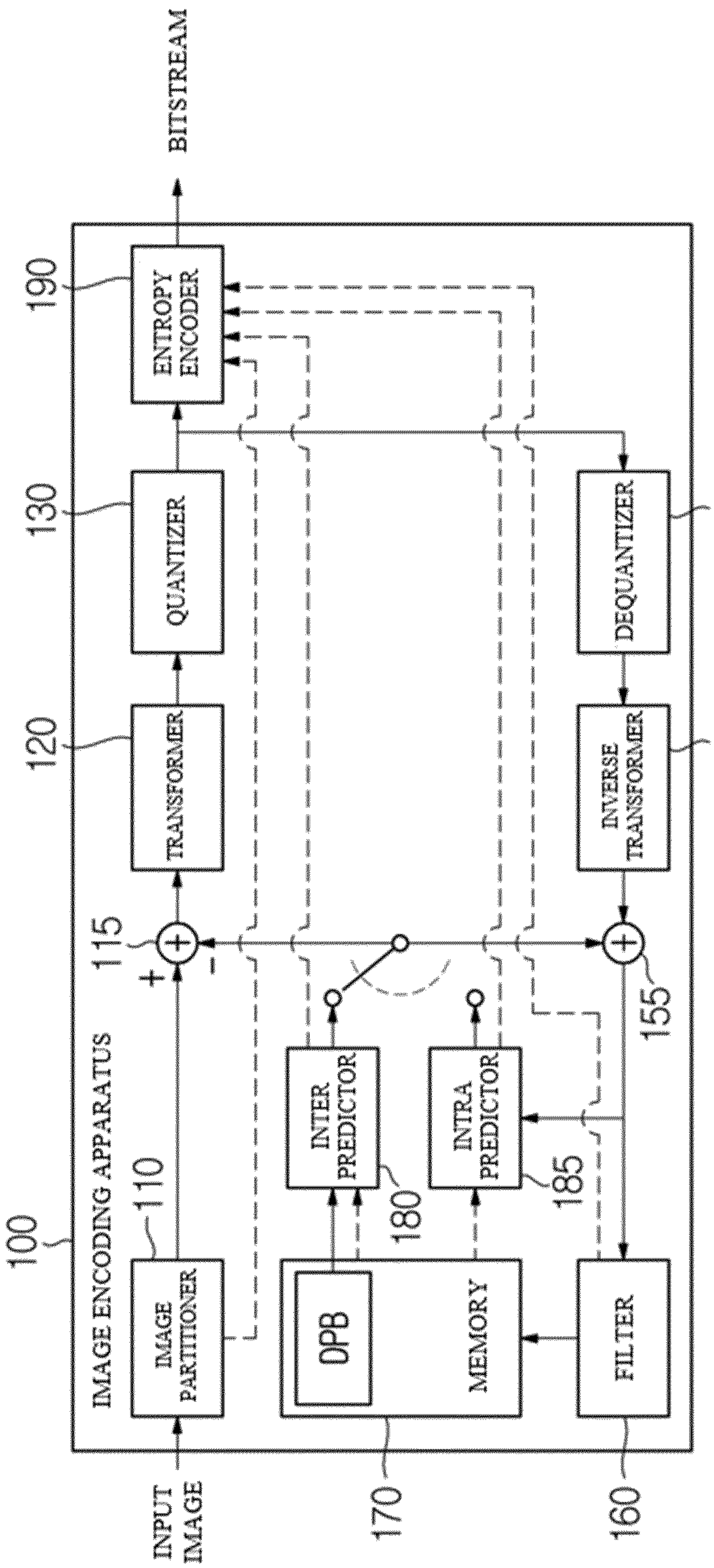
BITSTREAM
100
IMAGE ENCODING APPARATUS
INPUT IMAGE
110
IMAGE PARTITIONER
115
+
-
120
TRANSFORMER
130
QUANTIZER
190
ENTROPY ENCODER
140
DEQUANTIZER
150
INVERSE TRANSFORMER
155
160
FILTER
170
DPB
MEMORY
180
INTER PREDICTOR
185
INTRA PREDICTOR

FIG.3

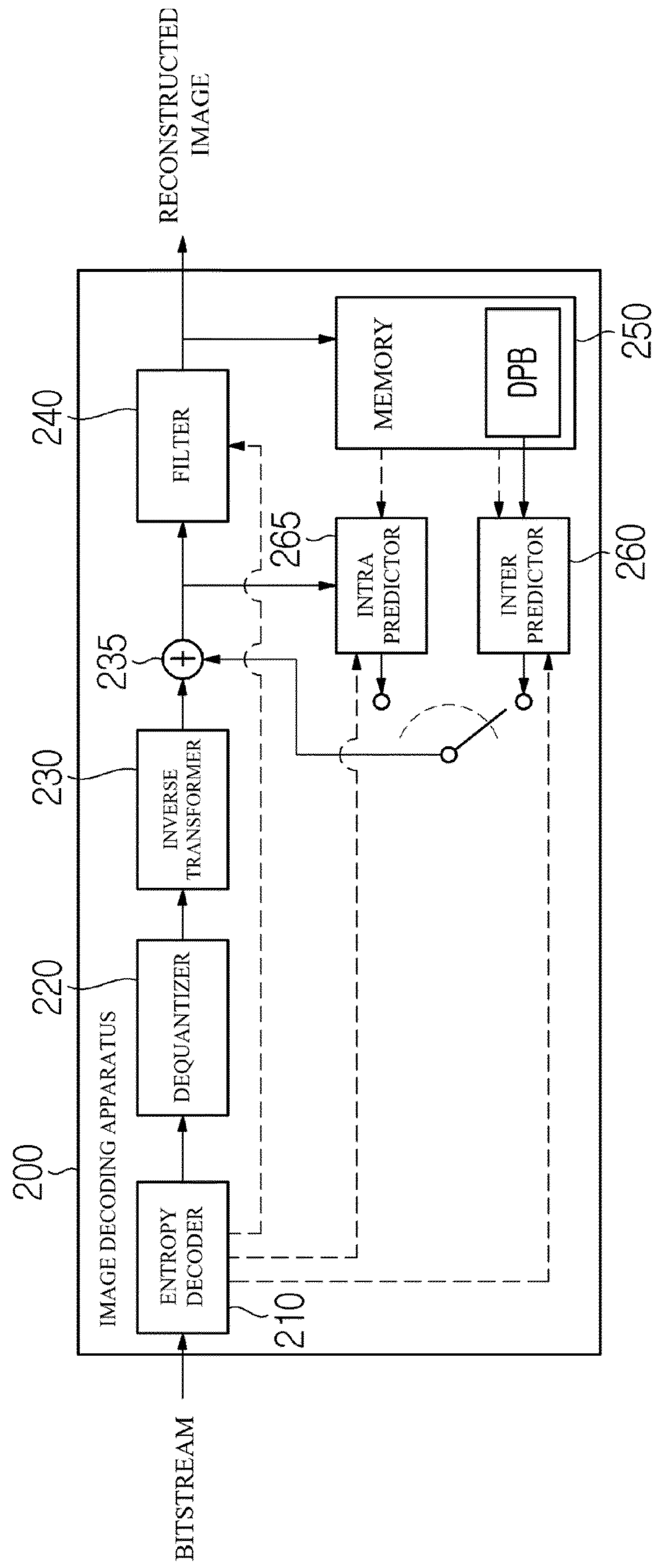
IMAGE DECODING APPARATUS
200
BITSTREAM
ENTROPY DECODER
210
DEQUANTIZER
220
INVERSE TRANSFORMER
230
235
FILTER
240
RECONSTRUCTED IMAGE
MEMORY
DPB
250
INTRA PREDICTOR
265
INTER PREDICTOR
260

FIG.4

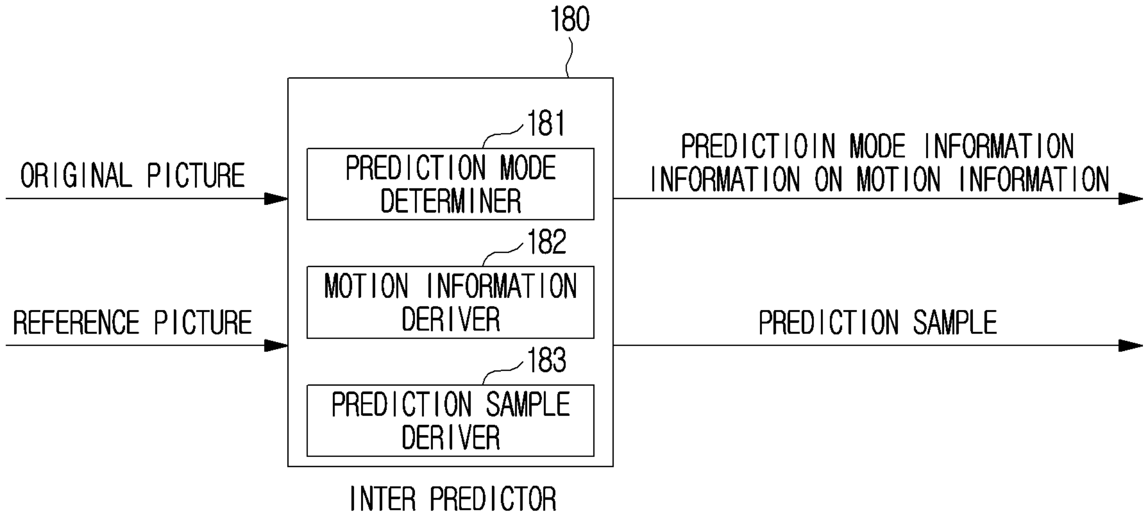
180
181
PREDICTION MODE DETERMINER
182
MOTION INFORMATION DERIVER
183
PREDICTION SAMPLE DERIVER
INTER PREDICTOR
ORIGINAL PICTURE
REFERENCE PICTURE
PREDICTIOIN MODE INFORMATION
INFORMATION ON MOTION INFORMATION
PREDICTION SAMPLE

FIG. 5

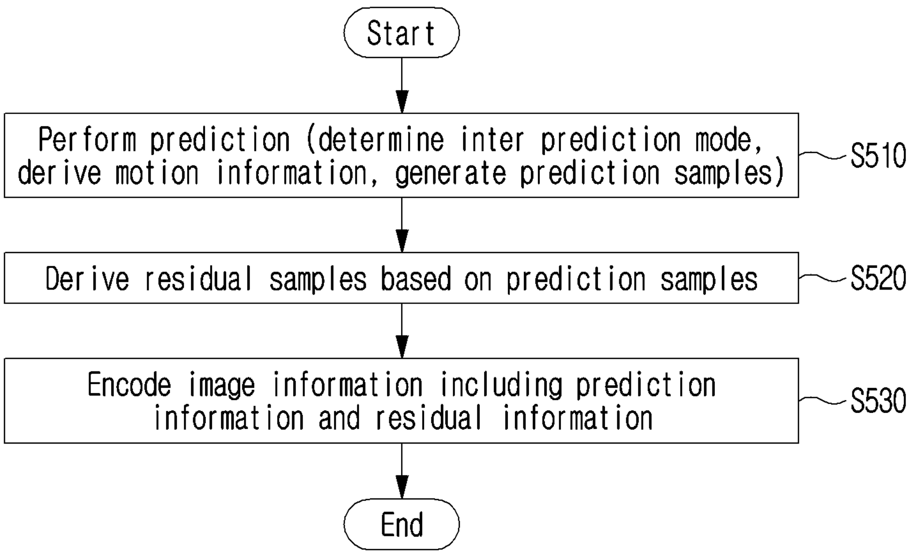
Start
Perform prediction (determine inter prediction mode, derive motion information, generate prediction samples)
S510
Derive residual samples based on prediction samples
S520
Encode image information including prediction information and residual information
S530
End

FIG. 6

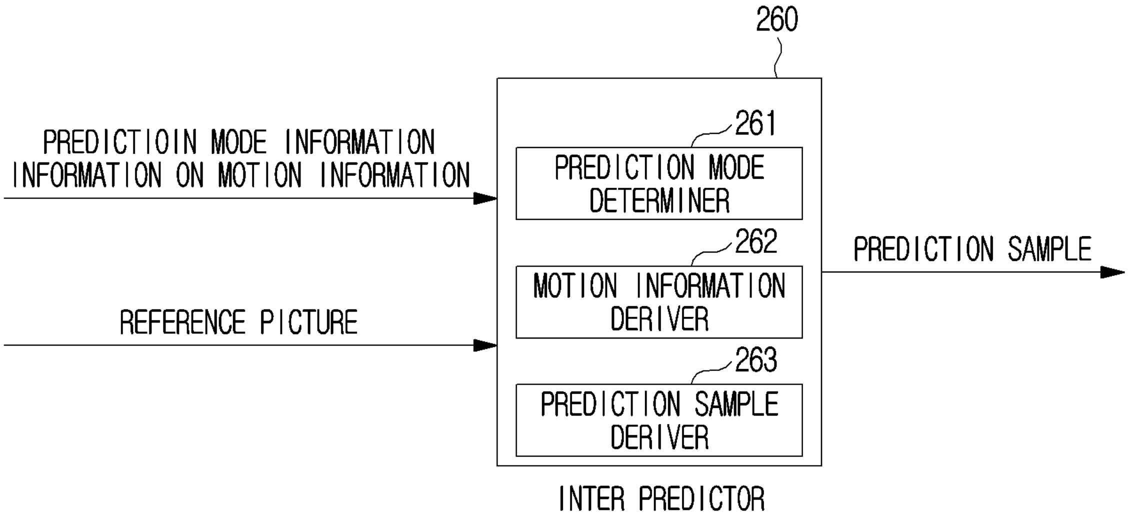
260
261
PREDICTION MODE DETERMINER
262
MOTION INFORMATION DERIVER
263
PREDICTION SAMPLE DERIVER
PREDICTIOIN MODE INFORMATION
INFORMATION ON MOTION INFORMATION
REFERENCE PICTURE
PREDICTION SAMPLE
INTER PREDICTOR

FIG. 7

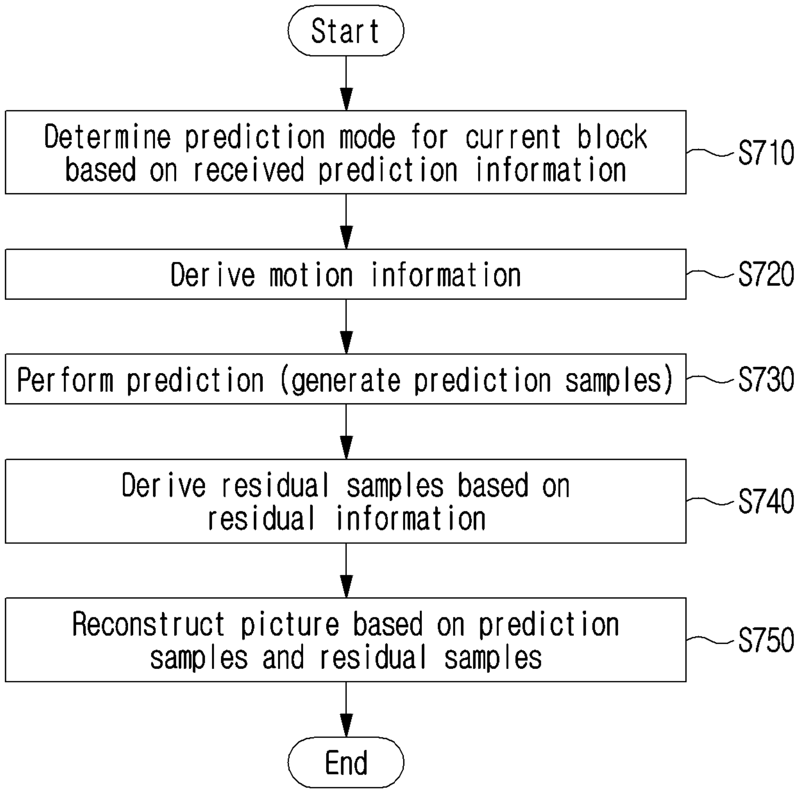
Start
Determine prediction mode for current block based on received prediction information
S710
Derive motion information
S720
Perform prediction (generate prediction samples)
S730
Derive residual samples based on residual information
S740
Reconstruct picture based on prediction samples and residual samples
S750
End

FIG. 8

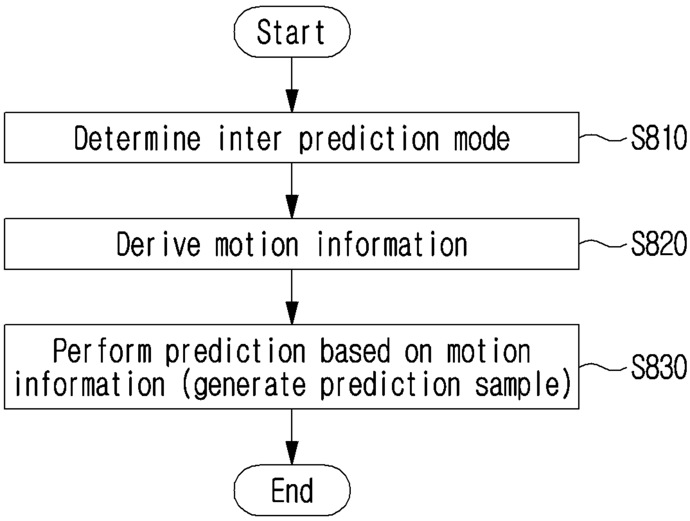
Start
Determine inter prediction mode
S810
Derive motion information
S820
Perform prediction based on motion information (generate prediction sample)
S830
End

FIG. 9

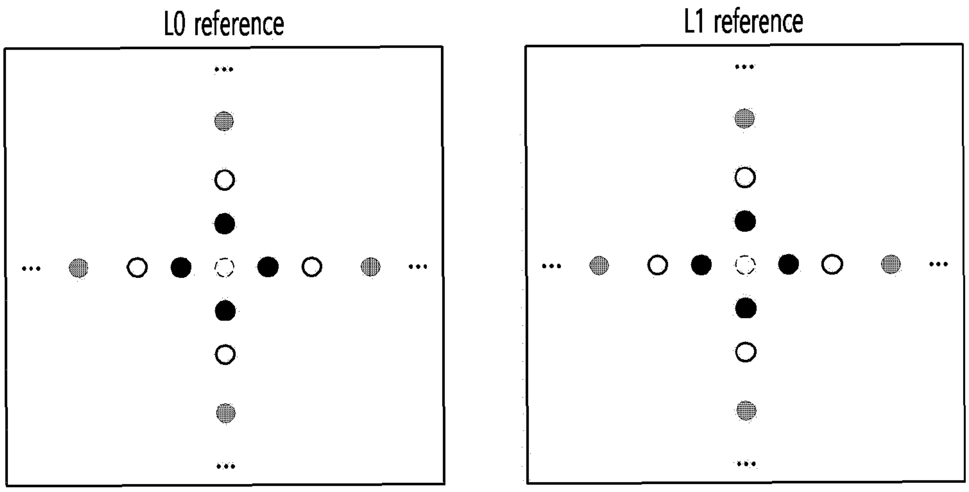

FIG. 10

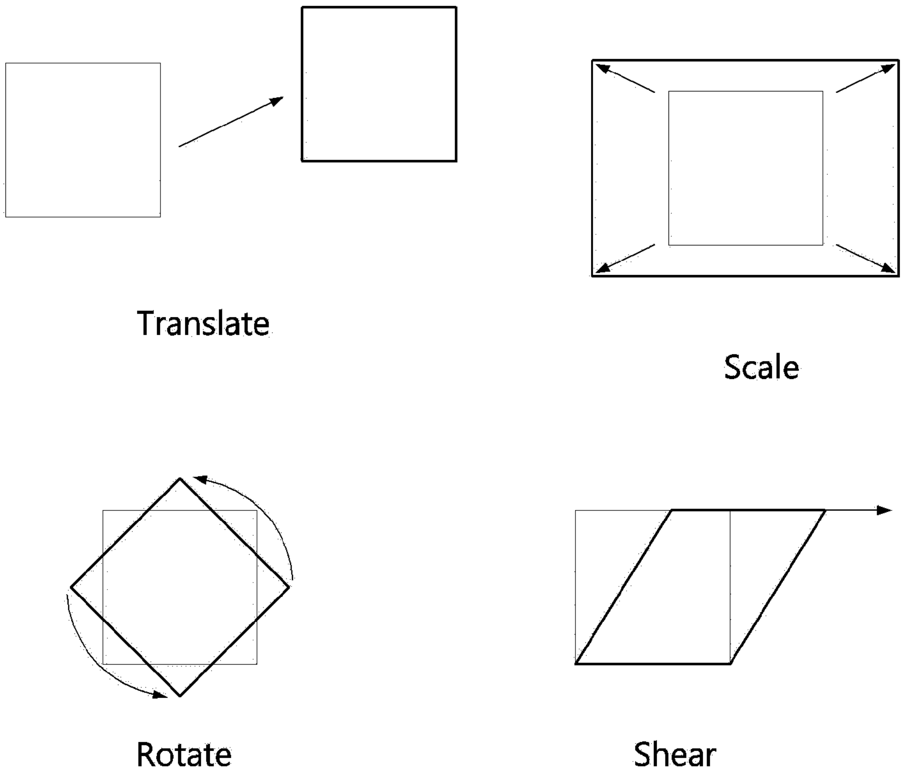

FIG. 11

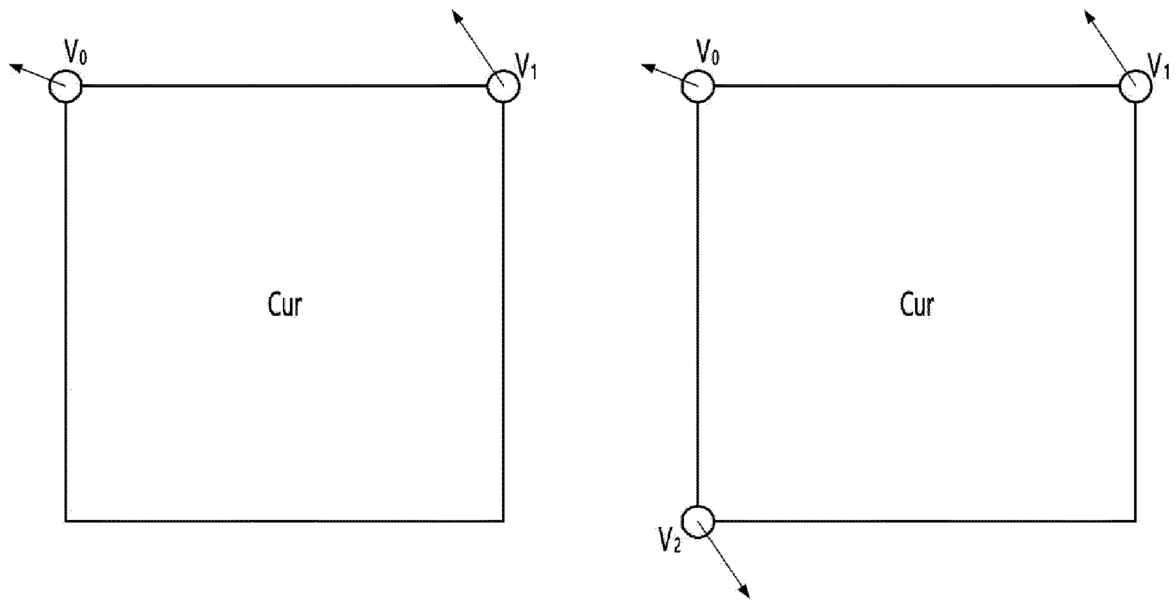

FIG. 12

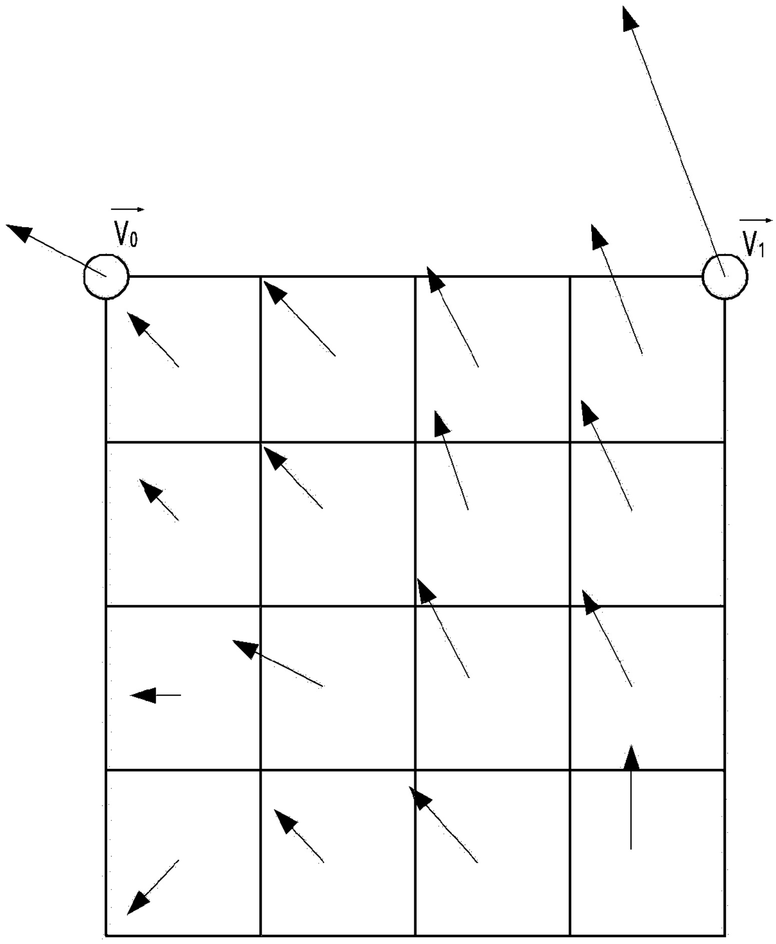

FIG. 13

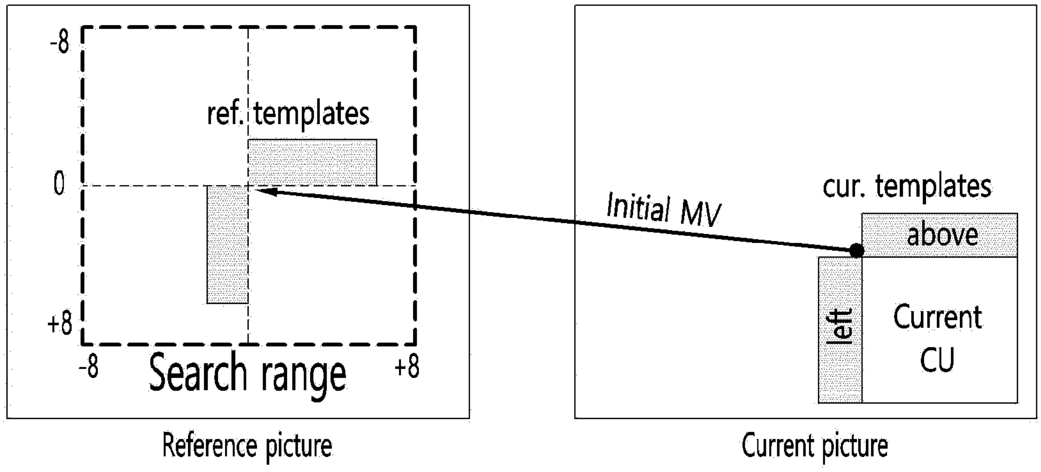
-8
ref. templates
0
+8
-8
Search range
+8
Reference picture
Initial MV
cur. templates
above
left
Current CU
Current picture

FIG. 14

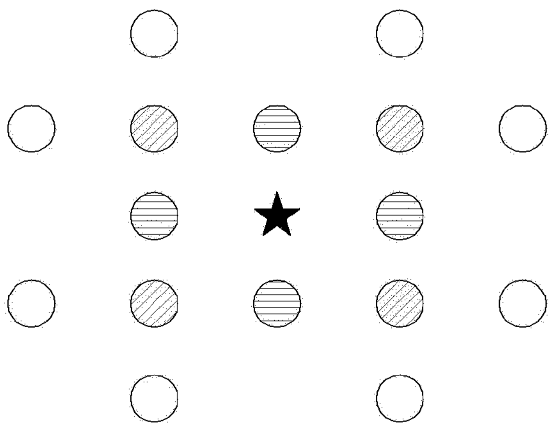

FIG. 15

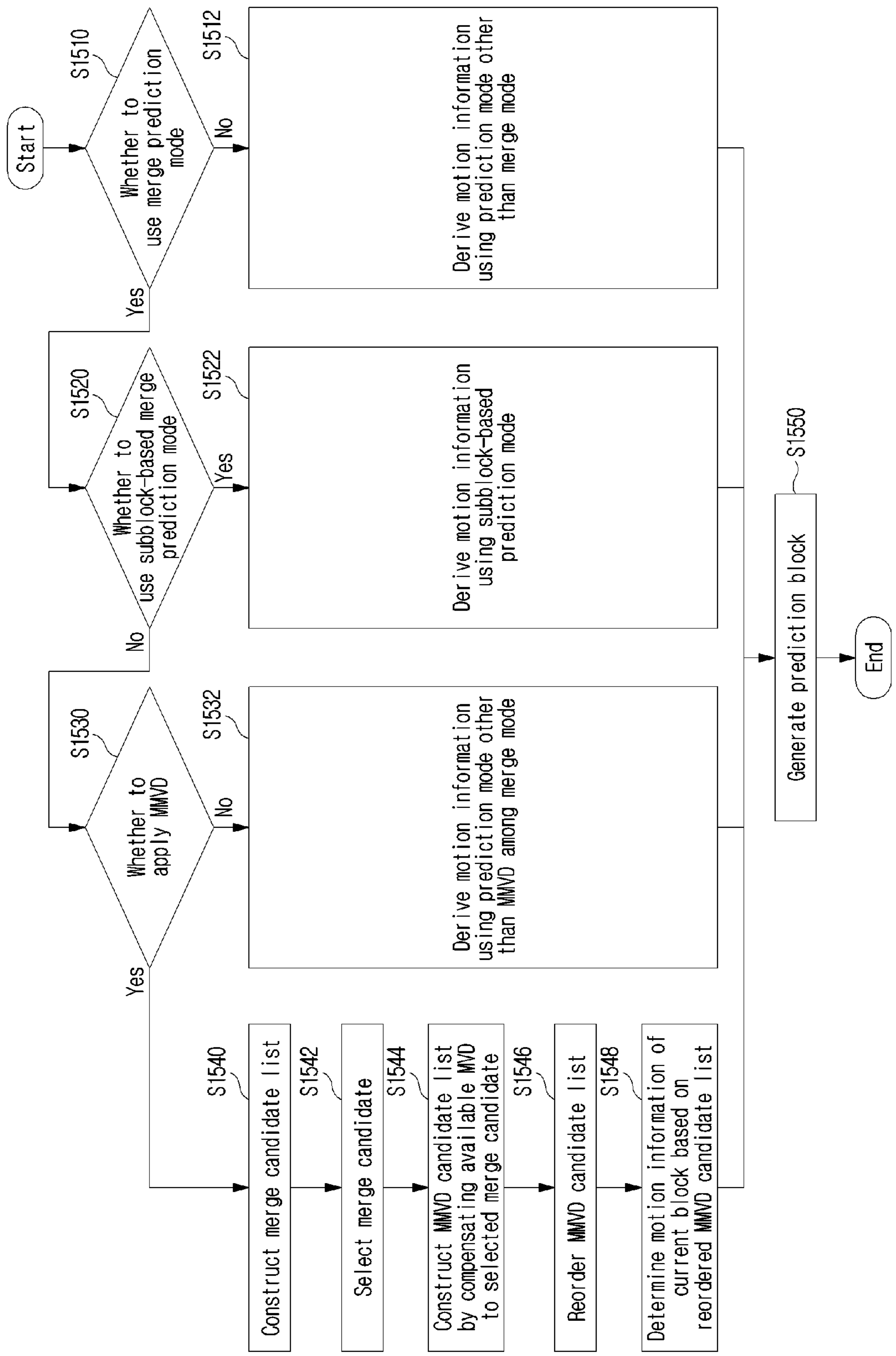
Start
Whether to use merge prediction mode
S1510
Yes
No
Derive motion information using prediction mode other than merge mode
S1512
Whether to use subblock-based merge prediction mode
S1520
Yes
No
Derive motion information using subblock-based prediction mode
S1522
Whether to apply MMVD
S1530
Yes
No
Derive motion information using prediction mode other than MMVD among merge mode
S1532
Construct merge candidate list
S1540
Select merge candidate
S1542
Construct MMVD candidate list by compensating available MVD to selected merge candidate
S1544
Reorder MMVD candidate list
S1546
Determine motion information of current block based on reordered MMVD candidate list
S1548
Generate prediction block
S1550
End

FIG. 16

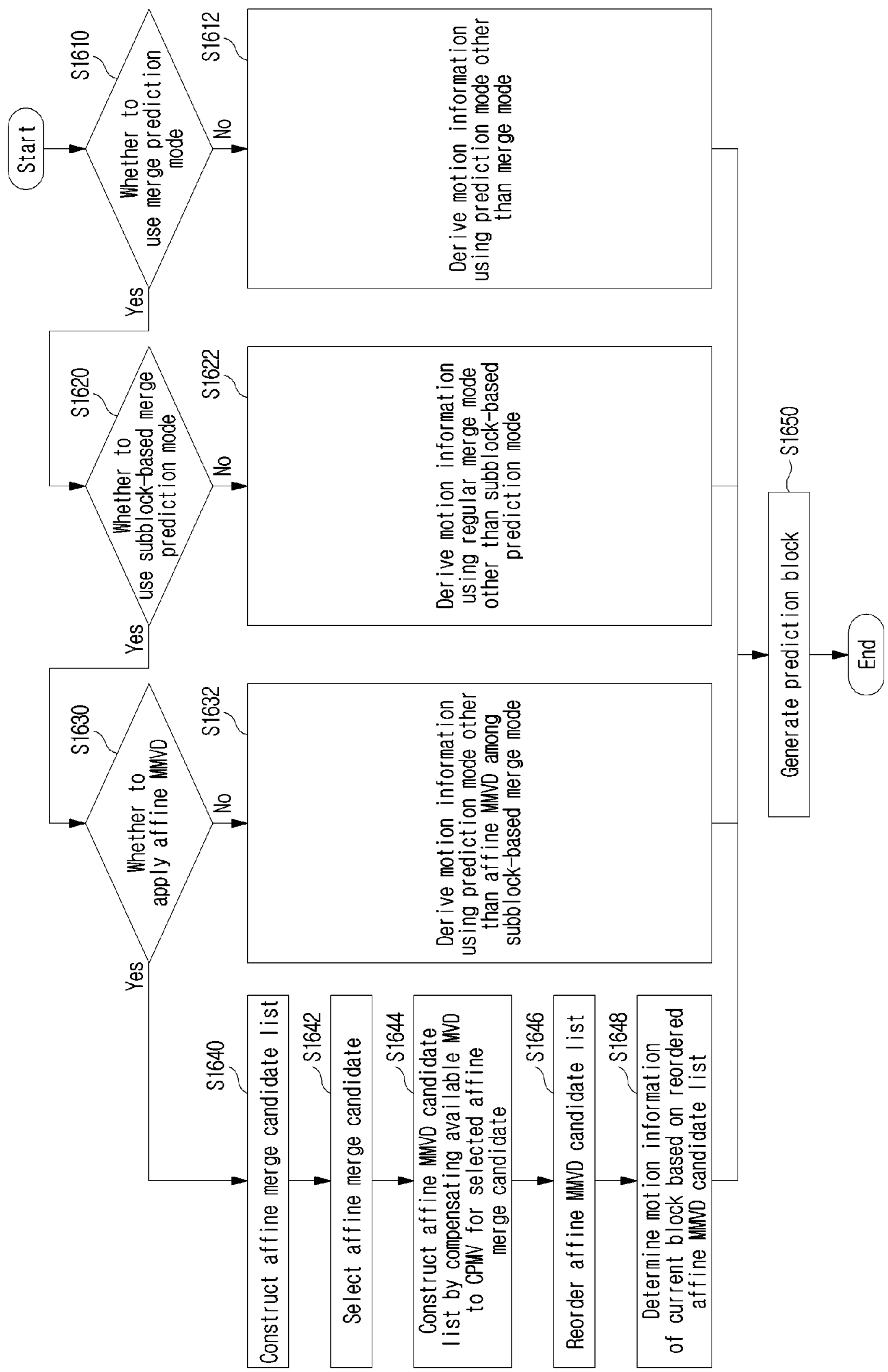

Start
Whether to use merge prediction mode
S1610
No
Yes
Derive motion information using prediction mode other than merge mode
S1612
Whether to use subblock-based merge prediction mode
S1620
No
Yes
Derive motion information using regular merge mode other than subblock-based prediction mode
S1622
Whether to apply affine MMVD
S1630
No
Yes
Derive motion information using prediction mode other than affine MMVD among subblock-based merge mode
S1632
Construct affine merge candidate list
S1640
Select affine merge candidate
S1642
Construct affine MMVD candidate list by compensating available MVD to CPMV for selected affine merge candidate
S1644
Reorder affine MMVD candidate list
S1646
Determine motion information of current block based on reordered affine MMVD candidate list
S1648
Generate prediction block
S1650
End

FIG. 17

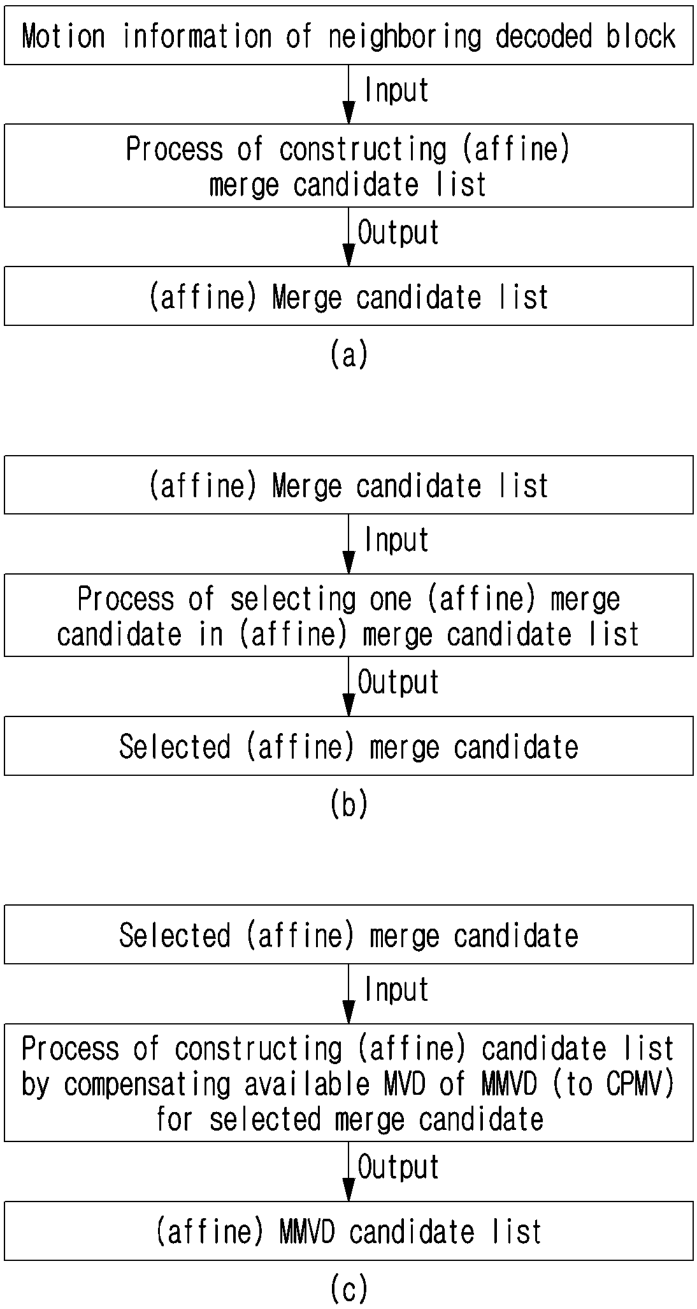
Motion information of neighboring decoded block
Input
Process of constructing (affine) merge candidate list
Output
(affine) Merge candidate list
(a)
(affine) Merge candidate list
Input
Process of selecting one (affine) merge candidate in (affine) merge candidate list
Output
Selected (affine) merge candidate
(b)
Selected (affine) merge candidate
Input
Process of constructing (affine) candidate list by compensating available MVD of MMVD (to CPMV) for selected merge candidate
Output
(affine) MMVD candidate list
(c)

FIG. 18

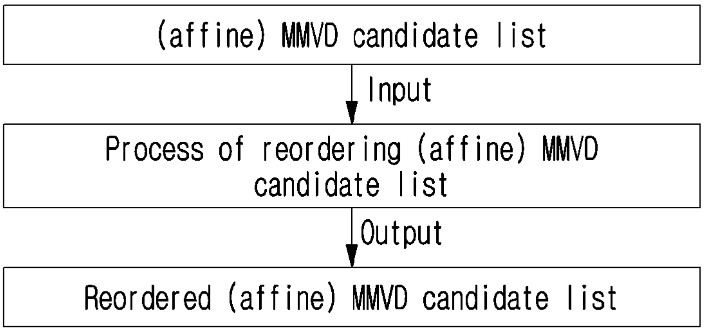
(affine) MMVD candidate list
Input
Process of reordering (affine) MMVD candidate list
Output
Reordered (affine) MMVD candidate list

(a)

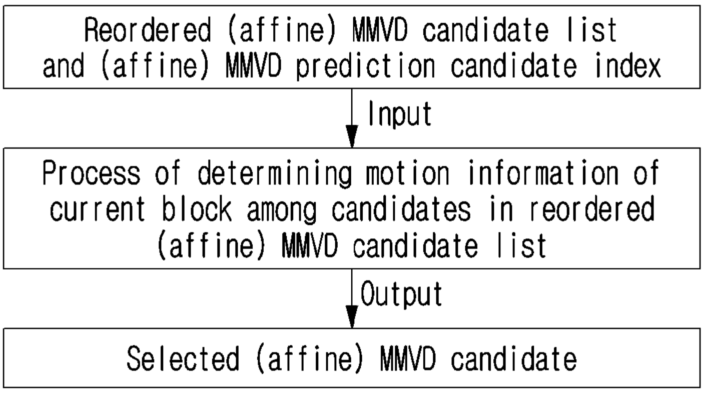
Reordered (affine) MMVD candidate list and (affine) MMVD prediction candidate index
Input
Process of determining motion information of current block among candidates in reordered (affine) MMVD candidate list
Output
Selected (affine) MMVD candidate

(b)

FIG. 19

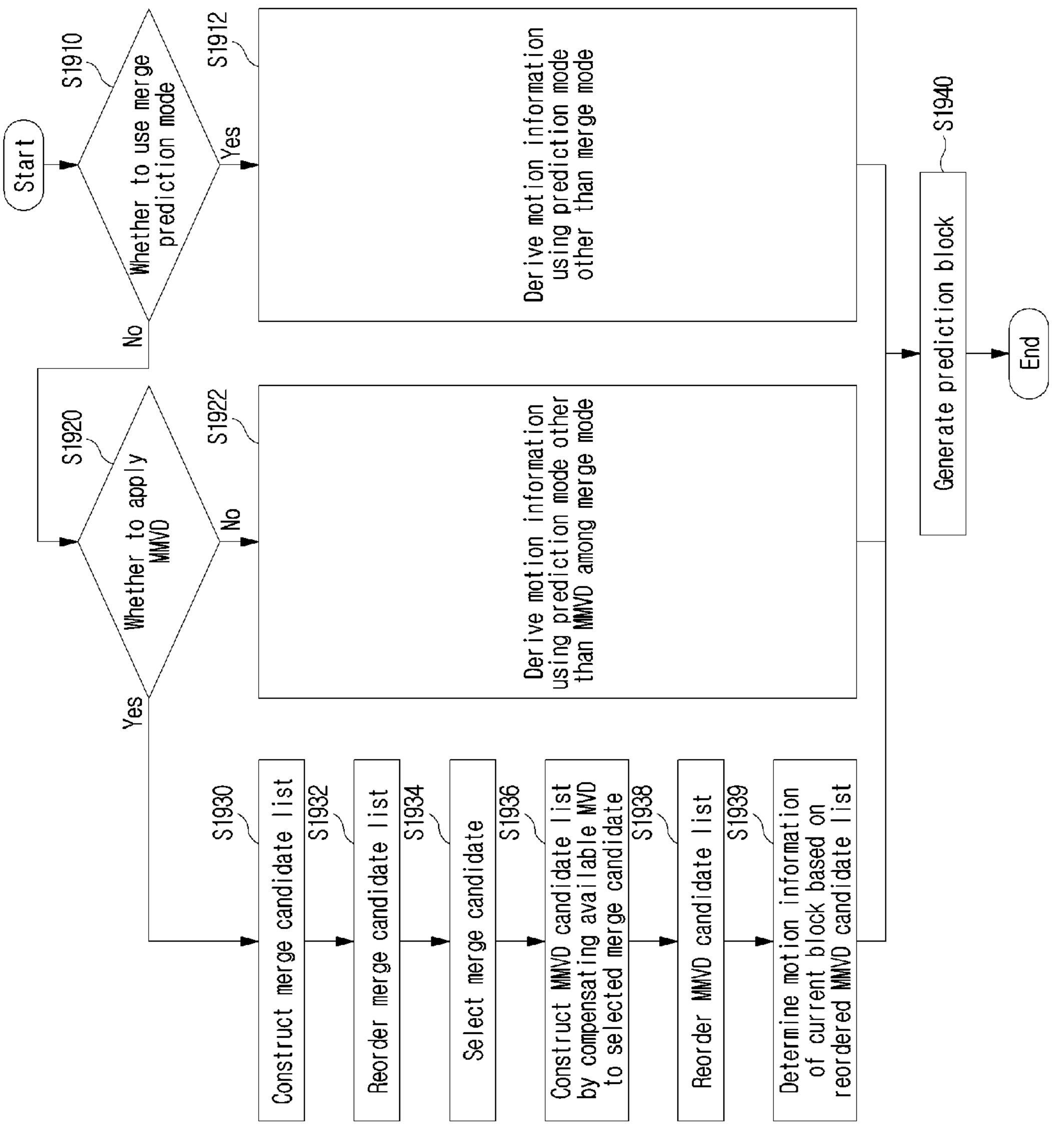
Start
Whether to use merge prediction mode
S1910
Yes
No
S1912
Derive motion information using prediction mode other than merge mode
Whether to apply MMVD
S1920
No
Yes
S1922
Derive motion information using prediction mode other than MMVD among merge mode
S1930
Construct merge candidate list
S1932
Reorder merge candidate list
S1934
Select merge candidate
S1936
Construct MMVD candidate list by compensating available MVD to selected merge candidate
S1938
Reorder MMVD candidate list
S1939
Determine motion information of current block based on reordered MMVD candidate list
S1940
Generate prediction block
End

FIG. 20

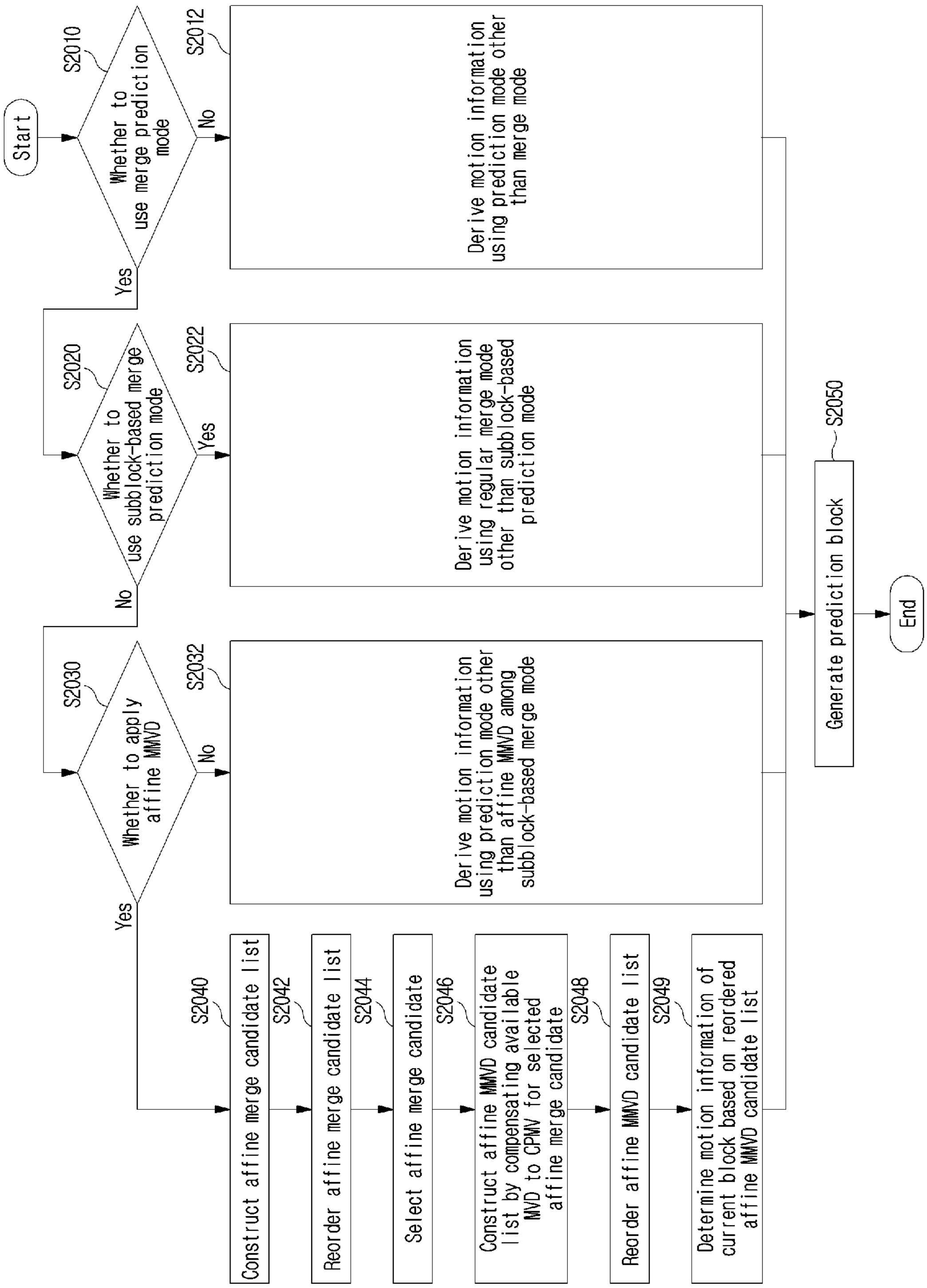
Start
Whether to use merge prediction mode
S2010
Yes
No
Derive motion information using prediction mode other than merge mode
S2012
Whether to use subblock-based merge prediction mode
S2020
Yes
No
Derive motion information using regular merge mode other than subblock-based prediction mode
S2022
Whether to apply affine MMVD
S2030
Yes
No
Derive motion information using prediction mode other than affine MMVD among subblock-based merge mode
S2032
Construct affine merge candidate list
S2040
Reorder affine merge candidate list
S2042
Select affine merge candidate
S2044
Construct affine MMVD candidate list by compensating available MVD to CPMV for selected affine merge candidate
S2046
Reorder affine MMVD candidate list
S2048
Determine motion information of current block based on reordered affine MMVD candidate list
S2049
Generate prediction block
S2050
End

FIG. 21

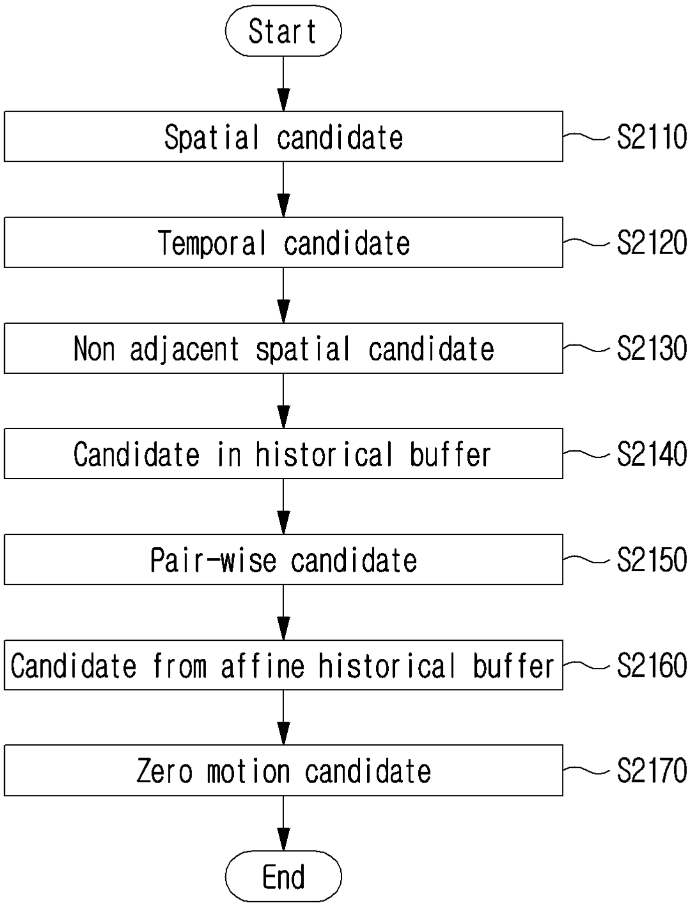
Start
Spatial candidate
S2110
Temporal candidate
S2120
Non adjacent spatial candidate
S2130
Candidate in historical buffer
S2140
Pair-wise candidate
S2150
Candidate from affine historical buffer
S2160
Zero motion candidate
S2170
End

FIG. 22

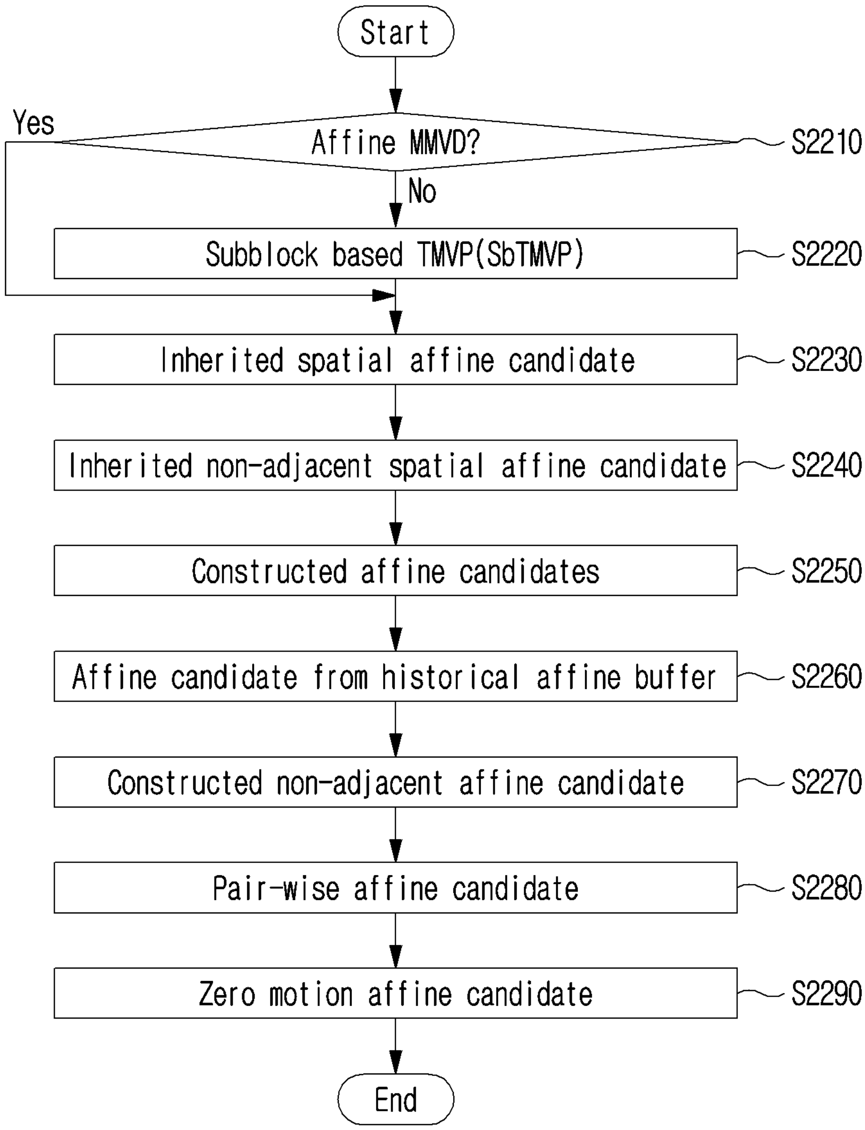
Start
Affine MMVD?
Yes
No
S2210
Subblock based TMVP(SbTMVP)
S2220
Inherited spatial affine candidate
S2230
Inherited non-adjacent spatial affine candidate
S2240
Constructed affine candidates
S2250
Affine candidate from historical affine buffer
S2260
Constructed non-adjacent affine candidate
S2270
Pair-wise affine candidate
S2280
Zero motion affine candidate
S2290
End

FIG. 23

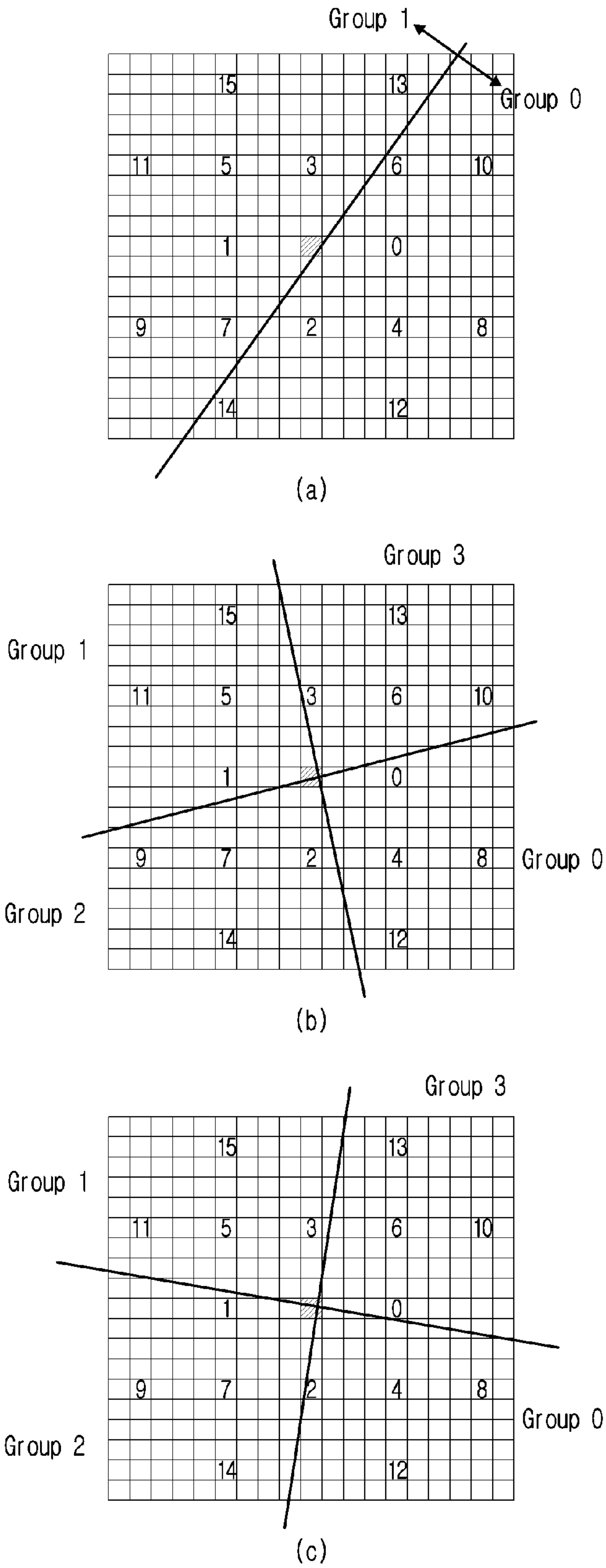
Group 1
Group 0
15
13
11
5
3
6
10
1
0
9
7
2
4
8
14
12
(a)
Group 3
Group 1
Group 0
Group 2
(b)
Group 3
Group 1
Group 0
Group 2
(c)

FIG. 24A

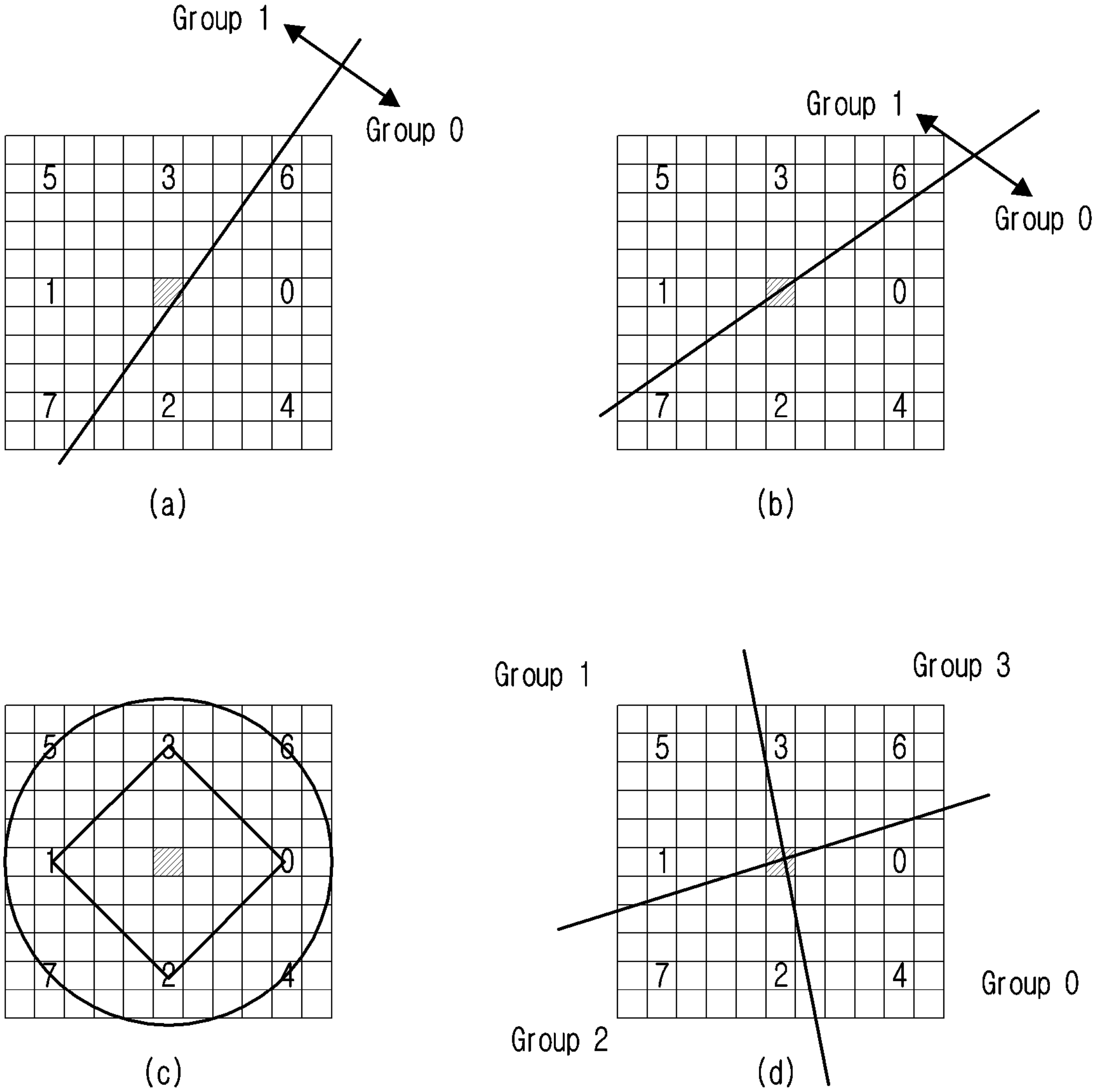
Group 1
Group 0
5
3
6
1
0
7
2
4
(a)
Group 1
Group 0
5
3
6
1
0
7
2
4
(b)
5
3
6
1
0
7
2
4
(c)
Group 1
Group 3
5
3
6
1
0
7
2
4
Group 0
Group 2
(d)

FIG. 24B

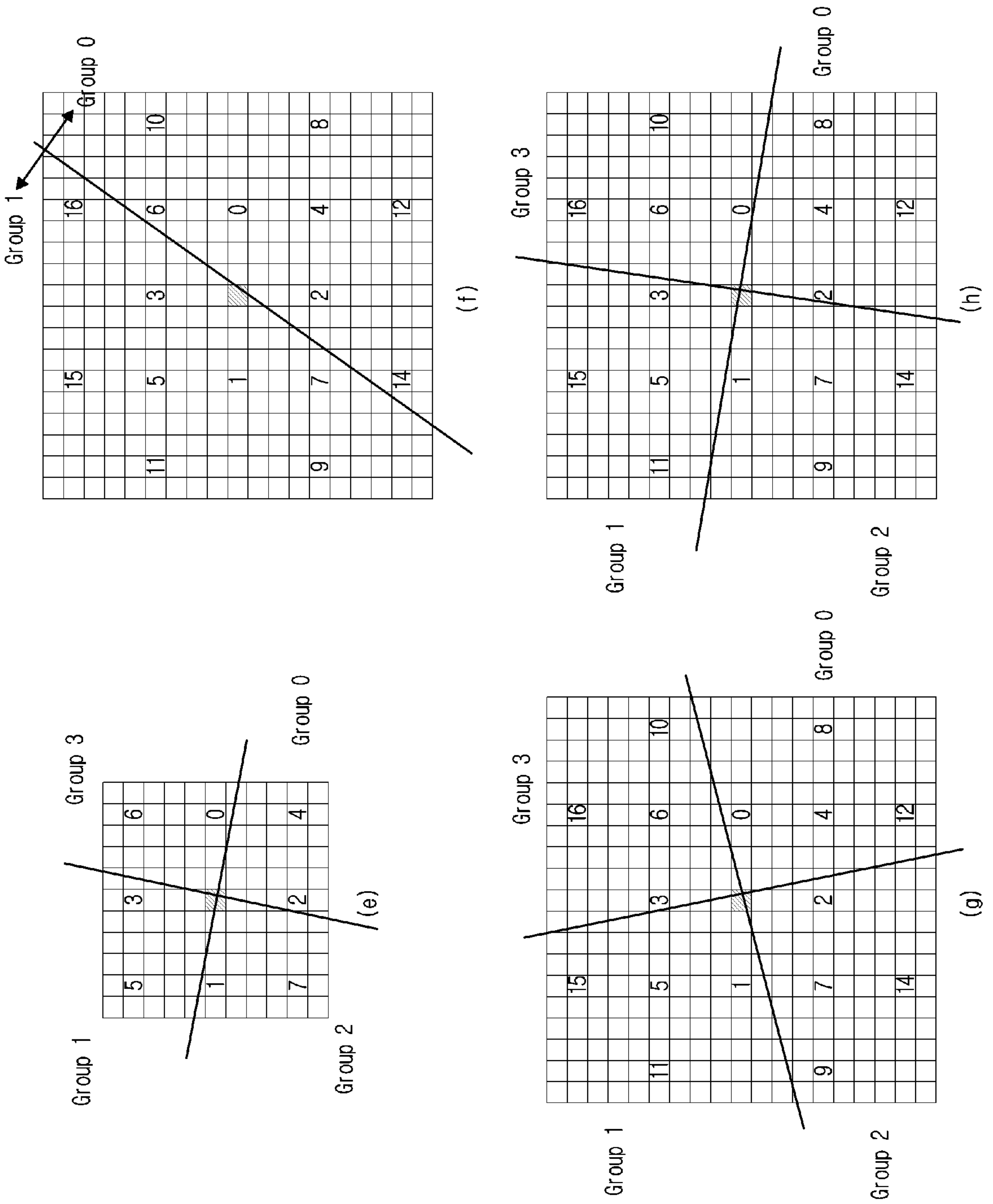

FIG. 25

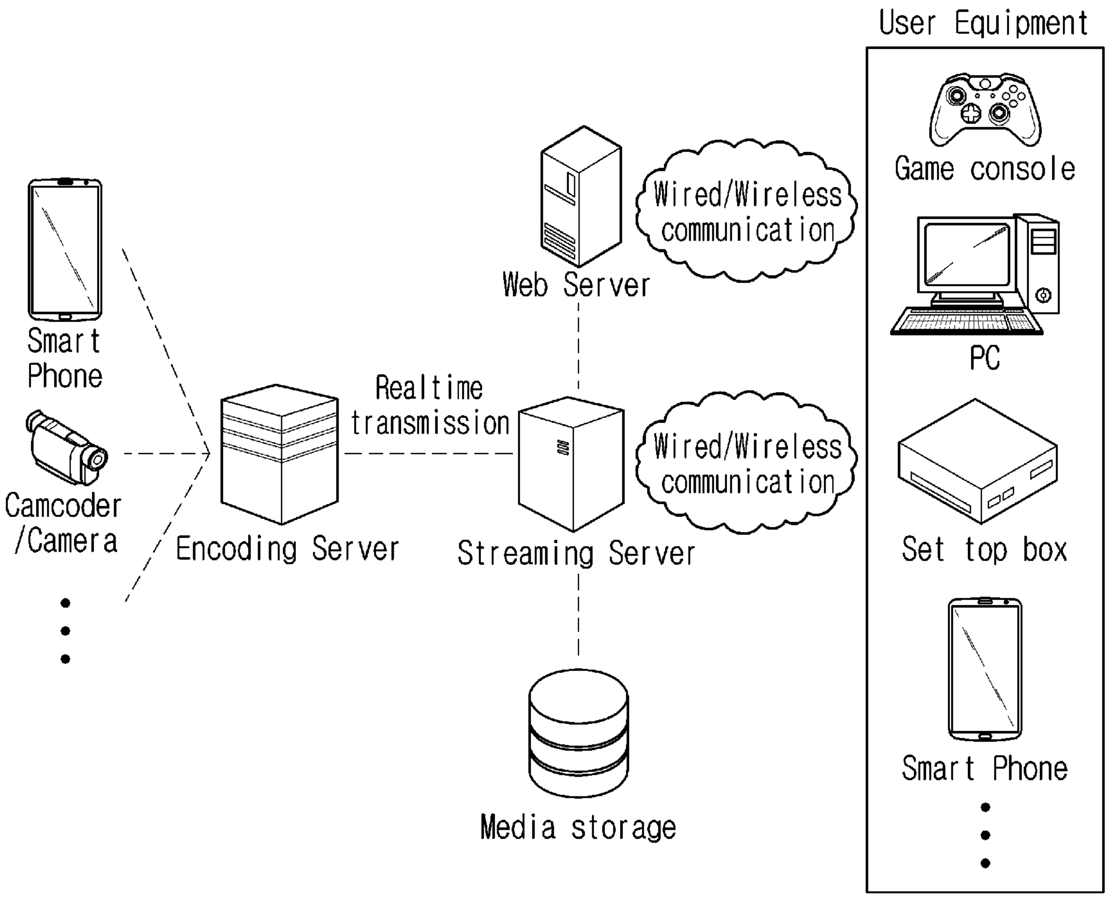
User Equipment
Game console
PC
Set top box
Smart Phone
Wired/Wireless communication
Web Server
Wired/Wireless communication
Smart Phone
Camcoder /Camera
Realtime transmission
Encoding Server
Streaming Server
Media storage

## INTERNATIONAL SEARCH REPORT

International application No.
**PCT/KR2023/014642**

### A. CLASSIFICATION OF SUBJECT MATTER

**H04N 19/527**(2014.01)i; **H04N 19/513**(2014.01)i; **H04N 19/109**(2014.01)i; **H04N 19/105**(2014.01)i; **H04N 19/176**(2014.01)i; **H04N 19/85**(2014.01)i; **H04N 19/70**(2014.01)i

According to International Patent Classification (IPC) or to both national classification and IPC

### B. FIELDS SEARCHED

Minimum documentation searched (classification system followed by classification symbols)

H04N 19/527(2014.01); H04N 19/105(2014.01); H04N 19/139(2014.01); H04N 19/159(2014.01); H04N 19/52(2014.01); H04N 19/523(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 머지 모드(merge mode), 머지 후보 리스트(merge candidate list), MMVD 후보 리스트(merge mode with motion vector difference candidate list), 재정렬(reordering), 양방향 예측(bi-direction al prediction), 템플릿 매칭 오차(template matching error)

### C. DOCUMENTS CONSIDERED TO BE RELEVANT

| Category* | Citation of document, with indication, where appropriate, of the relevant passages | Relevant to claim No. |
|---|---|---|
| Y | KR 10-2306562 B1 (LG ELECTRONICS INC.) 30 September 2021 (2021-09-30)<br>See paragraphs [0011], [0069], [0183]-[0187], [0229], [0237]-[0239] and [0248]; and claim 1. | 1-15 |
| Y | KR 10-2021-0046750 A (FG INNOVATION COMPANY LIMITED) 28 April 2021 (2021-04-28)<br>See paragraphs [0044] and [0099]; and claim 1. | 1-15 |
| A | KR 10-2022-0036942 A (WILUS INSTITUTE OF STANDARDS AND TECHNOLOGY INC. et al.) 23 March 2022 (2022-03-23)<br>See paragraphs [0021] and [0025]. | 1-15 |
| A | KR 10-2021-0106427 A (BEIJING BYTEDANCE NETWORK TECHNOLOGY CO., LTD. et al.) 30 August 2021 (2021-08-30)<br>See paragraphs [0477]-[0478]. | 1-15 |

☑ Further documents are listed in the continuation of Box C. ☑ See patent family annex.

* Special categories of cited documents:
“A” document defining the general state of the art which is not considered to be of particular relevance
“D” document cited by the applicant in the international application
“E” earlier application or patent but published on or after the international filing date
“L” document which may throw doubts on priority claim(s) or which is cited to establish the publication date of another citation or other special reason (as specified)
“O” document referring to an oral disclosure, use, exhibition or other means
“P” document published prior to the international filing date but later than the priority date claimed
“T” later document published after the international filing date or priority date and not in conflict with the application but cited to understand the principle or theory underlying the invention
“X” document of particular relevance; the claimed invention cannot be considered novel or cannot be considered to involve an inventive step when the document is taken alone
“Y” document of particular relevance; the claimed invention cannot be considered to involve an inventive step when the document is combined with one or more other such documents, such combination being obvious to a person skilled in the art
“&” document member of the same patent family

| Date of the actual completion of the international search | Date of mailing of the international search report |
|---|---|
| **27 December 2023** | **27 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2023/014642

C. DOCUMENTS CONSIDERED TO BE RELEVANT

| Category* | Citation of document, with indication, where appropriate, of the relevant passages | Relevant to claim No. |
|---|---|---|
| A | US 2022-0078477 A1 (ELECTRONICS AND TELECOMMUNICATIONS RESEARCH INSTITUTE) 10 March 2022 (2022-03-10) See paragraphs [0020]-[0021]. | 1-15 |

Form PCT/ISA/210 (second sheet) (July 2022)

**INTERNATIONAL SEARCH REPORT**
**Information on patent family members**

International application No.
**PCT/KR2023/014642**

| Patent document cited in search report | Publication date (day/month/year) | Patent family member(s) | Publication date (day/month/year) |
|---|---|---|---|
| KR 10-2306562 B1 | 30 September 2021 | KR 10-2020-0064153 A | 05 June 2020 |
| | | US 11070797 B2 | 20 July 2021 |
| | | US 2021-0037238 A1 | 04 February 2021 |
| | | WO 2019-103564 A1 | 31 May 2019 |
| KR 10-2021-0046750 A | 28 April 2021 | CN 116781925 A | 19 September 2023 |
| | | EP 3844950 A1 | 07 July 2021 |
| | | EP 3844950 A4 | 25 May 2022 |
| | | JP 7290713 B2 | 13 June 2023 |
| | | KR 10-2023-0146108 A | 18 October 2023 |
| | | US 11272197 B2 | 08 March 2022 |
| | | US 2020-0077106 A1 | 05 March 2020 |
| | | WO 2020-043061 A1 | 05 March 2020 |
| KR 10-2022-0036942 A | 23 March 2022 | CN 114208205 A | 18 March 2022 |
| | | EP 4007282 A1 | 01 June 2022 |
| | | EP 4007282 A4 | 31 August 2022 |
| | | JP 2022-543207 A | 11 October 2022 |
| | | US 2022-0279162 A1 | 01 September 2022 |
| | | WO 2021-015586 A1 | 28 January 2021 |
| KR 10-2021-0106427 A | 30 August 2021 | CN 113196773 A | 30 July 2021 |
| | | EP 3868107 A1 | 25 August 2021 |
| | | EP 3868107 A4 | 15 December 2021 |
| | | JP 2023-026612 A | 24 February 2023 |
| | | JP 7209092 B2 | 19 January 2023 |
| | | US 11310508 B2 | 19 April 2022 |
| | | US 2021-0203945 A1 | 01 July 2021 |
| | | WO 2020-125751 A1 | 25 June 2020 |
| US 2022-0078477 A1 | 10 March 2022 | JP 2023-026683 A | 24 February 2023 |
| | | JP 7210687 B2 | 23 January 2023 |
| | | KR 10-2023-0143590 A | 12 October 2023 |
| | | US 11743486 B2 | 29 August 2023 |
| | | US 2023-0353774 A1 | 02 November 2023 |

Form PCT/ISA/210 (patent family annex) (July 2022)